(19) Europäisches Patentamt / European Patent Office / Office européen des brevets

(11) **EP 3 706 067 A1**

(12) **EUROPEAN PATENT APPLICATION**
published in accordance with Art. 153(4) EPC

(43) Date of publication:
**09.09.2020 Bulletin 2020/37**

(51) Int Cl.:
*G06Q 50/16* (2012.01)          *G06Q 10/06* (2012.01)

(21) Application number: **17930464.7**

(22) Date of filing: **02.11.2017**

(86) International application number:
**PCT/JP2017/039830**

(87) International publication number:
**WO 2019/087373 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fujitsu Limited**
**Kawasaki-shi, Kanagawa 211-8588 (JP)**

(72) Inventors:
• **NAGANO, Tomoko**
  **Kawasaki-shi**
  **Kanagawa 211-8588 (JP)**

• **OZAKI, Mitsuo**
  **Kawasaki-shi**
  **Kanagawa 211-8588 (JP)**
• **KOMORIYA, Hitoshi**
  **Kawasaki-shi**
  **Kanagawa 211-8588 (JP)**

(74) Representative: **Haseltine Lake Kempner LLP**
**Lincoln House, 5th Floor**
**300 High Holborn**
**London WC1V 7JH (GB)**

(54) **ANIMAL HABITAT VALUE ASSESSMENT SYSTEM, ANIMAL HABITAT VALUE ASSESSMENT METHOD, AND ANIMAL HABITAT VALUE ASSESSMENT PROGRAM**

(57)    An animal habitat value evaluation system that is capable of evaluating a value of an animal habitat is provided. An animal habitat value evaluation system (1) includes a terminal device (10) and an information processing device (100). The terminal device receives an input of an evaluation target region and transmits the input evaluation target region to the information processing device and displays information regarding a display screen received from the information processing device. The information processing device includes a reception unit (131), a first calculation unit (133), a generation unit (135), and a communication control unit (136). The reception unit receives and accepts the evaluation target region from the terminal device. The first calculation unit refers to a habitat information database (122) that stores animal habitat information in each region. In a case where it is determined that the animal inhabits in the received evaluation target region, the first calculation unit calculates an animal-derived value. The generation unit generates a display screen that displays the calculated animal-derived value and the evaluation target region in association with each other. The communication control unit transmits information regarding the generated display screen to the terminal device.

FIG. 1

**Description**

TECHNICAL FIELD

The present invention relates to an animal habitat value evaluation system, an animal habitat value evaluation method, and an animal habitat value evaluation program.

BACKGROUND ART

In recent years, in sightseeing including experience learning on natural environment and historical culture called ecotourism, it is requested to appropriately evaluate natural environment that has been traditionally excessively used as free or inexpensive sources. As a method for evaluating the natural environment, for example, it is proposed to regard the natural environment as natural capitals. According to the Environmental White Paper, the natural capitals are forests, soil, water, air, biological resources, or the like that are formed by nature, and it is possible to understand a flow generated from the natural capitals as an ecosystem service. However, it is difficult to specify an index and quantify the values of the ecosystem service and the underlying biodiversity, and various evaluation methods are proposed.

For example, when rehabilitating and cultivating forests, it is proposed to calculate a commercial value including a tourism value of forests and the like, an evaluation value of cost to cultivating and maintaining the forests, and an evaluation value regarding disaster prevention, environment protection, or the like and evaluate a value of the forests on the basis of these evaluation values. Furthermore, for example, it is proposed to obtain the value of the natural capitals on the basis of how much money people are willing to pay for protecting the natural capitals including a fauna and a flora in an evaluation target area and land use map data.

CITATION LIST

PATENT DOCUMENT

Patent Document 1: Japanese Laid-open Patent Publication No. 2015-121880
Patent Document 2: Japanese Laid-open Patent Publication No. 2015-146112

SUMMARY OF INVENTION

TECHNICAL PROBLEM

However, in comparison with a flora in which evaluation is made by quantifying, for example, an area of forests and the like by remote sensing or the like, in a fauna, habitat surveys are made for each specific animal species such as endangered species, rare species, foreign species, or the like. Therefore, the fauna is only evaluated in a point such as habitat conservation, and it is difficult to evaluate a value of an animal itself and a value regarding a relationship between an animal and a plant, that is, a value of an animal habitat.

One aspect is to provide an animal habitat value evaluation system, an animal habitat value evaluation method, and an animal habitat value evaluation program that can evaluate a value of an animal habitat.

SOLUTION TO PROBLEM

In one aspect, an animal habitat value evaluation system includes a terminal device and an information processing device. The terminal device includes a control unit that receives an input of an evaluation target region, transmits the input to the information processing device, and displays information regarding a display screen received from the information processing device. The information processing device includes a reception unit, a first calculation unit, a generation unit, and a communication control unit. The reception unit receives and accepts the evaluation target region from the terminal device. The first calculation unit refers to a habitat information database that stores habitat information of animals in each region. In a case where it is determined that the animal inhabits in the received evaluation target region, the first calculation unit calculates the animal-derived value. The generation unit generates a display screen that displays the calculated animal-derived value and the evaluation target region in association with each other. The communication control unit transmits information regarding the generated display screen to the terminal device.

## EP 3 706 067 A1

ADVANTAGEOUS EFFECTS OF INVENTION

It is possible to evaluate a value of an animal habitat.

BRIEF DESCRIPTION OF DRAWINGS

FIG. 1 is a block diagram illustrating an exemplary configuration of an animal habitat value evaluation system according to an embodiment.
FIGs. 2A and 2B are a diagram illustrating an example of classification of an ecosystem service and an evaluation method.
FIGs. 3A and 3B are a diagram illustrating an example of association between land use classification and classification of vegetation in a vegetation map database.
FIGs. 4A and 4B are a diagram illustrating an example of association between a legend of vegetation and the classification of the vegetation in the vegetation map database.
FIG. 5 is a diagram illustrating an example of classification of vegetation naturalness.
FIG. 6 is a diagram illustrating an example of a habitat information database.
FIGs. 7A and 7B are a diagram illustrating an example of a rare species database at a regional level.
FIGs. 8A and 8B are a diagram illustrating an example of the rare species database at the regional level.
FIG. 9 is a diagram illustrating another example of the rare species database at the regional level.
FIG. 10 is a diagram illustrating an example of the number of species at a country level in the rare species database.
FIG. 11 is a diagram illustrating an example of the number of species at the regional level in the rare species database.
FIGs. 12A and 12B are a diagram illustrating an example of a list at the regional level in the rare species database.
FIG. 13 is a diagram illustrating an example of a ranking relationship of a certain animal species in the world, a country, and each region.
FIGs. 14A and 14B are a diagram illustrating another example of the list at the regional level in the rare species database.
FIG. 15 is a diagram illustrating an example of habitat density in an animal value database.
FIG. 16 is a diagram illustrating an example of an eating energy amount of mammals in the animal value database.
FIG. 17 is a diagram illustrating an example of an eating amount of birds in the animal value database.
FIG. 18 is a diagram illustrating an example of an original unit of breeding cost in the animal value database.
FIG. 19 is a diagram illustrating an example of the breeding cost in the animal value database.
FIG. 20 is a diagram illustrating an example of management cost in the animal value database.
FIG. 21 is a diagram illustrating an example of an amount of consumption of a day tripper in a cultural value database.
FIG. 22 is a diagram illustrating an example of a parameter in the cultural value database.
FIG. 23 is a diagram illustrating an example of the parameter in the cultural value database.
FIG. 24 is a diagram illustrating an example of the parameter in the cultural value database.
FIG. 25 is a diagram illustrating an example of a value of tourism in the cultural value database.
FIG. 26 is a diagram illustrating an example of a land use type.
FIG. 27 is a diagram illustrating an example of the land use type.
FIG. 28 is a diagram illustrating an example of a calculation result of a plant-derived ecosystem service.
FIG. 29 is a diagram illustrating an example of a calculation formula of values of an animal and a plant.
FIGs. 30A and 30B are a diagram illustrating an example of an image in a unit area of the ecosystem service.
FIG. 31 is a diagram illustrating an example of a display screen.
FIG. 32 is a diagram illustrating an example of a display screen in a case where a land price is displayed.
FIG. 33 is a diagram illustrating another example of the display screen.
FIG. 34 is a diagram illustrating still another example of the display screen.
FIGs. 35A and 35B are a diagram illustrating yet another example of the display screen.
FIG. 36 is a diagram illustrating still yet another example of the display screen.
FIG. 37 is a flowchart illustrating an example of evaluation processing according to the embodiment.
FIG. 38 is a diagram illustrating an example of evaluation in an urban area.
FIG. 39 is a diagram illustrating an example of the evaluation in the urban area.
FIG. 40 is a diagram illustrating an example of evaluation in a rural area.
FIG. 41 is a diagram illustrating an example of the evaluation in the rural area.
FIG. 42 is a diagram illustrating an example of the evaluation in the rural area.
FIGs. 43A and 43B are a diagram illustrating an example of calculation of a value of tourism.
FIG. 44 is a diagram illustrating an example of calculation of a value of a festival.

FIG. 45 is a diagram illustrating an example of calculation of values of educational and scientific opportunities.
FIG. 46 is a diagram illustrating an example of a computer that executes an animal habitat value evaluation program.

DESCRIPTION OF EMBODIMENTS

Hereinafter, embodiments of an animal habitat value evaluation system, an animal habitat value evaluation method, and an animal habitat value evaluation program disclosed in the present application will be described in detail with reference to the drawings. Note that the present embodiment does not limit the disclosed technology. Furthermore, the following embodiments may be appropriately combined in a range where no inconsistency occurs.

[Embodiment]

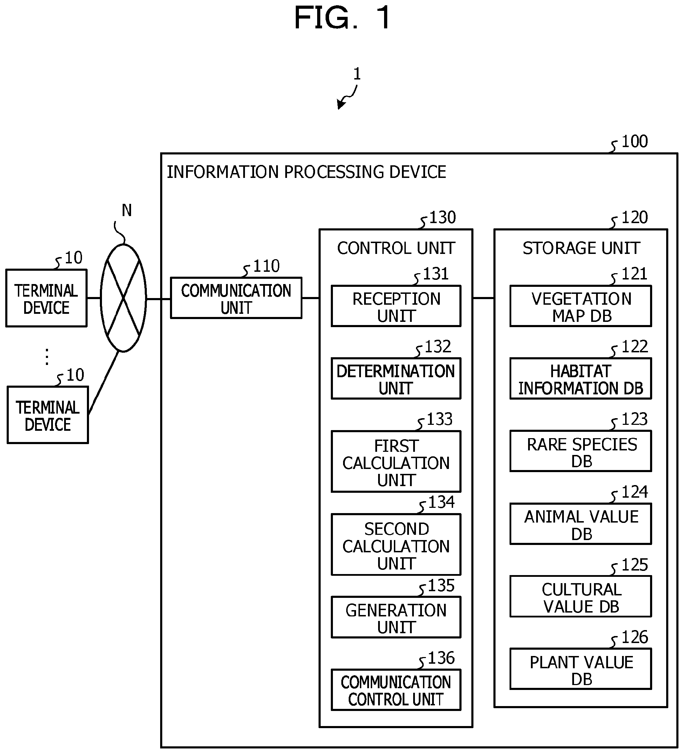

FIG. 1 is a block diagram illustrating an exemplary configuration of an animal habitat value evaluation system according to an embodiment. An animal habitat value evaluation system 1 illustrated in FIG. 1 includes a terminal device 10 and an information processing device 100. Note that the number of terminal devices 10 is not limited, and any number of terminal devices 10 may be included in the animal habitat value evaluation system 1. The terminal device 10 and the information processing device 100 are communicably connected to each other via a network N. Any type of communication network such as a local area network (LAN) and a virtual private network (VPN) as well as the Internet can be adopted for the network N regardless of whether the network is wired or wireless.

The animal habitat value evaluation system 1 is an example of a system that calculates a value of a region of which a value of a habitat of an animal input from the terminal device 10 operated by a user, that is, an evaluation target region by the information processing device 100 and presents the calculated value to the user.

The terminal device 10 is an information processing device used by the user who desires to obtain a value of a certain region as an animal habitat. As the terminal device 10, for example, a portable or stationary personal computer or the like can be used. Furthermore, as the terminal device 10, a mobile communication terminal or the like such as a tablet terminal, a smartphone, or the like may be used. The terminal device 10 is connected to the information processing device 100 via the network N and instructs the information processing device 100 to execute various processing and displays results of the various processing by the information processing device 100. For example, the terminal device 10 receives an input of an evaluation target region of which the value as the animal habitat is desired to be obtained and transmits the input information to the information processing device 100 as evaluation target region information. Furthermore, for example, the terminal device 10 displays a display screen on which an animal-derived value, a plant-derived value, and the evaluation target region are displayed in association with each other on the basis of the information regarding the display screen received from the information processing device 100. Note that, in FIG. 1, the terminal device 10 is illustrated as being separated from the information processing device 100. However, the present invention is not limited to this. The terminal device 10 may be included in the information processing device 100.

The information processing device 100 receives the evaluation target region information from the terminal device 10 and receives an evaluation target region. The information processing device 100 refers to a habitat information database that stores habitat information of an animal in each region. In a case where it is determined that the animal inhabits in the received evaluation target region, the information processing device 100 calculates an animal-derived value. The information processing device 100 generates a display screen that displays the calculated animal-derived value and the evaluation target region in association with each other. The information processing device 100 transmits information regarding the generated display screen to the terminal device 10. With this operation, the information processing device 100 can evaluate a value of an animal habitat.

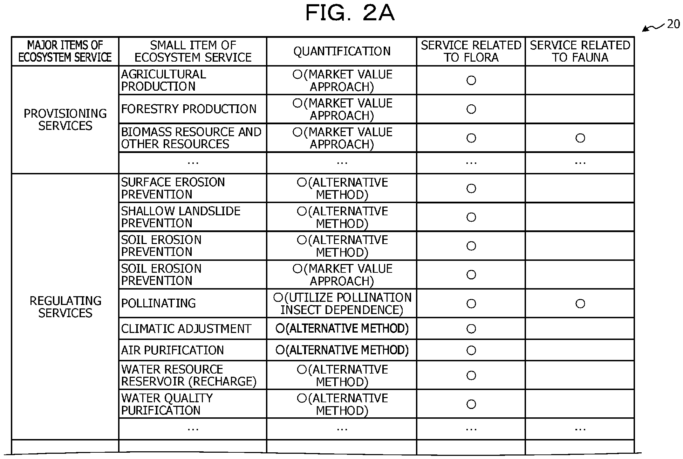

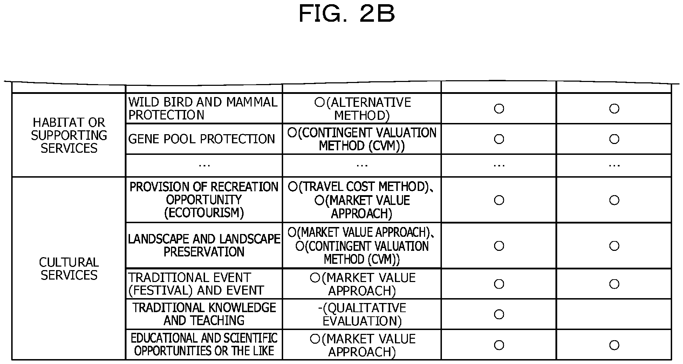

Here, classification of an ecosystem service and an evaluation method will be described with reference to FIGs. 2A and 2B. FIGs. 2A and 2B are a diagram illustrating an example of the classification of the ecosystem service and an evaluation method. Table 20 regarding the ecosystem service illustrated in FIGs. 2A and 2B illustrates a service based on the classification of The Economics of Ecosystem and Biodiversity (TEEB) related to the Convention on Biological Diversity. FIGs. 2A and 2B illustrate each item of availability of quantification and indication whether the service is a service related to a flora and a service related to a fauna regarding each item of the ecosystem service.

"Major items of the ecosystem service" in FIGs. 2A and 2B correspond to the classification of the ecosystem service by TEEB and includes each item of provisioning services, regulating services, Habitat or supporting services, and cultural services. "Small items of ecosystem service" indicate a small item obtained by further classifying each service. The "quantification" indicates whether or not the quantification can be performed. A mark "o" indicates that the quantification is possible, and a mark "-" indicates that the quantification is not possible or it is difficult to perform the quantification. Furthermore, "quantification" indicates an example of an evaluation method. A "service related to a flora" indicates whether or not the service is related to a flora, a mark "o" indicates that the service is related to the flora, and a blank indicates that the service is not related to the flora. A "service related to a fauna" indicates whether or not the service is related to a fauna, a mark "o" indicates that the service is related to the fauna, and a blank indicates that it cannot be said that the service is directly related to the fauna.

For example, according to Biodiversity Center of Japan of Environment Agency (http://www.biodic.go.jp/), the evaluation method of the quantification includes a market value approach, a revealed preference approach, and a stated preference approach that are evaluation methods in a case where the market value does not exist. The market value approach is a method for evaluating an economic value of a use value of an ecosystem that has a direct use value, that is, the use value to be traded in the market by using the market value. The revealed preference approach is a method for indirectly estimating an environment value by observing an effect of the environment on a consumption behavior, and a target is a use value. The revealed preference approach includes, for example, an alternative method, a travel cost method, and the Hedonic method. The alternative method is a method for evaluating an environment value by using cost when a function of natural environment is replaced with another product or facility. The travel cost method is a method for evaluating a visit value on the basis of travel cost to a destination. The Hedonic method is an evaluation method based on an idea that a price of a product is described by an attribute configuring the product (component, for example, environment around house, or the like).

The stated preference approach is a method for evaluating the value of the environment by asking people, and includes not only the use value but also a non-use value. The stated preference approach includes, for example, the Contingent Valuation Method (CVM) and the conjoint analysis. The Contingent Valuation Method (CVM) is a method for evaluating the value of the environment by asking how much money people would be willing to pay to improve the environment and how much money people would accept to compensate degradation in the environment. The conjoint analysis is a method for decomposing the value of the environment into attribute units and evaluating the value of the environment by presenting a plurality of environment protection alternatives to a respondent and asking preference of the alternatives. Note that disadvantageous of the method using a questionnaire survey such as the stated preference approach include that a large number of man-hours are needed and the result is easily influenced by social interests. In the present embodiment, by using the market value approach, the alternative method, the travel cost method, and the Contingent Valuation Method (CVM), the animal-derived value and the plant-derived value are calculated. Note that, in the present embodiment, in a case where qualitative evaluation can be performed on the item on which the quantification is difficult to perform, the qualitative evaluation may be applied.

Next, a configuration of the information processing device 100 will be described. As illustrated in FIG. 1, the information processing device 100 includes a communication unit 110, a storage unit 120, and a control unit 130. Note that the information processing device 100 may include various functional units included in a known computer, for example, functional units such as various input devices, audio output devices, or the like, in addition to the functional units illustrated in FIG. 1.

The communication unit 110 is implemented by, for example, a Network Interface Card (NIC) or the like. The communication unit 110 is a communication interface that is wiredly or wirelessly connected to the terminal device 10 via the network N and manages information communication with the terminal device 10. The communication unit 110 outputs an evaluation target region information received from the terminal device 10 to the control unit 130. Furthermore, the communication unit 110 transmits information regarding a display screen input from the control unit 130 to the terminal device 10.

The storage unit 120 is implemented by, for example, a storage device such as a semiconductor memory element such as a random access memory (RAM), a flash memory, or the like, a hard disk, an optical disk, or the like. The storage unit 120 includes a vegetation map database 121, a habitat information database 122, a rare species database 123, an animal value database 124, a cultural value database 125, and a plant value database 126. Furthermore, the storage unit 120 stores information used for processing by the control unit 130. Note that, in the following description, there is a case where a database is expressed as a DB.

The vegetation map DB 121 stores land use classification and classification of vegetation in association with each other. The vegetation map DB 121 stores the land use classification and the classification of the vegetation in association with each other, for example, for each two-dimensional mesh or three-dimensional mesh used in a vegetation survey. Furthermore, for example, the vegetation map DB 121 associates a legend of the vegetation map with each of the vegetation naturalness and the classification of the vegetation. Note that, when the vegetation map is displayed on a screen, for example, the vegetation map is displayed which is colored in different colors on the basis of tree species and classification such as conifers and broad-leaved trees.

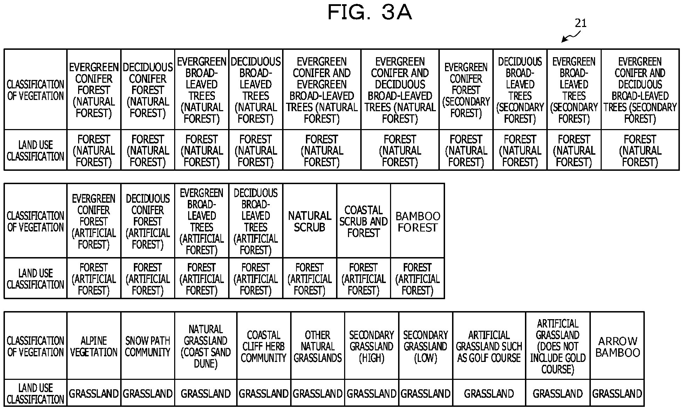

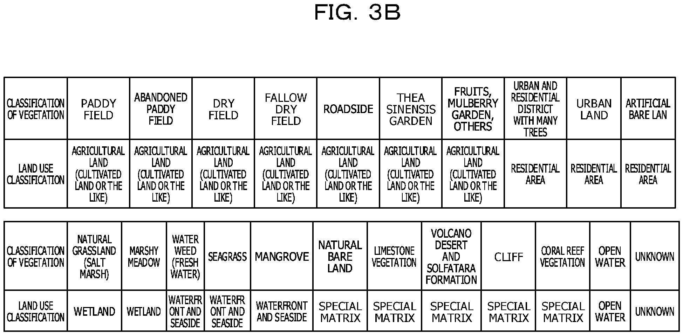

FIGs. 3A and 3B are a diagram illustrating an example of association between land use classification and classification of vegetation in a vegetation map database. Table 21 illustrated in FIGs. 3A and 3B illustrates the land use classification associated with the classification of the vegetation. In the example in Table 21, it is indicated that use classification of the classification of the vegetation "deciduous broad-leaved forest (artificial forest) is "forest (artificial forest)".

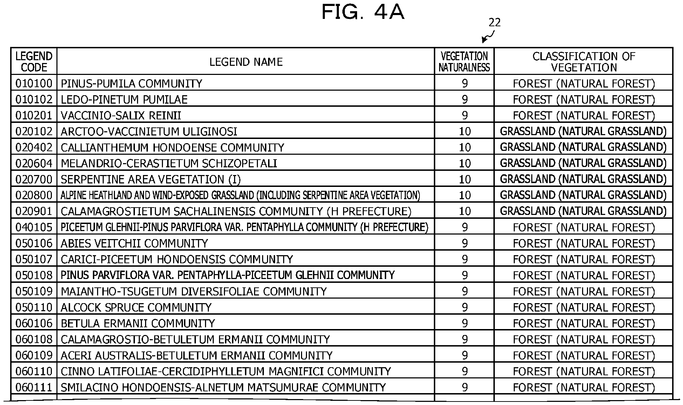

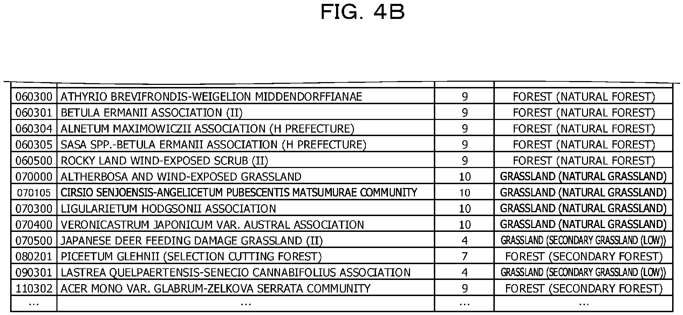

FIGs. 4A and 4B are a diagram illustrating an example of association between a legend of vegetation and the classification of the vegetation in the vegetation map database. Table 22 illustrated in FIGs. 4A and 4B illustrates the classification of the vegetation associated with the legend of the vegetation map. In the example in Table 22, it is indicated that a legend name "Pinus pumila community" having a legend code of "010100" has vegetation naturalness of "9" and classification of vegetation of "forest (natural forest)".

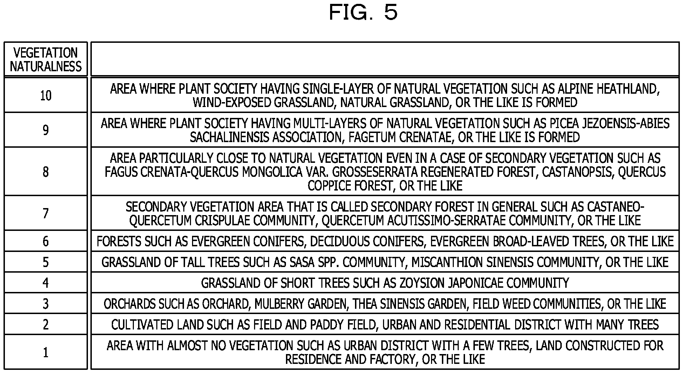

Here, the classification of the vegetation naturalness will be described with reference to FIG. 5. FIG. 5 is a diagram illustrating an example of the classification of the vegetation naturalness. In FIG. 5, the vegetation naturalness is classified into ten stages on the basis of the plant sociology depending on a human interference degree according to the vegetation composition. As illustrated in FIG. 5, the vegetation naturalness sequentially increases from "1" for an urban land where human intervention is large and the like, "2" for cultivated lands and the like, and "3" for fruit orchards and the like, and "10" for alpine heathland which is an alpine wind-exposed scrub is the highest.

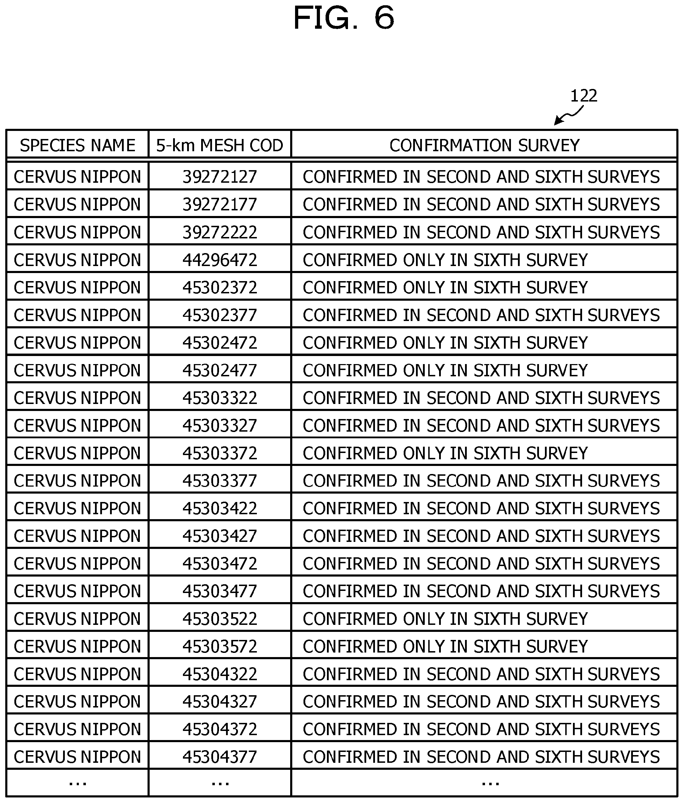

Returning to the description of FIG. 1, the habitat information DB 122 stores, for example, habitat information obtained by tallying animal sighting information in each region. FIG. 6 is a diagram illustrating an example of a habitat information database. As illustrated in FIG. 6, the habitat information DB 122 includes items such as a "species name", a "5-km mesh code", and a "confirmation survey". As the habitat information DB 122, for example, open data of, for example, Biodiversity Center of Japan of Environment Agency or the like can be used. Furthermore, the habitat information DB 122 may use more detailed region-specific data. The habitat information DB 122 stores, for example, each 5-km mesh code as a single record.

Returning to the description of FIG. 1, the rare species DB 123 stores data on rare species at the world, the country, and the regional levels. The rare species DB 123 may have a configuration including a plurality of kinds of DBs. The rare species DB 123 includes, for example, a DB in which an animal species at the regional level and an endangered rank are associated with each other and a DB of the number of species at the country and the regional levels. Furthermore, the DB includes, for example, a list of the rare species (mammals) at the regional level is associated with the endangered ranks of each rare species (animal species) at the world, the country, and the regional levels and a DB of a list of the rare species (birds) at the regional level.

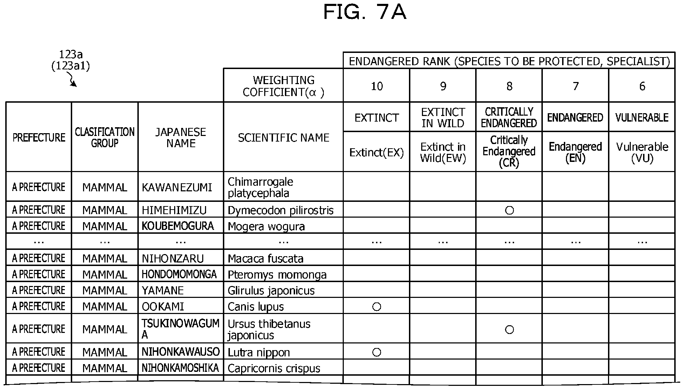

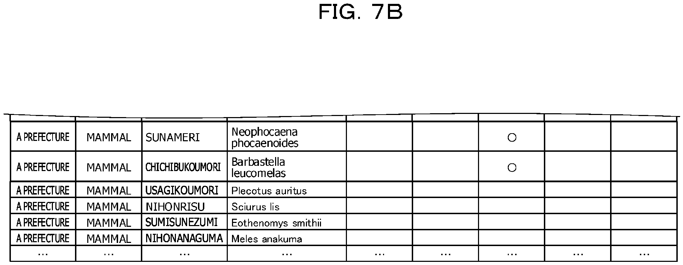

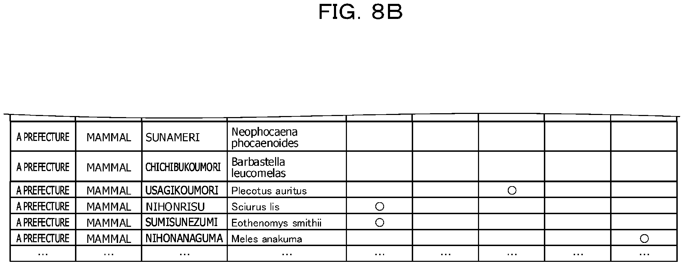

FIGs. 7A to 8B are diagrams illustrating an example of the rare species database at the regional level. As illustrated in FIGs. 7A to 8B, the rare species DB 123 includes a rare species DB 123a (rare species DBs 123a1 and 123a2) in which the animal species at the regional level is associated with the endangered rank. The rare species DB 123 includes items such as "prefecture", "classification group", "Japanese name", "scientific name", and "endangered rank", and "normal species". Furthermore, in the rare species DB 123a, a weighting coefficient ($\alpha$) is added to the endangered rank and the normal species. The weighting coefficient ($\alpha$) is set, for example, so that a value becomes higher as the endangered rank is higher when an animal-derived value is calculated. The rare species DB 123a stores, for example, each animal species as a single record.

The "prefecture" is information indicating a prefecture as the regional level. The "classification group" is information indicating, for example, classification of the animal species such as mammals, birds, or the like. The "Japanese name" is information indicating a name of the animal species in Japan. The "scientific name" is information indicating a scientific name of the animal species. The "endangered rank" is information indicating the endangered rank at the regional level. The "endangered rank" includes, for example, Extinct (EX), Extinct in the Wild (EW), Critically Endangered (CR), Endangered (EN), Vulnerable (VU), Near Threatened (NT), Least Concern (LC), Data Deficient (DD), Threatened Local Population (LP), or the like. Note that the abbreviations of the endangered ranks are respectively indicated as Extinct (EX), Extinct in the Wild (EW), Critically Endangered (CR), Endangered (EN), Vulnerable (VU), Near Threatened (NT), Least Concern (LC), Data Deficient (DD), and Threatened Local Population (LP). The "normal species" is information indicating a general animal species that is not classified in the endangered rank.

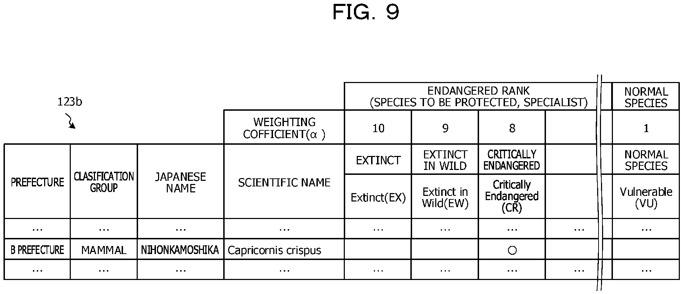

FIG. 9 is a diagram illustrating another example of the rare species database at the regional level. As illustrated in FIG. 9, a rare species DB 123b is a rare species DB in a region different from that of the rare species DB 123a illustrated in FIGs. 7A to 8B. For example, although "Capricornis crispus" is classified into Near Threatened (NT) in the rare species DB 123a in A prefecture, "Capricornis crispus" is classified into Critically Endangered (CR) in the rare species DB 123b in B prefecture. In this way, in the rare species DB 123, even when the animal species is the same, there is a case where the endangered rank is different depending on the region. For example, when weighting coefficients $\alpha$ of "Capricornis crispus" are compared, "5" is set for NT in A prefecture, and "8" is set for CR in B prefecture. Therefore, this indicates that scarcity in B prefecture is higher, and a value of an ecosystem service derived from "Capricornis crispus" in B prefecture is higher than that in A prefecture.

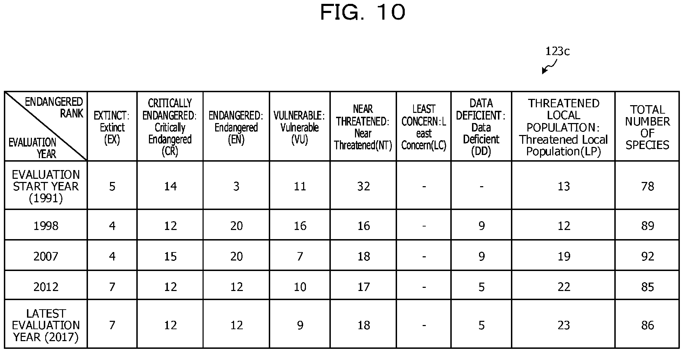

FIG. 10 is a diagram illustrating an example of the number of species at the country level in the rare species database. As illustrated in FIG. 10, the rare species DB 123 includes a rare species DB 123c indicating the number of species in the endangered rank at the country level. In the horizontal axis of the rare species DB 123, items are included such as "Extinct (EX)", "Critically Endangered (CR)", "Endangered (EN)", "Vulnerable (VU)", "Near Threatened (NT)", "Least Concern (LC)", "Data Deficient (DD)", "Threatened Local Population (LP)", and the "total number of species". Furthermore, the rare species DB 123c includes each evaluation year on the vertical axis. Note that, since English name of each item is similar to that in FIGs. 7A to 8B, description thereof is omitted.

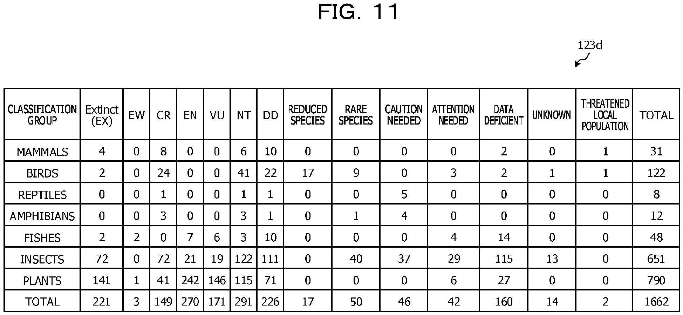

FIG. 11 is a diagram illustrating an example of the number of species at the regional level in the rare species database. As illustrated in FIG. 11, the rare species DB 123 includes a rare species DB 123d indicating the number of species in the endangered rank at the regional level. In the horizontal axis of the rare species DB 123d, items are included such as the "classification group", "Extinct (EX)", "EW", "CR", "EN", "VU", "NT", "DD", "Reduced species", "Rare species", "Caution needed", "Attention needed", "Data Deficient", "Unknown", "Threatened Local Population", and "Total".

The "classification group" is information indicating, for example, classification of the animal species such as mammals, birds, or the like. The items from "Extinct (EX)" to "DD" respectively correspond to, for example, the items in the endangered rank. The items from "Reduced species" to "Threatened Local Population" are information indicating unique classification in the region. The "Total" is information indicating the total number of species for each classification group. In this way, there is a case where the endangered ranks at the world, the country, and the regional levels are different from each other including the items for ranking. Therefore, in the present embodiment, for example, it is assumed that the endangered rank illustrated in FIGs. 7A to 8B be used as the items of the endangered rank.

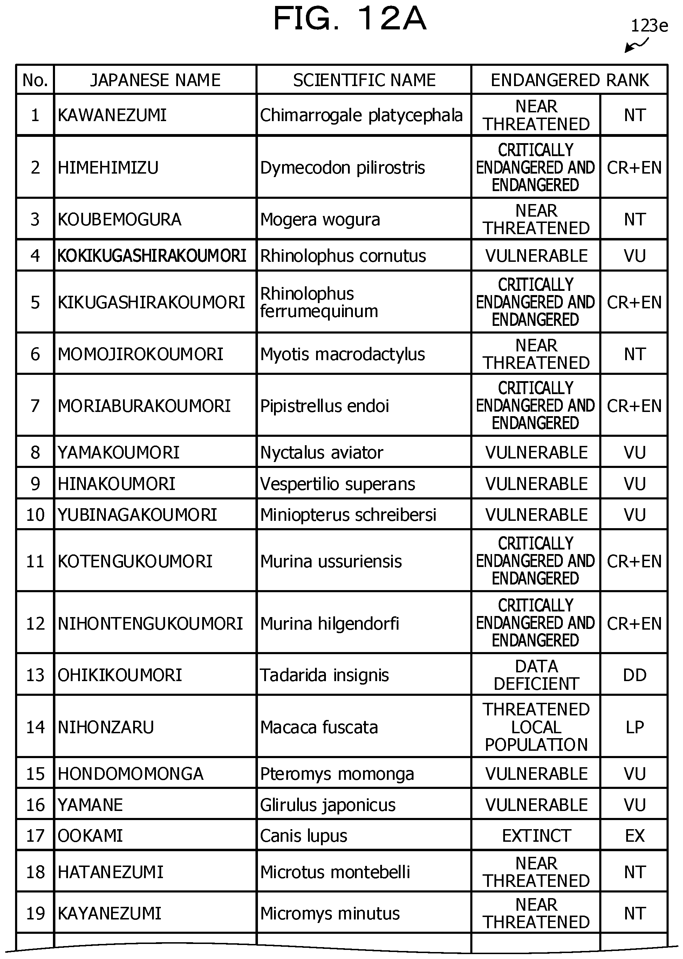

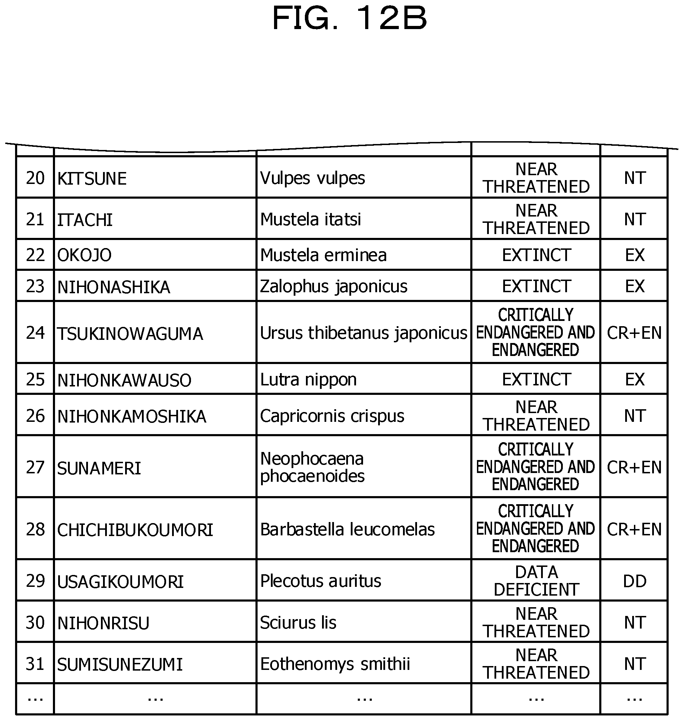

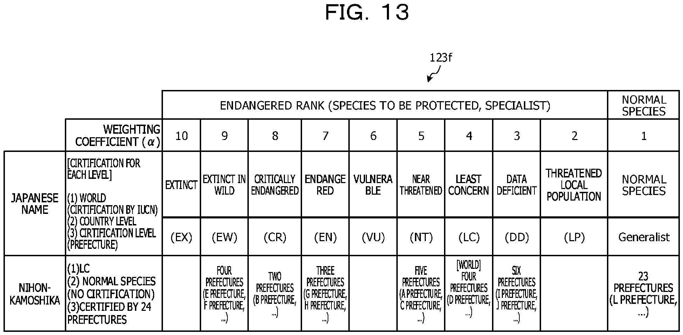

FIGs. 12A and 12B are a diagram illustrating an example of a list at the regional level in the rare species database. FIG. 13 is a diagram illustrating an example of a ranking relationship of a certain animal species in the world, a country, and each region. The rare species DBs 123e and 123f illustrated in FIGs. 12A to 13 are examples of the rare species DB 123 in which an animal species in a certain region is associated with the endangered rank at the world, the country, and the regional levels by using the endangered rank illustrated in FIGs. 7A to 8B. In the rare species DB 123e illustrated in FIGs. 12A and 12B, Japanese name, the scientific name, and the endangered rank of a rare species of mammals in a certain region are associated with each other. Furthermore, the rare species DB 123f illustrated in FIG. 13 indicates how to classify a specific animal species, for example, "Capricornis crispus" at each of the world, the country, and the regional levels. In the rare species DB 123f, it is found that "Capricornis crispus" is classified into "Least Concern (LC)" at the world level, "normal species" at the country level, and any one of the items of the endangered rank in some prefectures at the regional level.

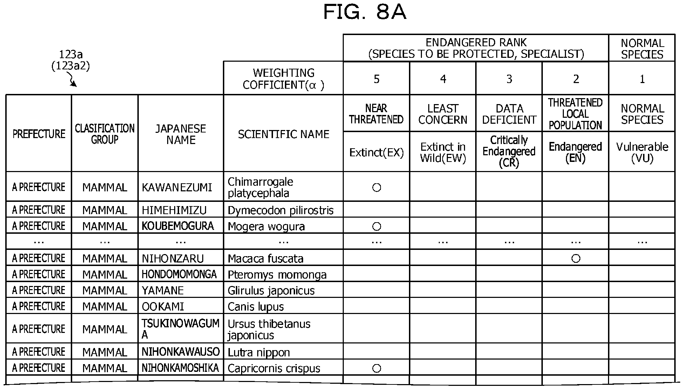

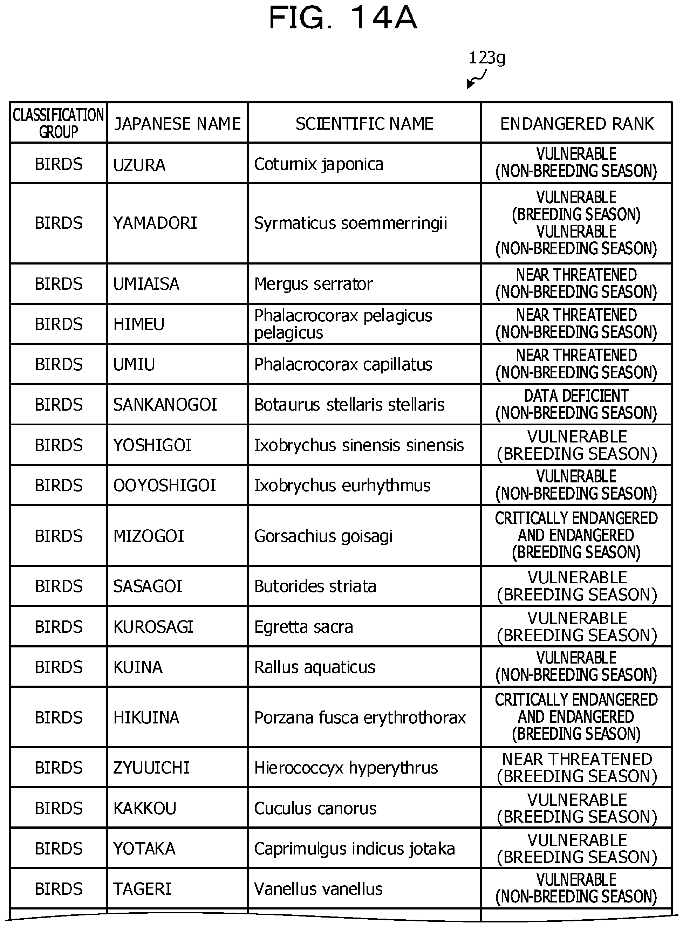

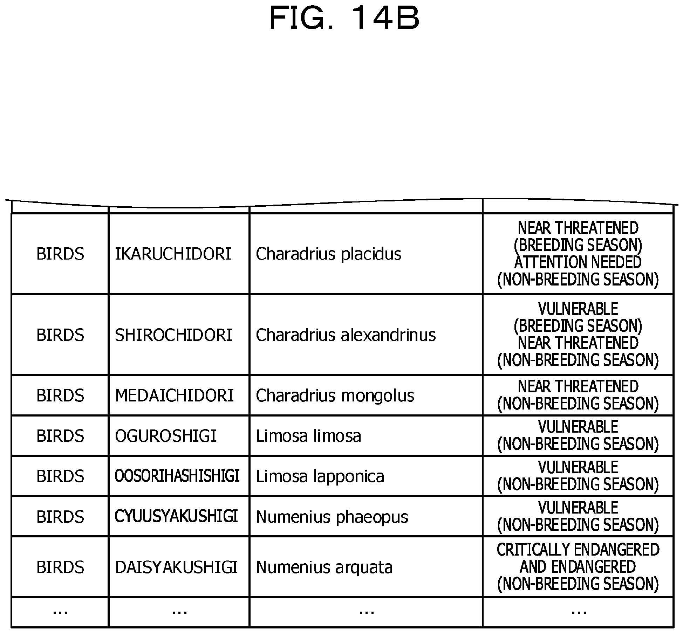

FIGs. 14A and 14B are a diagram illustrating another example of the list at the regional level in the rare species database. In a rare species DB 123g illustrated in FIGs. 14A and 14B, Japanese name, the scientific name, and the endangered rank of a rare species of birds in a certain region are associated with each other. Although not illustrated, as in FIG. 13, the rare species DB 123g may be combined with a DB indicating how a specific animal species is classified at each of the world, the country, and the regional levels. As illustrated in FIGs. 7A to 14B, in the rare species DB 123, each species of mammals, birds, reptiles, amphibians, fishes, insects, and invertebrates is associated with the endangered rank at the world, the country, and the regional levels. Furthermore, in the rare species DB 123, each species of vascular plants, bryophytes, algae, lichens, and fungi is associated with the endangered rank at the world, the country, and the regional levels.

Returning to the description of FIG. 1, the animal value DB 124 stores data used to calculate an animal-derived value. The animal value DB 124 may have a configuration including a plurality of kinds of DBs. The animal value DB 124 includes, for example, a DB related to habitat density for each animal, a DB of an eating energy amount or the like, a DB related to breeding cost, and a DB related to management cost in a case where a wild animal is raised in a zoo.

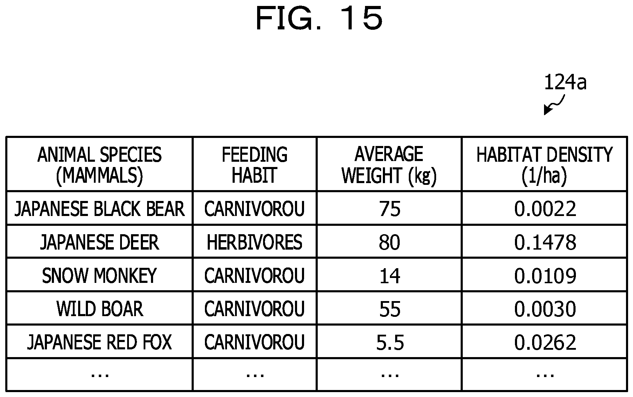

FIG. 15 is a diagram illustrating an example of habitat density in an animal value database. An animal value DB 124a illustrated in FIG. 15 stores the habitat density for each animal. The animal value DB 124a includes items such as "animal species (mammals)", "feeding habit", "average weight (kg)", or "habitat density (1/ha)". The animal value DB 124a stores, for example, each animal species as a single record. Note that the habitat density is used only for mammals. Regarding animals in other classification, the management cost is calculated by using the number of kinds without using the number of individuals.

The "animal species (mammals)" is information indicating the name of the species belonging to the classification in the parentheses, and a word in the parentheses indicates a classification group according to a class of the zootaxy. For example, a generic term for the animals belonging to Mammalia is indicated as mammals, and there is information indicated the names of the species of the mammals. The "feeding habit" is information indicating a feeding habit of the animal species. The "feeding habit" is used, for example, when a relational expression between a weight and habitat density is applied. Note that, in a case of an omnivore, for example, the animal is classified into herbivores or carnivores depending of principal food. The "average weight (kg)" is information indicating an average weight of the animal species. The "habitat density (1/ha)" is information obtained by converting habitat density (D) of the animal species per $km^2$ calculated by using the following formula (1) or (2) depending on the feeding habit into habitat density per ha. Note that W represents a weight.

$$\text{Herbivore in the temperate zone: } D = 214W^{-0.61} \ldots (1)$$

$$\text{Carnivore in the temperate zone: } D = 13W^{-0.94} \ldots (2)$$

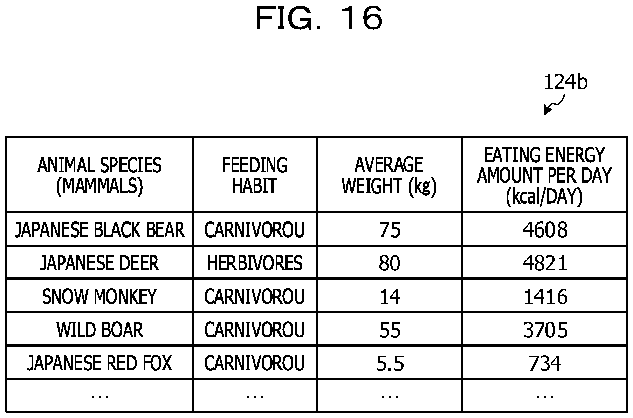

FIG. 16 is a diagram illustrating an example of an eating energy amount of mammals in the animal value database. An animal value DB 124b illustrated in FIG. 16 stores an eating energy amount per day for each animal species of mammals. The animal value DB 124b includes items such as "animal species (mammals)", "feeding habit", "average weight (kg)", and "eating energy amount per day (kcal/day)". The animal value DB 124b stores, for example, each animal species as a single record.

The "animal species (mammals)" is information indicating a kind of the mammal. The "feeding habit" is information indicating a feeding habit of the animal species. The "average weight (kg)" is information indicating an average weight of the animal species. The "eating energy amount per day (kcal/day)" is information indicating an eating energy amount per day (W) of an animal species calculated by using the following formula (3) or (4) depending on whether the animal is a homeothermal animal or a heterothermic animal. Furthermore, since a unit of the energy amount obtained by the formula (3) or (4) is watt, the unit of the obtained value is converted into "kcal/day" by using the following formula (5).

$$\text{In a case of homeothermal animal: } W = 10.7 \times [\text{weight (kg)}]^{0.703} \ldots (3)$$

$$\text{In a case of heterothermic animal: } W = 0.78 \times [\text{weight (kg)}]^{0.82} \ldots (4)$$

$$\text{Energy amount required per day (kcal/day)} = W \times 20.7 \ldots (5)$$

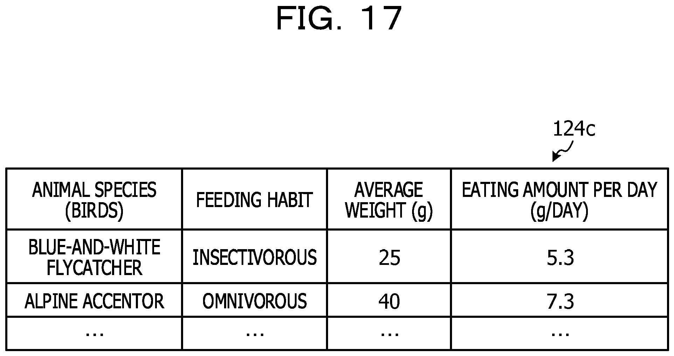

FIG. 17 is a diagram illustrating an example of an eating amount of birds in the animal value database. An animal value DB 124c illustrated in FIG. 17 stores an eating amount per day of each animal species of birds. The animal value DB 124c includes items such as "animal species (birds)", "feeding habit", "average weight (kg)", and "eating amount per day (g/day)". The animal value DB 124b stores, for example, each animal species as a single record.

The "animal species (birds)" is information indicating a kind of the bird. The "feeding habit" is information indicating a feeding habit of the animal species. The "average weight (kg)" is information indicating an average weight of the animal species. The "eating amount per day (g/day)" is information indicating an eating amount (f) per day of an animal species calculated by using the following formula (6).

$$f(g) = 0.601 \times [\text{weight (g)}]^{0.679} \ldots (6)$$

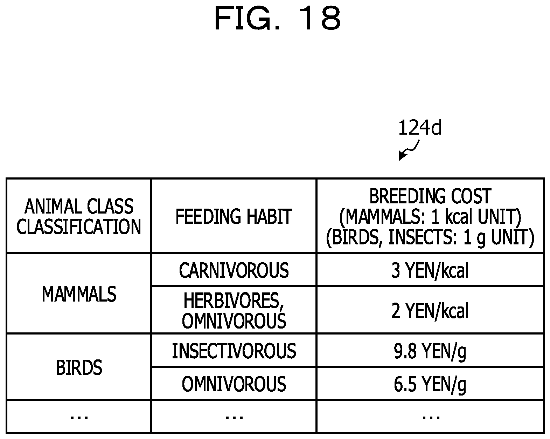

FIG. 18 is a diagram illustrating an example of an original unit of breeding cost in the animal value database. An animal value DB 124d illustrated in FIG. 18 stores an original unit of breeding cost according to the classification and the feeding habit of the animal. The animal value DB 124d includes items such as "animal class classification", "feeding habit", and "breeding cost".

The "animal species" is information indicating the name of the species in an animal group classified into a class such as mammals or birds according to the zootaxy. The "feeding habit" is information indicating a feeding habit of the animal species. The "breeding cost" is information indicating feed cost in units of 1 kcal for mammals and feed cost in units of 1 g for birds and insects.

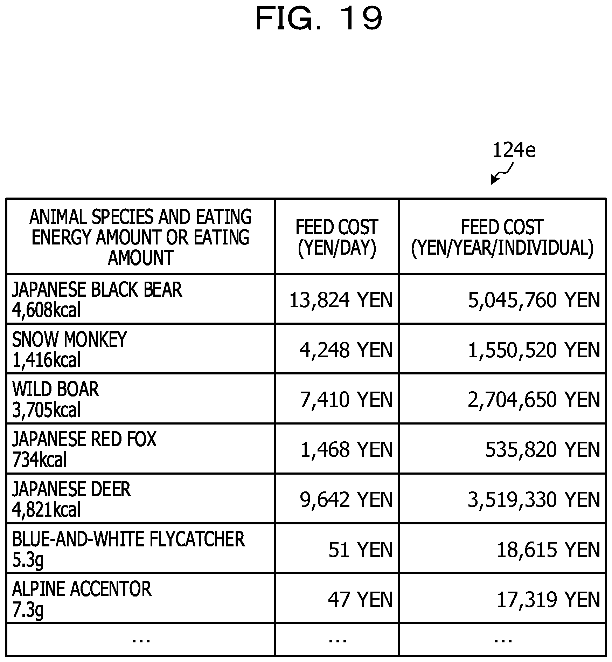

FIG. 19 is a diagram illustrating an example of the breeding cost in the animal value database. The breeding cost mainly indicates the feed cost. An animal value DB 124e illustrated in FIG. 19 stores daily feed cost and annual feed cost for each animal species. The animal value DB 124e includes items such as "animal species and eating energy amount or eating amount", "feed cost (yen/day)", and "feed cost (yen/year/individual)".

The "animal species and eating energy amount or eating amount" is information indicating the name of the species in an animal group that is classified into a class such as mammals and birds according to the zootaxy and the eating energy amount or the eating amount of the animal species. The "feed cost (yen/day)" is information indicating feed cost per day. The "feed cost (yen/year/individual)" is information indicating annual feed cost for each individual.

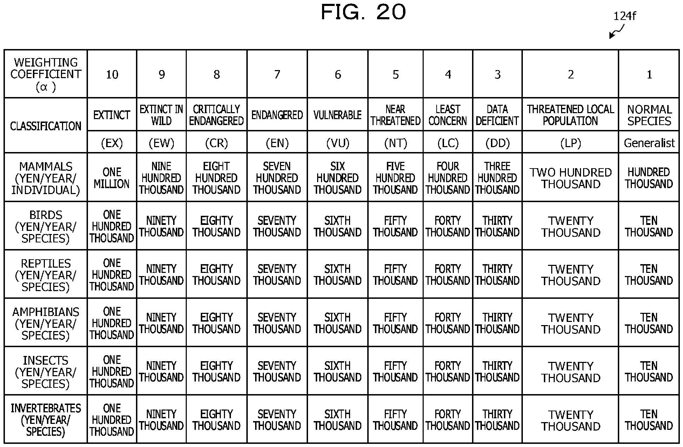

FIG. 20 is a diagram illustrating an example of management cost in the animal value database. An animal value DB 124f illustrated in FIG. 20 stores management cost according to the endangered rank for each classification of the animal species. The management cost is annual management cost of an institution in a case where an animal living in wild is raised in a zoo and includes labor costs. The animal value DB 124f stores management cost according to the endangered rank for each classification of the animal species and a weighting coefficient α. Note that the weighting coefficient α is set as assuming that an animal in the higher endangered rank has stricter conditions of breeding management and facilities. In a case where the management cost of the animal species is calculated, in a case of mammals, the management cost is calculated by using the following formulas (7) and (8). Furthermore, regarding an animal other than mammals, management cost is calculated by using the following formula (9). Note that nature in the formula (7) includes forests and farmlands. Furthermore, a price of management cost reflecting the weighting coefficient α is stored in each endangered rank field of the animal value DB 124f. Therefore, annual management cost may be calculated by multiplying the price and the number of habitable animals.

```
        The  number  of  habitable  animals  =  [habitat
density (1/ha)]
        ×  [area  of  habitable  nature  in  evaluation  area
(ha)] ... (7)


        Annual  management  cost  of  all  individuals  of  one
species (yen/year)  =  the  number  of  habitable  animals  x
weighting coefficient α
        × annual management cost of normal species ... (8)


        Annual  management  cost  of  one  species
(yen/year/species) = weighting coefficient α
        × annual management cost of normal species ... (9)
```

Returning to the description of FIG. 1, the cultural value DB 125 stores data used to calculate a cultural service value. The cultural value DB 125 may have a configuration having a plurality of kinds of DBs. The cultural value DB 125 includes, for example, a DB related to an amount of consumption for each day tripper, a DB related to a trip including overnight stays, a DB related to a day trip, a DB related to a homecoming visitor, and a DB related to tourism.

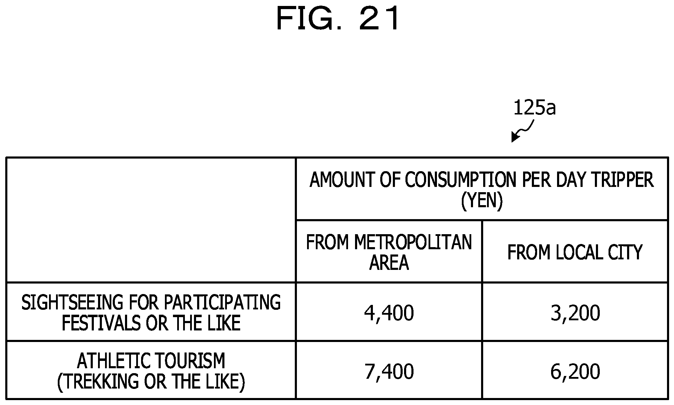

FIG. 21 is a diagram illustrating an example of an amount of consumption of a day tripper in a cultural value database. A cultural value DB 125a illustrated in FIG. 21 stores an amount of consumption per day tripper. The cultural value DB 125a stores an amount of consumption in a case of participation from a metropolitan area and participation from a local city regarding each of sightseeing for participating festivals and athletic tourism. The amount of consumption of sightseeing for participating the festivals is obtained by adding roundtrip transportation cost (metropolitan area: 2,400 yen, local cities: 1,200 yen) and miscellaneous expenses of 2,000 yen. Note that, regarding the transportation cost, a ratio of adults to children is 1:1. The amount of consumption of the athletic tourism is obtained by adding an amount of consumption of sightseeing for participating the festivals (4400 yen or 3200 yen) and a charge for use of skiing and trekking tools of 3000 yen.

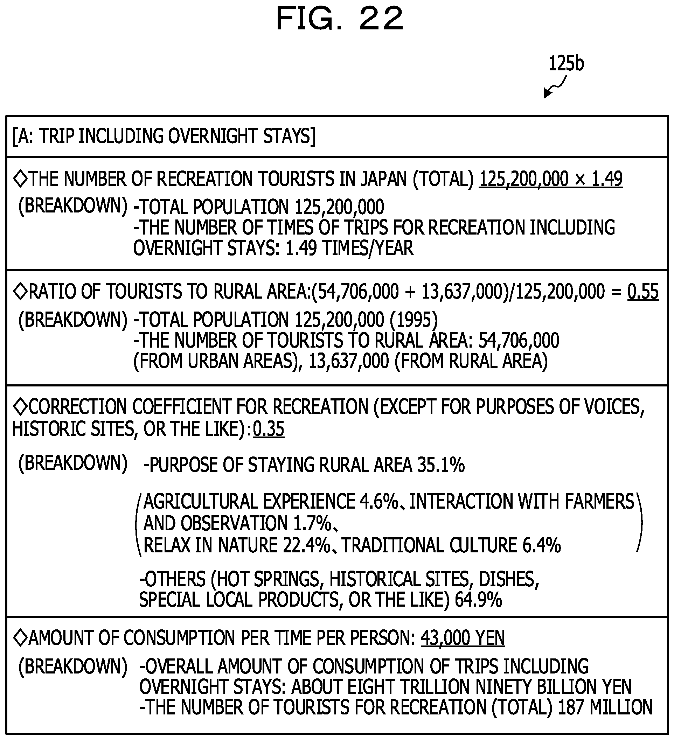

FIG. 22 is a diagram illustrating an example of a parameter in the cultural value database. A cultural value DB 125b illustrated in FIG. 22 stores various parameters regarding the trip including overnight stays. A value of each parameter can be adjusted by changing a breakdown. Note that Journal of Agricultural Policy Research Vol. 52 No. 4 published by The Policy Research Institute, Ministry of Agriculture, Forestry and Fisheries indicates parameters as preconditions of the tourism, and it is assumed that cost spent in visit to rural areas by urban residents coincide with an effect obtained by the visit to the rural areas, and travel cost to the rural areas by the urban residents and the like is used as a value of recreation in the rural areas. Furthermore, the recreation includes entertainments that can be enjoyed in mountain areas including forests and farmlands such as mountain climbing, camping, forest bathing, or the like, that is, ecotourism. Therefore, a value caused by the cultural service tourism is evaluated by using the number of tourists to rural areas and the number of homecoming visitors.

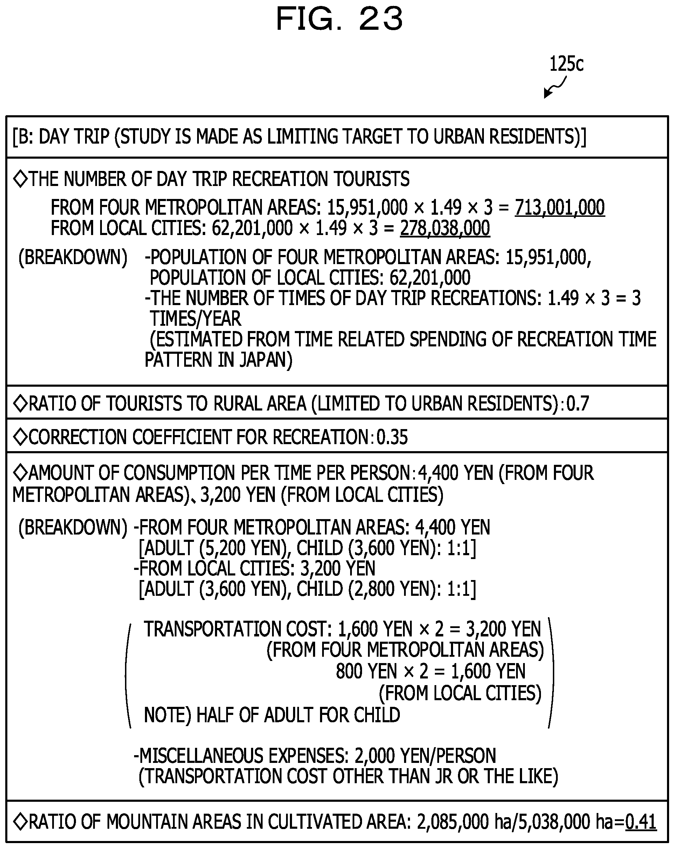

FIG. 23 is a diagram illustrating an example of a parameter of the cultural value database. A cultural value DB 125c illustrated in FIG. 23 stores various parameters regarding a day trip. Note that, in the present embodiment, study is made as limiting the target to urban residents. Furthermore, a value of each parameter can be adjusted by changing a breakdown.

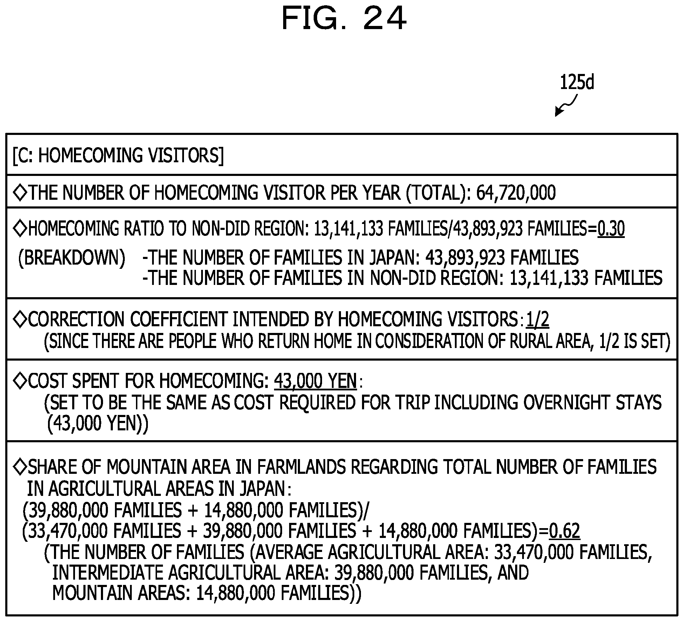

FIG. 24 is a diagram illustrating an example of the parameter of the cultural value database. A cultural value DB 125d illustrated in FIG. 24 stores various parameters related to a homecoming visitor. Furthermore, a value of each parameter can be adjusted by changing a breakdown.

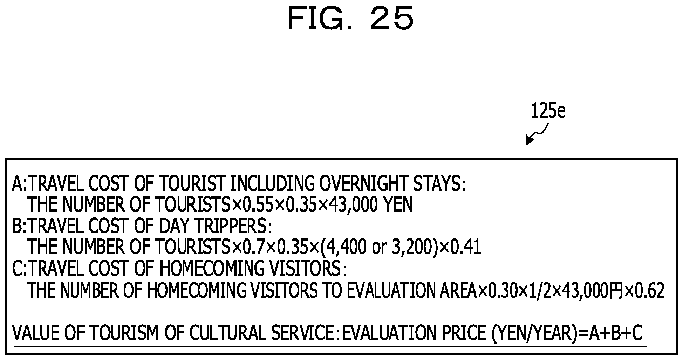

FIG. 25 is a diagram illustrating an example of a value of tourism of the cultural value database. A cultural value DB 125e illustrated in FIG. 25 is a DB used to calculate a value of cultural service tourism on the basis of the cultural value DBs 125a to 125d. When each parameter of the cultural value DBs 125a to 125d is changed, a parameter of the cultural value DB 125e is also changed.

Returning to the description of FIG. 1, the plant value DB 126 stores data related to a value of provisioning services and regulating services among the ecosystem services. The plant value DB 126 stores, for example, a price of surface erosion prevention for each vegetation, water resource reservoir, and the like and calculates an annual amount of erosion sediment from geological information of an evaluation target region and the kind of the vegetation and measures an amount of sediment prevention. Therefore, the amount of sediment discharge in which erosion of surface soil is prevented by habitat of each vegetation is calculated. Then, since the existence of the vegetation serves as a dam as an artificial object, a value of surface erosion prevention as a single function of the ecosystem service is calculated by multiplying 5500 yen/m$^3$ as a stored unit, for example, a unit of dam construction cost by the amount of the sediment discharge. The calculation results of various ecosystem services are calculated, and the sum can be calculated as a plant-derived value in the region.

The control unit 130 is implemented, for example, by executing a program stored in an internal storage device by a central processing unit (CPU), a micro processing unit (MPU), and the like using the RAM as a working region. Furthermore, the control unit 130 may be implemented by, for example, an integrated circuit such as an application specific integrated circuit (ASIC), a field programmable gate array (FPGA), and the like. The control unit 130 includes a reception unit 131, a determination unit 132, a first calculation unit 133, a second calculation unit 134, a generation unit 135, and a communication control unit 136 and implements or executes functions and actions of information processing to be described later. Note that an internal configuration of the control unit 130 is not limited to the configuration illustrated in FIG. 1 and may be another configuration as long as the configuration executes the information processing described later.

The reception unit 131 receives evaluation target region information from the terminal device 10 via the network N and the communication unit 110 and accepts an evaluation target region. The reception unit 131 outputs the received evaluation target region to the determination unit 132.

When the evaluation target region is input from the reception unit 131, the determination unit 132 refers to the vegetation map DB 121 and determines a land use type of the evaluation target region on the basis of the received evaluation target region. For example, the determination unit 132 determines which one of a natural mixed forest type, a plantation type, an alpine type, a village forest type, and an urban land type is the land use type on the basis of the vegetation in the evaluation target region. The determination unit 132 outputs the determined land use type to the generation unit 135 and outputs the evaluation target region to the first calculation unit 133.

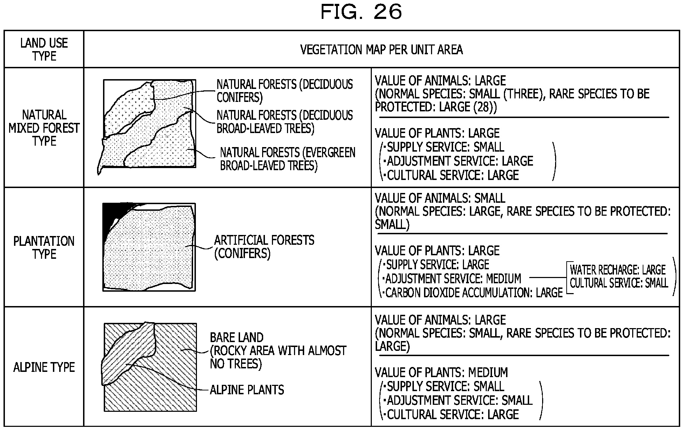

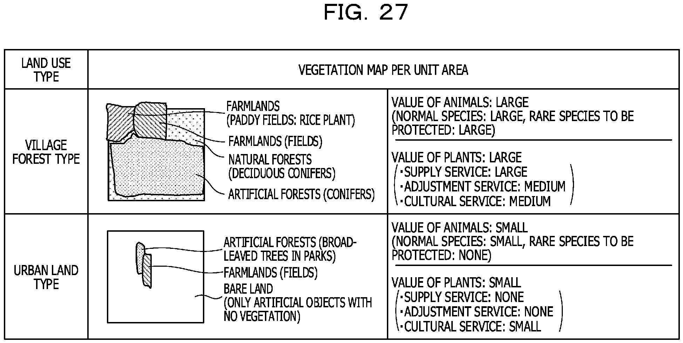

Here, the land use type will be described with reference to FIGs. 26 and 27. FIGs. 26 and 27 are diagrams illustrating an example of the land use type. As illustrated in FIG. 26, for example, the natural mixed forest type is a type in which natural forests such as deciduous conifers, deciduous broad-leaved trees, evergreen broad-leaved trees, or the like are largely dominant in the vegetation map per unit area. In the natural mixed forest type, a value of animals is large and a value of plants is large since an area where animals can live exists. The plantation type is, for example, a type having many conifer artificial forests in the vegetation map per unit area. Since a single kind of plant is planted in the plantation type, compared to the natural forests, values of foods and habitats and hideouts necessary for inhabitation are low. Therefore, the value of the animals is small, and the value of the plants is large because the number of provisioning services as sources is large. The alpine type is, for example, a type having bare land and alpine plants in the vegetation map per unit area. In the alpine type, rare animals and plants live. Therefore, the value of the animals is large, and the value of the plants is medium.

As illustrated in FIG. 27, the village forest type is, for example, a type including multifaceted lands such as farmlands such as paddy fields and fields, natural forests of deciduous conifer, or the artificial forests of conifers, or the like in the vegetation map per unit area. Since the village forest type has a multifaceted landscape, it is easy to find habitats and shelters, and the number of living animals is large. Therefore, the value of the animal is large, and the value of the plant is large. The urban land type is, for example, a type including artificial forests of broad-leaved trees in parks, farmlands such as fields, and bare land including only artificial objects with no vegetation in the vegetation map per unit area. In the urban land type, the value of the animals is small, and the value of the plants is small.

Returning to the description of FIG. 1, when the evaluation target region is input from the determination unit 132, the first calculation unit 133 refers to the habitat information DB 122 and determines whether or not a rare species to be protected inhabits in the evaluation target region. In a case of determining that the rare species to be protected inhabits in the evaluation target region, the first calculation unit 133 calculates an animal-derived value including the rare species. In other words, the first calculation unit 133 refers to the animal value DB 124 and the cultural value DB 125 and calculates the animal-derived value according to the rare species to be protected.

In a case of determining that the rare species to be protected does not inhabit in the evaluation target region, the first calculation unit 133 calculates the animal-derived value of the normal species. In other words, the first calculation unit 133 refers to the animal value DB 124 and the cultural value DB 125 and calculates the animal-derived value according to the normal species. The first calculation unit 133 outputs the calculated animal-derived value and the evaluation target region to the generation unit 135. Furthermore, the first calculation unit 133 outputs the evaluation target region to the second calculation unit 134.

When the evaluation target region is input from the first calculation unit 133, the second calculation unit 134 refers to the vegetation map DB 121, the cultural value DB 125, and the plant value DB 126 and calculates a plant-derived value of the evaluation target region. The second calculation unit 134 calculates and stores, for example, a price of surface erosion prevention for each vegetation, water resource reservoir, and the like in the provisioning services and the regulating services, a price related to production of artifacts of the functions of the surface erosion prevention, the water resource reservoir, and the like in a case where the functions are replaced with the human society, a price of an amount of sediment prevention for preventing the land from sliding, and a price per unit area obtained by calculating an amount of water that can be stored from a geological condition and a rainfall amount and multiplies an area of each vegetation with each price in the evaluation target region so as to calculate the plant-derived value of the evaluation target region. The second calculation unit 134 outputs the calculated plant-derived value to the generation unit 135.

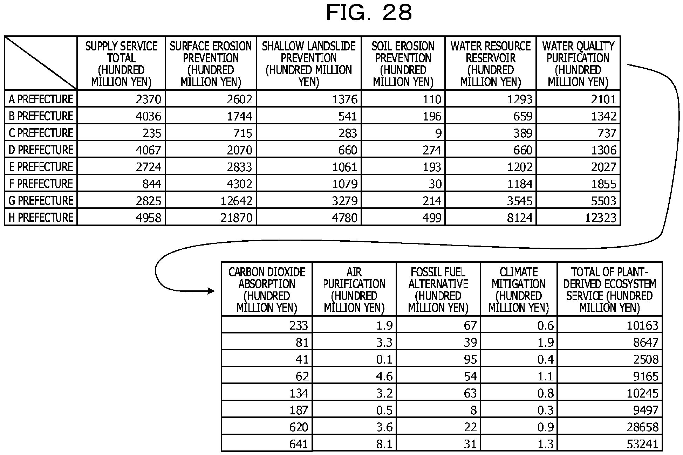

FIG. 28 is a diagram illustrating an example of a calculation result of a plant-derived ecosystem service. As illustrated in FIG. 28, the plant-derived value is calculated, for example, as a total of provisioning services such as wood production and each item of the regulating services at the regional level. Furthermore, as the total of these items, the total of the plant-derived ecosystem service is calculated. Note that, in FIG. 28, the cultural services are omitted. For example, in a case where the plant-derived value of the cultural services is a combination of the values of the plant and the animal, the plant-derived value may be collectively calculated as the animal-derived value.

Returning to FIG. 1, to the generation unit 135, the land use type is input from the determination unit 132, the evaluation target region and the animal-derived value are input from the first calculation unit 133, and the plant-derived value is input from the second calculation unit 134. The generation unit 135 generates a display screen in which the land use type, the animal-derived value, and the plant-derived value are associated with the evaluation target region. Furthermore, the generation unit 135 may generate a display screen that displays the animal-derived value and the plant-derived value on a map indicating the evaluation target region. Furthermore, the generation unit 135 may generate a display screen in which the animal-derived value and the plant-derived value are displayed as graphs. The generation unit 135 outputs information regarding the generated display screen to the communication control unit 136.

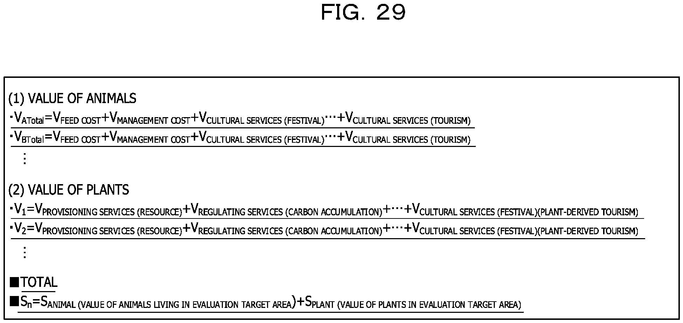

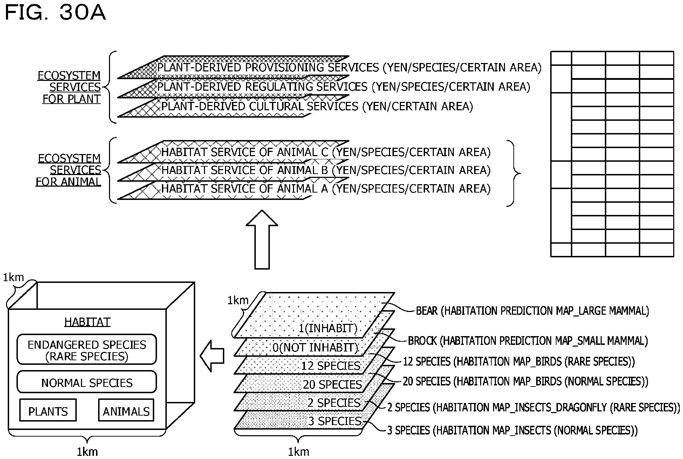

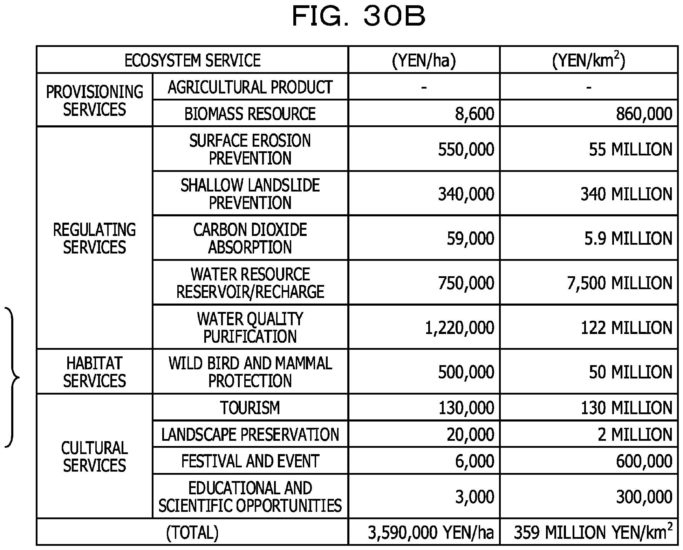

Here, a value of the evaluation target region will be described with reference to FIGs. 29, 30A and 30B. FIG. 29 is a diagram illustrating an example of a calculation formula of values of an animal and a plant. As illustrated in FIG. 29, the first calculation unit 133 obtains economic values $V_{ATotal}$, $V_{BTotal}$, ... of the animals that inhabit in the evaluation target region, for example, "mammal A", "bird B",.... Furthermore, the second calculation unit 134 obtains economic values $V_1$, $V_2$, ... of the plants in the evaluation target region, for example, "natural forest 1", "artificial forest 2",.... Next, the first calculation unit 133 obtains a value of animals living in the evaluation target region $S_{animal} = V_{ATotal} + V_{BTotal} + ....$ The second calculation unit 134 obtains a value of a plant in the evaluation target region $S_{plant} = V_1 + V_2 + ....$ Subsequently, the generation unit 135 obtains a total $S_n$ of $S_{animal}$ and $S_{plant}$. Note that, in FIG. 29, the formula of $S_{animal}$ and the formula of $S_{plant}$ are omitted.

FIGs. 30A and 30B are a diagram illustrating an example of an image in a unit area of the ecosystem service. As illustrated in FIGs. 30A and 30B, in the present embodiment, the value of the ecosystem service of the plant and the value of the ecosystem service of the animal are calculated on the basis of an animal habitat condition in the habitat, and for example, the value can be calculated as a value per unit area of 1 $km^2$. In the example in FIGs. 30A and 30B, the value is 3,590,000 yen per ha, and the value is calculated as 359,000,000 yen per $km^2$. In this way, the unit area can be changed to a value per ha. Note that, since these numerical values are rounded, there is a case where the numerical values are not exactly match.

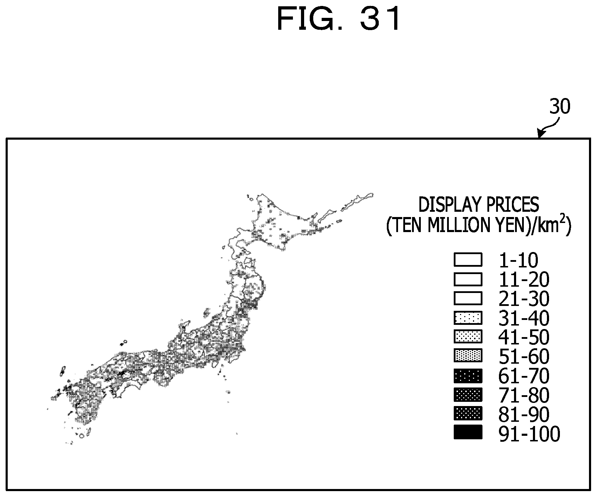

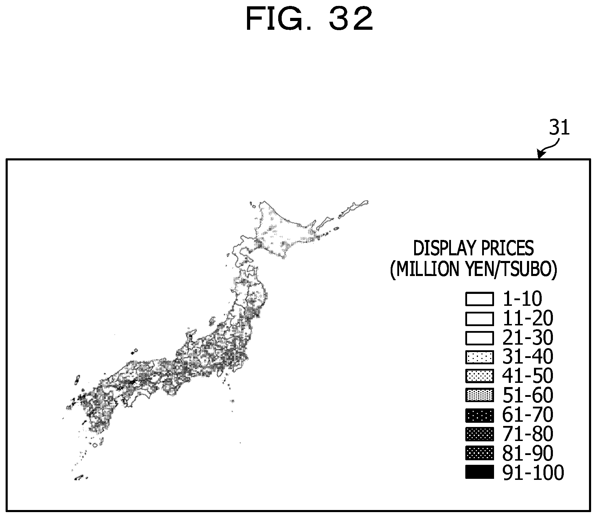

Next, various examples of the display screens will be described with reference to FIGs. 31 to 36. FIG. 31 is a diagram illustrating an example of the display screen. FIG. 32 is a diagram illustrating an example of a display screen in a case where a land price is displayed. A display screen 30 illustrated in FIG. 31 displays values of an animal and a plant for each predetermined mesh on the map of Japan. A display screen 31 in FIG. 32 is a comparative example in which a land price is similarly displayed on the map of Japan. When the display screens 30 and 31 are compared with each other, it is found that the values of the animal and the plant do not necessarily coincide with the land price.

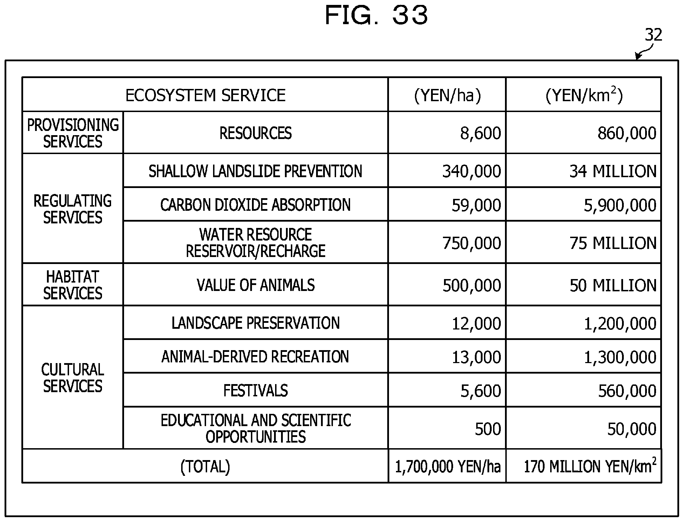

FIG. 33 is a diagram illustrating another example of the display screen. A display screen 32 illustrated in FIG. 33 is a display screen in which values of an animal and a plant per unit area in the evaluation target region are displayed in a table format. In this way, by displaying the values of the animal and the plant in the evaluation target region in the table format, it is possible to quantitatively compare the values with those in another region. Note that, since these numerical values in the display screen 32 are rounded, there is a case where the numerical values are not exactly match.

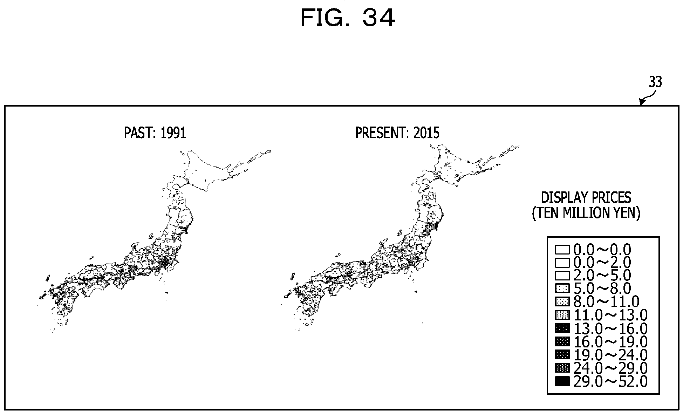

FIG. 34 is a diagram illustrating still another example of the display screen. A display screen 33 illustrated in FIG. 34 displays values of an animal and a plant for each predetermined mesh in the map of Japan in the past and at the present. In the display screen 33, changes in the values of the animal and the plant in the past and at the present can be easily compared.

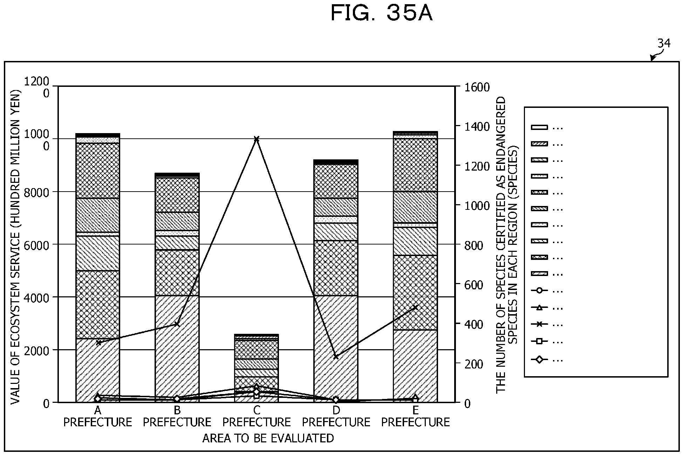

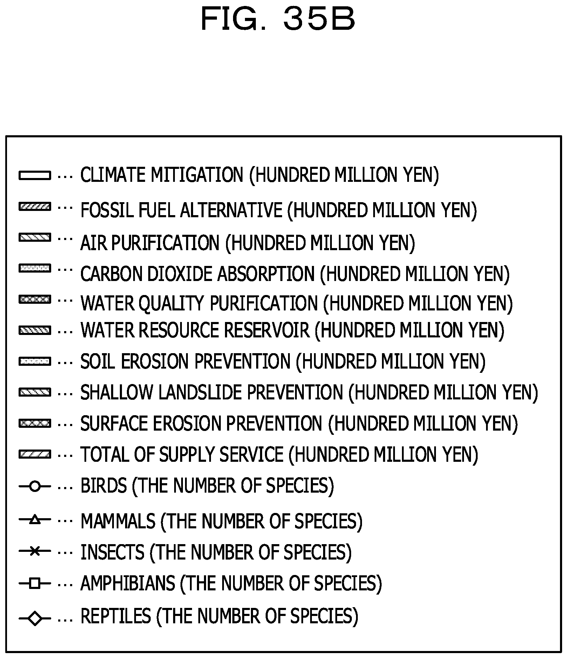

FIGs. 35A and 35B are a diagram illustrating yet another example of the display screen. A display screen 34 illustrated in FIGs. 35A and 35B is an example in a case where a value of an ecosystem service and the number of endangered species of wild animals certified in each region are displayed as a graph at the regional level. From the display screen 34, for example, although a value of an ecosystem service in C prefecture is lower than that of other prefectures, it is found that the number of wild animals certified as endangered species is larger than that in the other prefectures, regarding the insects, the birds, the mammals, amphibians, and reptiles. That is, it is found that a habitat region where wild animals can inhabit is extremely small.

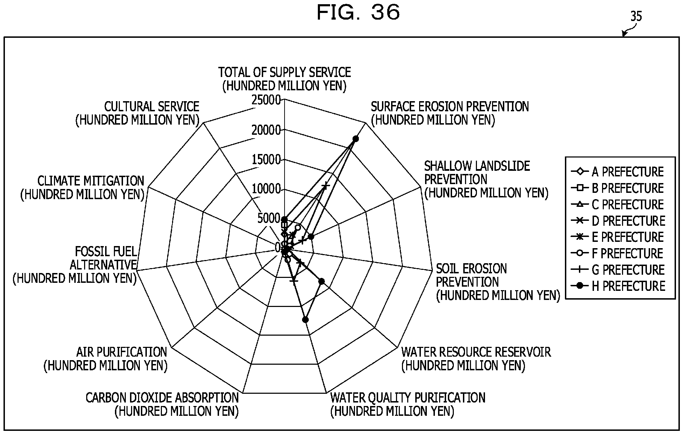

FIG. 36 is a diagram illustrating still yet another example of the display screen. A display screen 35 illustrated in FIG. 36 displays the value of the ecosystem service as a radar chart for each regional level (prefecture). With the display screen 35, it is easily compare characteristics of each region.

Returning to the description in FIG. 1, when the information regarding the display screen is input from the generation unit 135, the communication control unit 136 transmits the input information regarding the display screen to the terminal device 10 via the communication unit 110 and the network N.

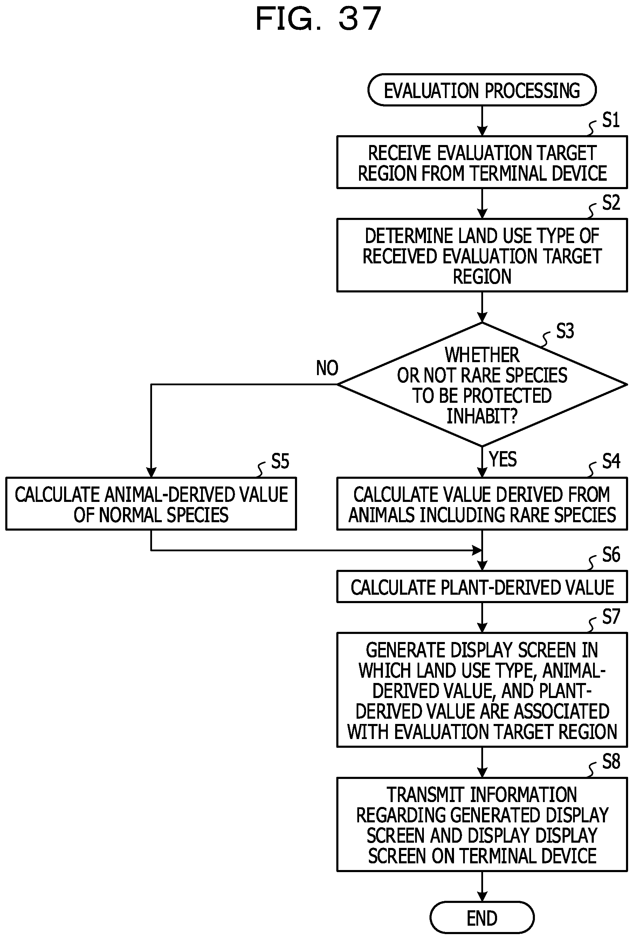

Next, an operation of the animal habitat value evaluation system 1 according to the embodiment will be described. FIG. 37 is a flowchart illustrating an example of evaluation processing according to the embodiment.

The terminal device 10 receives an input of the evaluation target region from a user and transmits the received evaluation target region to the information processing device 100. The information processing device 100 receives and accepts the evaluation target region from the terminal device 10 (step S1). The reception unit 131 outputs the received evaluation target region to the determination unit 132.

When the evaluation target region is input from the reception unit 131, the determination unit 132 refers to the vegetation map DB 121 and determines a land use type of the evaluation target region on the basis of the received evaluation target region (step S2). The determination unit 132 outputs the determined land use type to the generation unit 135 and outputs the evaluation target region to the first calculation unit 133.

When the evaluation target region is input from the determination unit 132, the first calculation unit 133 refers to the habitat information DB 122 and determines whether or not a rare species to be protected inhabits in the evaluation target region (step S3). In a case of determining that the rare species to be protected inhabits in the evaluation target region (step S3: yes), the first calculation unit 133 calculates an animal-derived value including the rare species (step S4).

In a case of determining that the rare species to be protected does not inhabit in the evaluation target region (step S3: no), the first calculation unit 133 calculates the animal-derived value of the normal species (step S5). The first calculation unit 133 outputs the calculated animal-derived value and the evaluation target region to the generation unit 135. Furthermore, the first calculation unit 133 outputs the evaluation target region to the second calculation unit 134.

When the evaluation target region is input from the first calculation unit 133, the second calculation unit 134 refers to the vegetation map DB 121, the cultural value DB 125, and the plant value DB 126 and calculates a plant-derived value of the evaluation target region (step S6). The second calculation unit 134 outputs the calculated plant-derived value to the generation unit 135.

To the generation unit 135, the land use type is input from the determination unit 132, the evaluation target region and the animal-derived value are input from the first calculation unit 133, and the plant-derived value is input from the second calculation unit 134. The generation unit 135 generates a display screen in which the land use type, the animal-derived value, and the plant-derived value are associated with the evaluation target region (step S7). The generation unit 135 outputs information regarding the generated display screen to the communication control unit 136.

When the information regarding the display screen is input from the generation unit 135, the communication control unit 136 transmits the input information regarding the display screen to the terminal device 10. The terminal device 10 displays the display screen on a display unit which is not illustrated on the basis of the information regarding the display screen received from the information processing device 100 (step S8). With this operation, the information processing device 100 can objectively evaluate an industrial value of the animal habitat. Furthermore, the information processing device 100 can evaluate natural environment preserving cost and a value of an ecosystem to be protected in comparison with each other. Furthermore, the information processing device 100 can provide the evaluation result of the industrial value of the animal habitat for land development, city planning, and to financial institutions which provide finance to those, travel agents, or the like. Furthermore, since the information processing device 100 comprehensively evaluates the values of the animals and plants in the evaluation target region, the number of steps in an evaluation work can be reduced. Furthermore, since the information processing device 100 evaluates a value based on the provisioning services, the regulating services, the habitat service, and the cultural services, a value of the evaluation target region can be evaluated from various aspects.

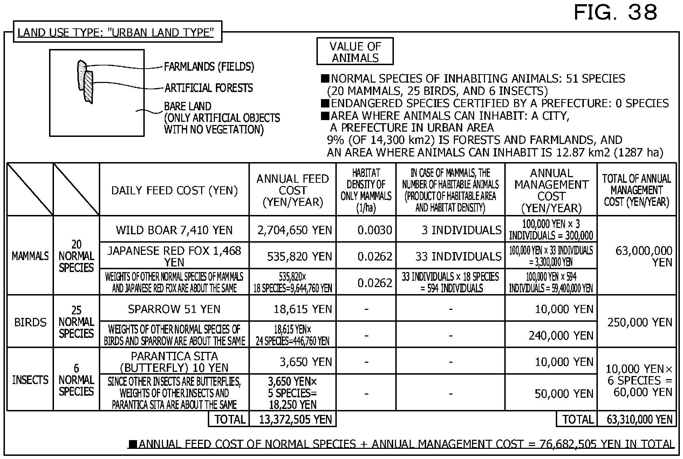

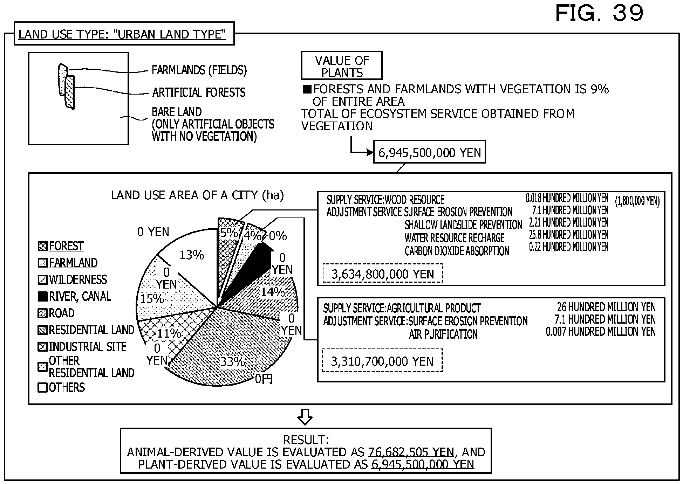

Subsequently, a specific example of evaluation will be described with reference to FIGs. 38 to 45. FIGs. 38 and 39 are diagrams illustrating an example of evaluation of an urban area. FIGs. 38 and 39 are an example of evaluation on A city of which the land use type is the urban land type. In FIG. 38, first, the information processing device 100 calculates an animal-derived value. The normal species of animals inhabiting in A city include 20 mammals, 25 birds, and 6 insects, and 51 species in total. Furthermore, none of endangered species certified by A prefecture to which A city belongs inhabits in A city. An area in A city where animals can inhabit, which is an area including both forests and farmlands, is nine% of the entire city. The information processing device 100 refers to the animal value DB 124 and calculates the feed cost and the management cost for a year as 76,682,505 yen, and this price is set as an animal-derived value. Note that details of the calculation are as indicated in FIG. 38. Therefore, description thereof is omitted.

In FIG. 39, the information processing device 100 calculates a plant-derived value. It is assumed that the area of the vegetation including both the forests and the farmlands in A city be nine% of the entire area of the city. The information processing device 100 refers to the plant value DB 126 and calculates the provisioning services and the regulating services in the forests and the farmlands. The calculation result is that the provisioning services and the regulating services in the forest are 3,634,800,000 yen and the provisioning services and the regulating services in the farmlands are 3,310,700,000 yen. The plant-derived value in A city is a sum of the above prices that is 6,945,500,000 yen. Therefore the evaluation result regarding A city is that the animal-derived value is 76,682,505 yen, the plant-derived value is 6,945,500,000 yen, and 7,022,182,505 yen in total.

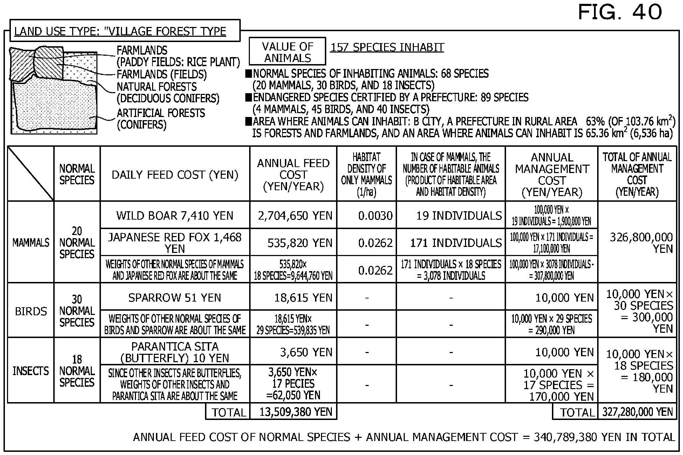

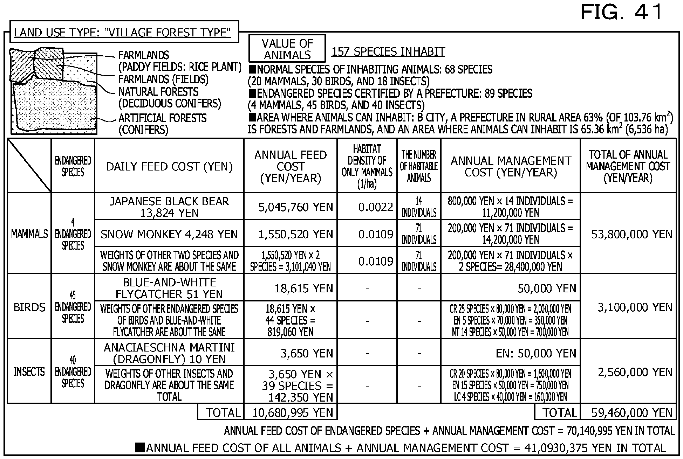

FIGs. 40 to 42 are diagrams illustrating an example of evaluation in the rural area. FIGs. 40 to 42 are examples of evaluation on B city of which the land use type is the village forest type. In FIGs. 40 and 41, first, the information processing device 100 calculates an animal-derived value. The normal species of animals inhabiting in B city include 20 mammals, 30 birds, and 18 insects and 68 species in total. Furthermore, from among the endangered species certified by A prefecture to which B city belongs, the species which inhabit in B city include 4 mammals, 45 birds, and 40 insects, and 89 species in total. An area in B city where animals can inhabit, which is an area including both forests and farmlands, is 63% of the entire city. The information processing device 100 refers to the animal value DB 124 and calculates the feed cost and the management cost for a year of the normal species as 340,789,380 yen.

Next, the information processing device 100 refers to the animal value DB 124 and calculates the feed cost and the management cost for a year of the endangered species (rare species) as 70,140,995 yen. When adding the feed costs and the management costs of the normal species and the rare species by the information processing device 100, the result is 410,930,375 yen, and this price is the animal-derived value excluding the cultural services. Note that details of the calculation of the feed costs and the management costs for a year of the normal species and the rare species are as indicated in FIGs. 40 and 41. Therefore, description thereof is omitted.

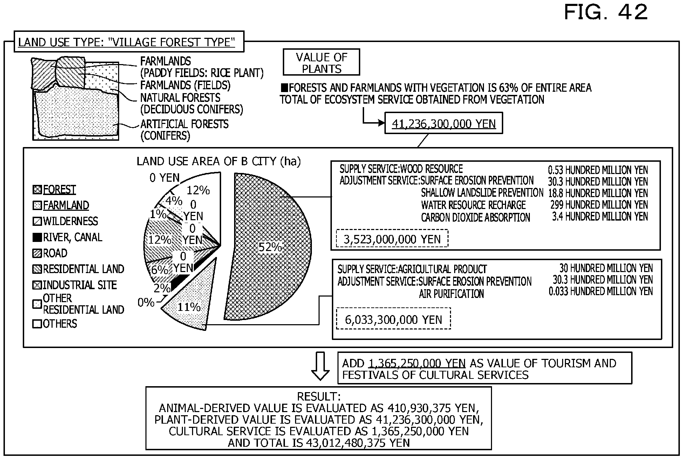

In FIG. 42, the information processing device 100 calculates a plant-derived value. It is assumed that the area of the vegetation including both the forests and the farmlands in B city be 63% of the entire area of the city. The information processing device 100 refers to the plant value DB 126 and calculates the provisioning services and the regulating services in the forests and the farmlands. The calculation result is that the provisioning services and the regulating services in the forest are 35,203,000,000 million yen and the provisioning services and the regulating services in the farmlands are 6,033,300,000 yen. The plant-derived value in B city is a sum of the above prices and is 41,236,300,000 yen.

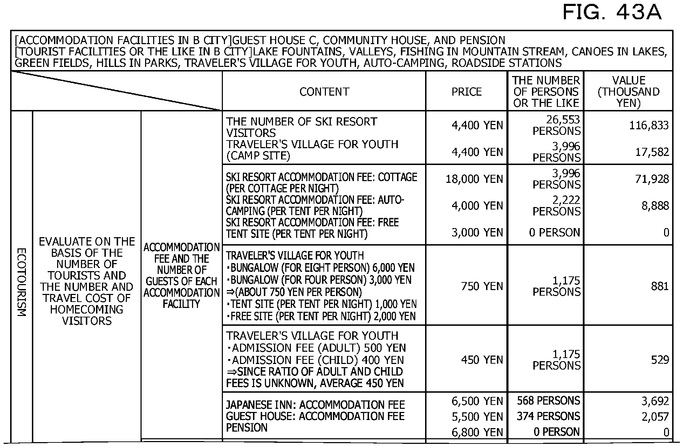

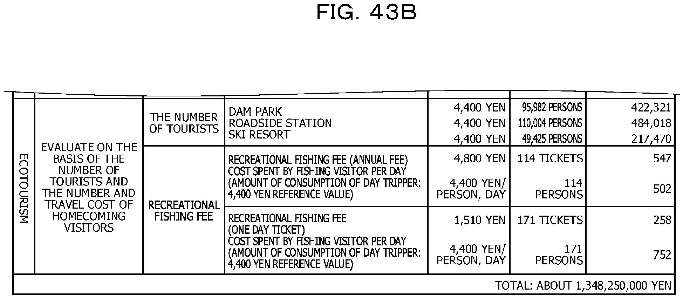

Subsequently, calculation of a value of cultural services in B city will be described with reference to FIGs. 43A to 45. FIGs. 43A and 43B are a diagram illustrating an example of calculation of a value of tourism. In FIGs. 43A and 43B, the information processing device 100 calculates the value of the tourism (ecotourism) among the values of the cultural services. It is assumed that there be a guest house C, a community house, a pension, or the like as accommodation facilities in B city. Furthermore, it is assumed that there be various facilities such as lake fountains, valleys, fishing in a mountain stream, canoes in lakes, or the like as tourist facilities or the like in B city. The information processing device 100 refers to the cultural value DB 125 and calculates the value of the tourism. As illustrated in FIGs. 43A and 43B, the calculation result indicates 1,348,250,000 yen.

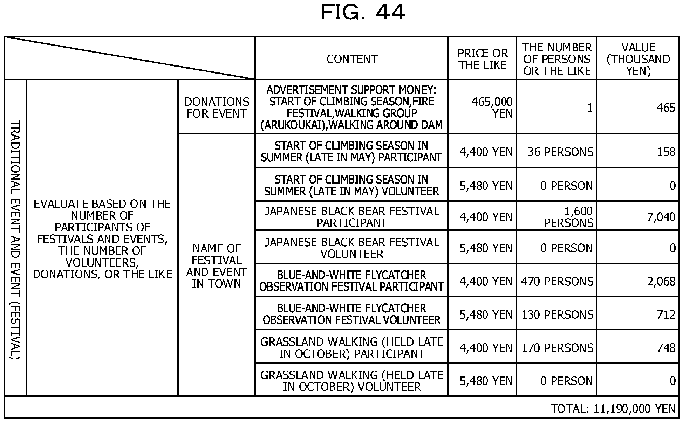

FIG. 44 is a diagram illustrating an example of calculation of a value of a festival. In FIG. 44, the information processing device 100 calculates the value of the festival (traditional event or event) among the values of the cultural services. As illustrated in FIG. 44, it is assumed that various nature-related festivals and events be held in B city. The information processing device 100 refers to the cultural value DB 125 and calculates the value of the festival. As illustrated in FIG. 44, the calculation result indicates 11,190,000 yen.

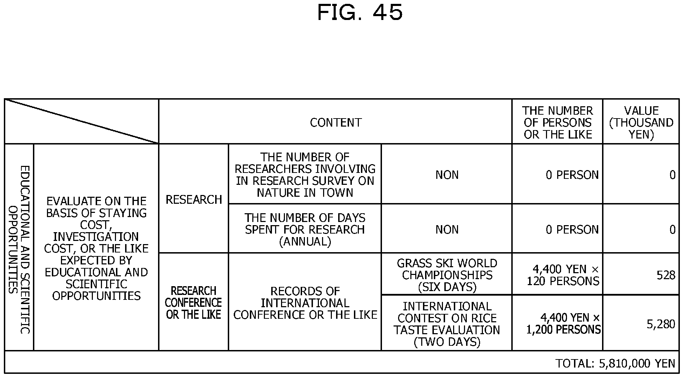

FIG. 45 is a diagram illustrating an example of calculation of values of educational and scientific opportunities. In FIG. 45, the information processing device 100 calculates the values of the educational and scientific opportunities among the values of the cultural services. As illustrated in FIG. 45, it is assumed that various tournaments or the like be held in B city. The information processing device 100 refers to the cultural value DB 125 and calculates the values of the educational and scientific opportunities. As illustrated in FIG. 45, the calculation result indicates 5,810,000 yen. The values of the cultural services illustrated in FIGs. 43A to 45 are 1,365,250,000 yen in total. Note that details of the calculation of the value of the cultural services are as indicated in FIGs. 43A to 45. Therefore, description thereof is omitted.

Therefore, regarding the evaluation result of B city, the animal-derived value is 410,930,375 yen, the plant-derived value is 41,236,300,000 yen, a value of an animal-plant-derived cultural service is 1,365,250,000 yen, and the total is 43,012,480,375 yen.

Note that, in a case where there is no data necessary for measurement of the value of the ecotourism, as information regarding recreations such as natural landscapes, festivals, events, or the like, data of the number of tourists in each prefecture and data of Tourism Satellite Account (TSA) used as national accounting for tourism can be used. These pieces of data are stored in the cultural value DB 125. For example, by using an added value for each industry in each prefecture of the tourism industry, an amount obtained by subtracting the intermediate input (production cost and labor) from the sales of the tourism industry can be used. Here, the measurement can be performed by using a rent obtained by subtracting industrial cost from a market price.

In this way, the animal habitat value evaluation system 1 includes the terminal device 10 and the information processing device 100. The terminal device 10 receives the input of the evaluation target region and transmits the input evaluation target region to the information processing device 100 and displays the information regarding the display screen received from the information processing device 100. The information processing device 100 receives and accepts the evaluation target region from the terminal device 10. Furthermore, the information processing device 100 refers to the habitat information DB 122 that stores habitat information of an animal in each region. In a case where it is determined that the animal inhabits in the received evaluation target region, the information processing device 100 calculates an animal-derived value. Furthermore, the information processing device 100 generates a display screen that displays the calculated animal-derived value and the evaluation target region in association with each other. Furthermore, the information processing device 100 transmits information regarding the generated display screen to the terminal device 10. As a result, the animal habitat value evaluation system 1 can evaluate the value of the animal habitat.

Furthermore, the information processing device 100 refers to the rare species DB 123 that stores an animal rare species to be protected in each region. In a case of determining that the animal rare species to be protected inhabits in the evaluation target region, the information processing device 100 calculates a value derived from the animal rare species. As a result, the information processing device 100 can calculate the animal-derived value including the animal rare species in the evaluation target region.

Furthermore, the information processing device 100 refers to the animal value DB 124 that stores breeding cost of an animal according to the endangered rank and calculates an animal-derived value according to the endangered rank. As a result, the information processing device 100 can calculate the animal-derived value including the animal rare species in the evaluation target region.

Furthermore, the information processing device 100 refers to the vegetation map DB 121 that stores the land use classification and the classification of the vegetation in association with each other and the plant value DB 126 that stores the value provided by the plant and calculates the plant-derived value in the evaluation target region on the basis of the received evaluation target region. Furthermore, the information processing device 100 generates a display screen in which the evaluation target region is displayed in association with the calculated animal-derived value and the calculated plant-derived value. As a result, the information processing device 100 can calculate the values derived from the animal and the plant in the evaluation target region.

Furthermore, the information processing device 100 refers to the cultural value DB 125 that stores cultural values of the animals and the plants and calculates the animal-derived value. Furthermore, the information processing device 100 refers to the cultural value DB 125 and calculates the plant-derived value. As a result, the information processing device 100 can calculate the animal-derived and plant-derived values of the evaluation target region including the value of the cultural services.

Furthermore, the information processing device 100 refers to the vegetation map DB 121 and determines the land use type of the evaluation target region on the basis of the received evaluation target region. Furthermore, the information processing device 100 generates a display screen in which the evaluation target region, the determined land use type, the calculated animal-derived value, and the calculated plant-derived value are displayed in association with each other. As a result, the information processing device 100 can display the animal-derived and the plant-derived values together with the land use type.

Furthermore, the information processing device 100 generates a display screen that displays the calculated animal-derived value and the calculated plant-derived value on the map indicating the evaluation target region. As a result, the information processing device 100 can display the animal-derived and the plant-derived values on the map.

Furthermore, the information processing device 100 generates a display screen that displays the calculated animal-derived value and the calculated plant-derived value as a graph. As a result, for example, the information processing device 100 can easily compare the animal-derived and the plant-derived values for each region. As a result, for example, the above information can be used for land use evaluation such as selection of a region, in which the value of the animals is high, which is not designated as a conservation area, prioritization of protected areas, or the like.

Furthermore, the information processing device 100 displays a screen in which the calculated animal-derived value and plant-derived value in a graph or a map. Therefore, it is possible to specify a region where the animals can easily live through the evaluation of the effect of local measures in a protection area to which conservation cost is applied and selection of a region in which effective measures are taken in a conservation policy and a land use policy.

Note that, in the embodiment, open data is used as a part of the vegetation map DB 121. However, the embodiment is not limited to this. For example, by analyzing an image such as a satellite image, an aerial image, or the like and classifying urban lands, cultivated lands, grasslands, conifers, broad-leaved trees, deciduous trees, evergreen trees, or the like, the images may be used as the vegetation information of the vegetation map DB 121.

Furthermore, in the embodiment, in the cultural value DB 125, each parameter is calculated separately for metropolitan areas and local cities. However, the embodiment is not limited to this. For example, each parameter may be calculated as separating the metropolitan area into four metropolitan areas, and the parameter may be calculated as obtaining an urban area according to conditions of railway and road maintenance. In a case where necessary data cannot be obtained, the data can be estimated from a DB that is measured by using the data such as Tourism Satellite Account (TSA) stored in the cultural value DB 125.

Furthermore, each of the components of the units illustrated in the drawings does not necessarily need to be physically configured as illustrated in the drawings. In other words, specific aspects of separation and integration of the respective components are not limited to the illustrated forms, and all or some of the components may be functionally or physically separated and integrated in an arbitrary unit depending on various loads and usage states. For example, the reception unit 131, the determination unit 132, and the communication control unit 136 may be integrated. Furthermore, the order of each illustrated processing is not limited to the order described above, and the processing may be concurrently executed or may be executed as changing the order in a range in which the processing content does not contradict.

Moreover, all or some of the various processing functions to be executed by each device may be executed by a CPU (or microcomputer such as MPU or micro controller unit (MCU)). Furthermore, all or some of the various processing functions may of course be executed by a program to be analyzed and executed by a CPU (or microcomputer such as MPU or MCU) or hardware using wired logic.

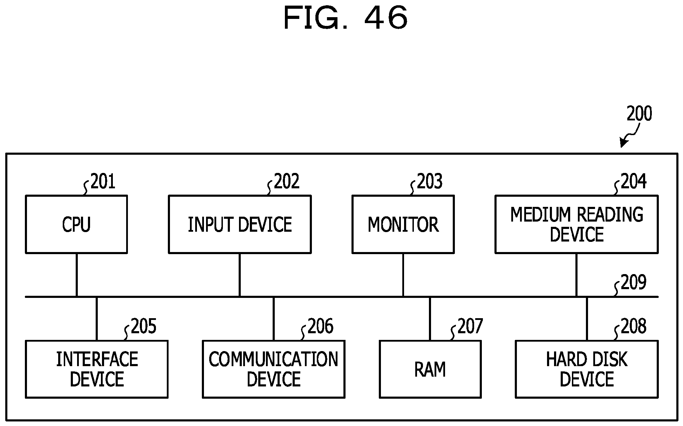

The various processing described in the embodiment described above can be implemented by executing the program which has been prepared in advance by a computer. Therefore, in the following description, an example of the computer which executes a program having a similar function to the above embodiment will be described. FIG. 46 is a diagram illustrating an example of a computer that executes an animal habitat value evaluation program.

As illustrated in Fig. 46, a computer 200 includes a CPU 201 which executes various calculation processing, an input device 202 which receives data input, and a monitor 203. Furthermore, the computer 200 includes a medium reading device 204 which reads a program and the like from a storage medium, an interface device 205 which connects to various devices, and a communication device 206 which wiredly or wirelessly connects to other information processing device and the like. Furthermore, the computer 200 also includes a random access memory (RAM) 207 that temporarily stores various types of information, and a hard disk device 208. Furthermore, each of the devices 201 to 208 is connected to a bus 209.

The hard disk device 208 stores an animal habitat value evaluation program having functions similar to those of processing units including the reception unit 131, the determination unit 132, the first calculation unit 133, the second calculation unit 134, the generation unit 135, and the communication control unit 136 illustrated in FIG. 1. Furthermore, the hard disk device 208 stores the vegetation map DB 121, the habitat information DB 122, the rare species DB 123, the animal value DB 124, the cultural value DB 125, the plant value DB 126, and various data used to implement the animal habitat value evaluation program. For example, the input device 202 receives inputs of various information such as operation information from an administrator of the computer 200. For example, the monitor 203 displays various screens such as a display screen to the administrator of the computer 200. The interface device 205 is connected to, for example, a printing device. The communication device 206, for example, has a function similar to that of the communication unit 110 illustrated in FIG. 1 and is connected to the network N and exchanges various information with the terminal device 10 and other information processing devices.

The CPU 201 reads each program stored in the hard disk device 208 and develops and executes the program on the RAM 207 to execute various processing. Furthermore, these programs can make the computer 200 function as the reception unit 131, the determination unit 132, the first calculation unit 133, the second calculation unit 134, the generation unit 135, and the communication control unit 136 illustrated in FIG. 1.

Note that it is not necessary for the hard disk device 208 to store the animal habitat value evaluation program. For example, the computer 200 may read and execute a program stored in a storage medium that can be read by the computer 200. The storage medium that is readable by the computer 200 corresponds to, for example, a portable recording medium such as a CD-ROM, a DVD disk, or a Universal Serial Bus (USB) memory, a semiconductor memory such as a flash memory, a hard disk drive, or the like. Furthermore, the animal habitat value evaluation program may be prestored in a device connected to a public line, the Internet, a LAN, or the like, and the computer 200 may read the animal habitat value evaluation program from the device to execute the animal habitat value evaluation program.

REFERENCE SIGNS LIST

1    animal habitat value evaluation system
10    terminal device
100    information processing device
110    communication unit
120    storage unit

121    vegetation map DB
122    habitat information DB
123    rare species DB
124    animal value DB
125    cultural value DB
126    plant value DB
130    control unit
131    reception unit
132    determination unit
133    first calculation unit
134    second calculation unit
135    generation unit
136    communication control unit
N      network

**Claims**

1.  An animal habitat value evaluation system comprising:

    a terminal device; and
    an information processing device, wherein
    the terminal device includes:

        a control unit that receives an input of an evaluation target region, transmits the input to the information processing device, and displays information regarding a display screen received from the information processing device, and
        the information processing device includes:

        a reception unit that receives and accepts the evaluation target region from the terminal device;
        a first calculation unit that refers to a habitat information database that stores animal habitat information in each region and calculates an animal-derived value in a case of determining that an animal inhabits in the received evaluation target region;
        a generation unit that generates a display screen in which the calculated animal-derived value and the evaluation target region are displayed in association with each other; and
        a communication control unit that transmits the information regarding the generated display screen to the terminal device.

2.  The animal habitat value evaluation system according to claim 1, wherein
    the first calculation unit refers to a rare species database that stores an animal rare species to be protected in each region and calculates a value derived from the animal rare species in a case of determining that the animal rare species inhabits to be protected inhabits in the evaluation target region.

3.  The animal habitat value evaluation system according to claim 2, wherein
    the first calculation unit refers to an animal value database that stores breeding cost of an animal according to an endangered rank and calculates an animal-derived value according to the endangered rank.

4.  The animal habitat value evaluation system according to any one of claims 1 to 3, wherein
    the information processing device includes:

        a second calculation unit that refers to a vegetation map database that stores land use classification and classification of vegetation in association with each other and a plant value database that stores a value provided by a plant and calculates a plant-derived value in the evaluation target region on a basis of the received evaluation target region, and
        the generation unit generates a display screen in which the evaluation target region is displayed in association with the calculated animal-derived value and the calculated plant-derived value.

5.  The animal habitat value evaluation system according to claim 4, wherein

the first calculation unit refers to a cultural value database that stores cultural values of an animal and a plant and calculates the animal-derived value, and
the second calculation unit refers to the cultural value database and calculates the plant-derived value.

6. The animal habitat value evaluation system according to claim 4, wherein
the information processing device includes:

a determination unit that refers to the vegetation map database and determines a land use type of the evaluation target region on a basis of the received evaluation target region, and
the generation unit generates a display screen in which the evaluation target region is displayed in association with the determined land use type, the calculated animal-derived value, and the calculated plant-derived value.

7. The animal habitat value evaluation system according to claim 4, wherein
the generation unit generates a display screen in which the calculated animal-derived value and the calculated plant-derived value are display on a map indicating the evaluation target region.

8. The animal habitat value evaluation system according to claim 4, wherein
the generation unit generates a display screen in which the calculated animal-derived value and the calculated plant-derived value are displayed in a graph.

9. An animal habitat value evaluation method for causing a computer to execute processing comprising:

receiving and accepting an input evaluation target region from a terminal device;
referring to a habitat information database that stores animal habitat information in each region and calculating a value derived from an animal in a case of determining that the animal inhabits in the received evaluation target region;
generating a display screen in which the calculated animal-derived value is displayed in association with the evaluation target region; and
transmitting information regarding the generated display screen to the terminal device.

10. An animal habitat value evaluation program for causing a computer to execute processing comprising:

receiving and accepting an input evaluation target region from a terminal device;
referring to a habitat information database that stores animal habitat information in each region and calculating a value derived from an animal in a case of determining that the animal inhabits in the received evaluation target region;
generating a display screen in which the calculated animal-derived value is displayed in association with the evaluation target region; and
transmitting information regarding the generated display screen to the terminal device.

# FIG. 1

1

100

INFORMATION PROCESSING DEVICE

N

10
TERMINAL
DEVICE

⋮

10
TERMINAL
DEVICE

110
COMMUNICATION
UNIT

130
CONTROL UNIT

131
RECEPTION
UNIT

132
DETERMINATION
UNIT

133
FIRST
CALCULATION
UNIT

134
SECOND
CALCULATION
UNIT

135
GENERATION
UNIT

136
COMMUNICATION
CONTROL UNIT

120
STORAGE UNIT

121
VEGETATION
MAP DB

122
HABITAT
INFORMATION DB

123
RARE SPECIES
DB

124
ANIMAL VALUE
DB

125
CULTURAL
VALUE DB

126
PLANT VALUE
DB

# FIG. 2A

~20

| MAJOR ITEMS OF ECOSYSTEM SERVICE | SMALL ITEM OF ECOSYSTEM SERVICE | QUANTIFICATION | SERVICE RELATED TO FLORA | SERVICE RELATED TO FAUNA |
|---|---|---|---|---|
| PROVISIONING SERVICES | AGRICULTURAL PRODUCTION | ◯(MARKET VALUE APPROACH) | ◯ | |
| | FORESTRY PRODUCTION | ◯(MARKET VALUE APPROACH) | ◯ | |
| | BIOMASS RESOURCE AND OTHER RESOURCES | ◯(MARKET VALUE APPROACH) | ◯ | ◯ |
| | ... | ... | ... | ... |
| REGULATING SERVICES | SURFACE EROSION PREVENTION | ◯(ALTERNATIVE METHOD) | ◯ | |
| | SHALLOW LANDSLIDE PREVENTION | ◯(ALTERNATIVE METHOD) | ◯ | |
| | SOIL EROSION PREVENTION | ◯(ALTERNATIVE METHOD) | ◯ | |
| | SOIL EROSION PREVENTION | ◯(MARKET VALUE APPROACH) | ◯ | |
| | POLLINATING | ◯(UTILIZE POLLINATION INSECT DEPENDENCE) | ◯ | ◯ |
| | CLIMATIC ADJUSTMENT | ◯(ALTERNATIVE METHOD) | ◯ | |
| | AIR PURIFICATION | ◯(ALTERNATIVE METHOD) | ◯ | |
| | WATER RESOURCE RESERVOIR (RECHARGE) | ◯(ALTERNATIVE METHOD) | ◯ | |
| | WATER QUALITY PURIFICATION | ◯(ALTERNATIVE METHOD) | ◯ | |
| | ... | ... | ... | ... |
| | | | | |

# FIG. 2B

| | | | | |
|---|---|---|---|---|
| HABITAT OR SUPPORTING SERVICES | WILD BIRD AND MAMMAL PROTECTION | ○(ALTERNATIVE METHOD) | ○ | ○ |
| | GENE POOL PROTECTION | ○(CONTINGENT VALUATION METHOD (CVM)) | ○ | ○ |
| | ... | ... | ... | ... |
| CULTURAL SERVICES | PROVISION OF RECREATION OPPORTUNITY (ECOTOURISM) | ○(TRAVEL COST METHOD)、 ○(MARKET VALUE APPROACH) | ○ | ○ |
| | LANDSCAPE AND LANDSCAPE PRESERVATION | ○(MARKET VALUE APPROACH)、 ○(CONTINGENT VALUATION METHOD (CVM)) | ○ | ○ |
| | TRADITIONAL EVENT (FESTIVAL) AND EVENT | ○(MARKET VALUE APPROACH) | ○ | ○ |
| | TRADITIONAL KNOWLEDGE AND TEACHING | -(QUALITATIVE EVALUATION) | ○ | |
| | EDUCATIONAL AND SCIENTIFIC OPPORTUNITIES OR THE LIKE | ○(MARKET VALUE APPROACH) | ○ | ○ |

# FIG. 3A

21

| CLASSIFICATION OF VEGETATION | EVERGREEN CONIFER FOREST (NATURAL FOREST) | DECIDUOUS CONIFER FOREST (NATURAL FOREST) | EVERGREEN BROAD-LEAVED TREES (NATURAL FOREST) | DECIDUOUS BROAD-LEAVED TREES (NATURAL FOREST) | EVERGREEN CONIFER AND EVERGREEN BROAD-LEAVED TREES (NATURAL FOREST) | EVERGREEN CONIFER AND DECIDUOUS BROAD-LEAVED TREES (NATURAL FOREST) | EVERGREEN CONIFER FOREST (SECONDARY FOREST) | DECIDUOUS BROAD-LEAVED TREES (SECONDARY FOREST) | EVERGREEN BROAD-LEAVED TREES (SECONDARY FOREST) | EVERGREEN CONIFER AND DECIDUOUS BROAD-LEAVED TREES (SECONDARY FOREST) |
|---|---|---|---|---|---|---|---|---|---|---|
| LAND USE CLASSIFICATION | FOREST (NATURAL FOREST) | FOREST (NATURAL FOREST) | FOREST (NATURAL FOREST) | FOREST (NATURAL FOREST) | FOREST (NATURAL FOREST) | FOREST (NATURAL FOREST) | FOREST (NATURAL FOREST) | FOREST (NATURAL FOREST) | FOREST (NATURAL FOREST) | FOREST (NATURAL FOREST) |

| CLASSIFICATION OF VEGETATION | EVERGREEN CONIFER FOREST (ARTIFICIAL FOREST) | DECIDUOUS CONIFER FOREST (ARTIFICIAL FOREST) | EVERGREEN BROAD-LEAVED TREES (ARTIFICIAL FOREST) | DECIDUOUS BROAD-LEAVED TREES (ARTIFICIAL FOREST) | NATURAL SCRUB | COASTAL SCRUB AND FOREST | BAMBOO FOREST |
|---|---|---|---|---|---|---|---|
| LAND USE CLASSIFICATION | FOREST (ARTIFICIAL FOREST) | FOREST (ARTIFICIAL FOREST) | FOREST (ARTIFICIAL FOREST) | FOREST (ARTIFICIAL FOREST) | FOREST (ARTIFICIAL FOREST) | FOREST (ARTIFICIAL FOREST) | FOREST (ARTIFICIAL FOREST) |

| CLASSIFICATION OF VEGETATION | ALPINE VEGETATION | SNOW PATH COMMUNITY | NATURAL GRASSLAND (COAST SAND DUNE) | COASTAL CLIFF HERB COMMUNITY | OTHER NATURAL GRASSLANDS | SECONDARY GRASSLAND (HIGH) | SECONDARY GRASSLAND (LOW) | ARTIFICIAL GRASSLAND SUCH AS GOLF COURSE | ARTIFICIAL GRASSLAND (DOES NOT INCLUDE GOLD COURSE) | ARROW BAMBOO |
|---|---|---|---|---|---|---|---|---|---|---|
| LAND USE CLASSIFICATION | GRASSLAND | GRASSLAND | GRASSLAND | GRASSLAND | GRASSLAND | GRASSLAND | GRASSLAND | GRASSLAND | GRASSLAND | GRASSLAND |

# FIG. 3B

| CLASSIFICATION OF VEGETATION | PADDY FIELD | ABANDONED PADDY FIELD | DRY FIELD | FALLOW DRY FIELD | ROADSIDE | THEA SINENSIS GARDEN | FRUITS, MULBERRY GARDEN, OTHERS | URBAN AND RESIDENTIAL DISTRICT WITH MANY TREES | URBAN LAND | ARTIFICIAL BARE LAN |
|---|---|---|---|---|---|---|---|---|---|---|
| LAND USE CLASSIFICATION | AGRICULTURAL LAND (CULTIVATED LAND OR THE LIKE) | AGRICULTURAL LAND (CULTIVATED LAND OR THE LIKE) | AGRICULTURAL LAND (CULTIVATED LAND OR THE LIKE) | AGRICULTURAL LAND (CULTIVATED LAND OR THE LIKE) | AGRICULTURAL LAND (CULTIVATED LAND OR THE LIKE) | AGRICULTURAL LAND (CULTIVATED LAND OR THE LIKE) | AGRICULTURAL LAND (CULTIVATED LAND OR THE LIKE) | RESIDENTIAL AREA | RESIDENTIAL AREA | RESIDENTIAL AREA |

| CLASSIFICATION OF VEGETATION | NATURAL GRASSLAND (SALT MARSH) | MARSHY MEADOW | WATER WEED (FRESH WATER) | SEAGRASS | MANGROVE | NATURAL BARE LAND | LIMESTONE VEGETATION | VOLCANO DESERT AND SOLFATARA FORMATION | CLIFF | CORAL REEF VEGETATION | OPEN WATER | UNKNOWN |
|---|---|---|---|---|---|---|---|---|---|---|---|---|
| LAND USE CLASSIFICATION | WETLAND | WETLAND | WATERFRONT AND SEASIDE | WATERFRONT AND SEASIDE | WATERFRONT AND SEASIDE | SPECIAL MATRIX | SPECIAL MATRIX | SPECIAL MATRIX | SPECIAL MATRIX | SPECIAL MATRIX | OPEN WATER | UNKNOWN |

## FIG. 4A

22

| LEGEND CODE | LEGEND NAME | VEGETATION NATURALNESS | CLASSIFICATION OF VEGETATION |
|---|---|---|---|
| 010100 | PINUS-PUMILA COMMUNITY | 9 | FOREST (NATURAL FOREST) |
| 010102 | LEDO-PINETUM PUMILAE | 9 | FOREST (NATURAL FOREST) |
| 010201 | VACCINIO-SALIX REINII | 9 | FOREST (NATURAL FOREST) |
| 020102 | ARCTOO-VACCINIETUM ULIGINOSI | 10 | GRASSLAND (NATURAL GRASSLAND) |
| 020402 | CALLIANTHEMUM HONDOENSE COMMUNITY | 10 | GRASSLAND (NATURAL GRASSLAND) |
| 020604 | MELANDRIO-CERASTIETUM SCHIZOPETALI | 10 | GRASSLAND (NATURAL GRASSLAND) |
| 020700 | SERPENTINE AREA VEGETATION (I) | 10 | GRASSLAND (NATURAL GRASSLAND) |
| 020800 | ALPINE HEATHLAND AND WIND-EXPOSED GRASSLAND (INCLUDING SERPENTINE AREA VEGETATION) | 10 | GRASSLAND (NATURAL GRASSLAND) |
| 020901 | CALAMAGROSTIETUM SACHALINENSIS COMMUNITY (H PREFECTURE) | 10 | GRASSLAND (NATURAL GRASSLAND) |
| 040105 | PICEETUM GLEHNII-PINUS PARVIFLORA VAR. PENTAPHYLLA COMMUNITY (H PREFECTURE) | 9 | FOREST (NATURAL FOREST) |
| 050106 | ABIES VEITCHII COMMUNITY | 9 | FOREST (NATURAL FOREST) |
| 050107 | CARICI-PICEETUM HONDOENSIS COMMUNITY | 9 | FOREST (NATURAL FOREST) |
| 050108 | PINUS PARVIFLORA VAR. PENTAPHYLLA-PICEETUM GLEHNII COMMUNITY | 9 | FOREST (NATURAL FOREST) |
| 050109 | MAIANTHO-TSUGETUM DIVERSIFOLIAE COMMUNITY | 9 | FOREST (NATURAL FOREST) |
| 050110 | ALCOCK SPRUCE COMMUNITY | 9 | FOREST (NATURAL FOREST) |
| 060106 | BETULA ERMANII COMMUNITY | 9 | FOREST (NATURAL FOREST) |
| 060108 | CALAMAGROSTIO-BETULETUM ERMANII COMMUNITY | 9 | FOREST (NATURAL FOREST) |
| 060109 | ACERI AUSTRALIS-BETULETUM ERMANII COMMUNITY | 9 | FOREST (NATURAL FOREST) |
| 060110 | CINNO LATIFOLIAE-CERCIDIPHYLLETUM MAGNIFICI COMMUNITY | 9 | FOREST (NATURAL FOREST) |
| 060111 | SMILACINO HONDOENSIS-ALNETUM MATSUMURAE COMMUNITY | 9 | FOREST (NATURAL FOREST) |

FIG. 4B

| 060300 | ATHYRIO BREVIFRONDIS-WEIGELION MIDDENDORFFIANAE | 9 | FOREST (NATURAL FOREST) |
|---|---|---|---|
| 060301 | BETULA ERMANII ASSOCIATION (II) | 9 | FOREST (NATURAL FOREST) |
| 060304 | ALNETUM MAXIMOWICZII ASSOCIATION (H PREFECTURE) | 9 | FOREST (NATURAL FOREST) |
| 060305 | SASA SPP.-BETULA ERMANII ASSOCIATION (H PREFECTURE) | 9 | FOREST (NATURAL FOREST) |
| 060500 | ROCKY LAND WIND-EXPOSED SCRUB (II) | 9 | FOREST (NATURAL FOREST) |
| 070000 | ALTHERBOSA AND WIND-EXPOSED GRASSLAND | 10 | GRASSLAND (NATURAL GRASSLAND) |
| 070105 | CIRSIO SENJOENSIS-ANGELICETUM PUBESCENTIS MATSUMURAE COMMUNITY | 10 | GRASSLAND (NATURAL GRASSLAND) |
| 070300 | LIGULARIETUM HODGSONII ASSOCIATION | 10 | GRASSLAND (NATURAL GRASSLAND) |
| 070400 | VERONICASTRUM JAPONICUM VAR. AUSTRAL ASSOCIATION | 10 | GRASSLAND (NATURAL GRASSLAND) |
| 070500 | JAPANESE DEER FEEDING DAMAGE GRASSLAND (II) | 4 | GRASSLAND (SECONDARY GRASSLAND (LOW)) |
| 080201 | PICEETUM GLEHNII (SELECTION CUTTING FOREST) | 7 | FOREST (SECONDARY FOREST) |
| 090301 | LASTREA QUELPAERTENSIS-SENECIO CANNABIFOLIUS ASSOCIATION | 4 | GRASSLAND (SECONDARY GRASSLAND (LOW)) |
| 110302 | ACER MONO VAR. GLABRUM-ZELKOVA SERRATA COMMUNITY | 9 | FOREST (SECONDARY FOREST) |
| ... | ... | ... | ... |

# FIG. 5

| VEGETATION NATURALNESS | |
|---|---|
| 10 | AREA WHERE PLANT SOCIETY HAVING SINGLE-LAYER OF NATURAL VEGETATION SUCH AS ALPINE HEATHLAND, WIND-EXPOSED GRASSLAND, NATURAL GRASSLAND, OR THE LIKE IS FORMED |
| 9 | AREA WHERE PLANT SOCIETY HAVING MULTI-LAYERS OF NATURAL VEGETATION SUCH AS PICEA JEZOENSIS-ABIES SACHALINENSIS ASSOCIATION, FAGETUM CRENATAE, OR THE LIKE IS FORMED |
| 8 | AREA PARTICULARLY CLOSE TO NATURAL VEGETATION EVEN IN A CASE OF SECONDARY VEGETATION SUCH AS FAGUS CRENATA-QUERCUS MONGOLICA VAR. GROSSESERRATA REGENERATED FOREST, CASTANOPSIS, QUERCUS COPPICE FOREST, OR THE LIKE |
| 7 | SECONDARY VEGETATION AREA THAT IS CALLED SECONDARY FOREST IN GENERAL SUCH AS CASTANEO-QUERCETUM CRISPULAE COMMUNITY, QUERCETUM ACUTISSIMO-SERRATAE COMMUNITY, OR THE LIKE |
| 6 | FORESTS SUCH AS EVERGREEN CONIFERS, DECIDUOUS CONIFERS, EVERGREEN BROAD-LEAVED TREES, OR THE LIKE |
| 5 | GRASSLAND OF TALL TREES SUCH AS SASA SPP. COMMUNITY, MISCANTHION SINENSIS COMMUNITY, OR THE LIKE |
| 4 | GRASSLAND OF SHORT TREES SUCH AS ZOYSION JAPONICAE COMMUNITY |
| 3 | ORCHARDS SUCH AS ORCHARD, MULBERRY GARDEN, THEA SINENSIS GARDEN, FIELD WEED COMMUNITIES, OR THE LIKE |
| 2 | CULTIVATED LAND SUCH AS FIELD AND PADDY FIELD, URBAN AND RESIDENTIAL DISTRICT WITH MANY TREES |
| 1 | AREA WITH ALMOST NO VEGETATION SUCH AS URBAN DISTRICT WITH A FEW TREES, LAND CONSTRUCTED FOR RESIDENCE AND FACTORY, OR THE LIKE |

# FIG. 6

122

| SPECIES NAME | 5-km MESH COD | CONFIRMATION SURVEY |
|---|---|---|
| CERVUS NIPPON | 39272127 | CONFIRMED IN SECOND AND SIXTH SURVEYS |
| CERVUS NIPPON | 39272177 | CONFIRMED IN SECOND AND SIXTH SURVEYS |
| CERVUS NIPPON | 39272222 | CONFIRMED IN SECOND AND SIXTH SURVEYS |
| CERVUS NIPPON | 44296472 | CONFIRMED ONLY IN SIXTH SURVEY |
| CERVUS NIPPON | 45302372 | CONFIRMED ONLY IN SIXTH SURVEY |
| CERVUS NIPPON | 45302377 | CONFIRMED IN SECOND AND SIXTH SURVEYS |
| CERVUS NIPPON | 45302472 | CONFIRMED ONLY IN SIXTH SURVEY |
| CERVUS NIPPON | 45302477 | CONFIRMED ONLY IN SIXTH SURVEY |
| CERVUS NIPPON | 45303322 | CONFIRMED IN SECOND AND SIXTH SURVEYS |
| CERVUS NIPPON | 45303327 | CONFIRMED IN SECOND AND SIXTH SURVEYS |
| CERVUS NIPPON | 45303372 | CONFIRMED ONLY IN SIXTH SURVEY |
| CERVUS NIPPON | 45303377 | CONFIRMED IN SECOND AND SIXTH SURVEYS |
| CERVUS NIPPON | 45303422 | CONFIRMED IN SECOND AND SIXTH SURVEYS |
| CERVUS NIPPON | 45303427 | CONFIRMED IN SECOND AND SIXTH SURVEYS |
| CERVUS NIPPON | 45303472 | CONFIRMED IN SECOND AND SIXTH SURVEYS |
| CERVUS NIPPON | 45303477 | CONFIRMED IN SECOND AND SIXTH SURVEYS |
| CERVUS NIPPON | 45303522 | CONFIRMED ONLY IN SIXTH SURVEY |
| CERVUS NIPPON | 45303572 | CONFIRMED ONLY IN SIXTH SURVEY |
| CERVUS NIPPON | 45304322 | CONFIRMED IN SECOND AND SIXTH SURVEYS |
| CERVUS NIPPON | 45304327 | CONFIRMED IN SECOND AND SIXTH SURVEYS |
| CERVUS NIPPON | 45304372 | CONFIRMED IN SECOND AND SIXTH SURVEYS |
| CERVUS NIPPON | 45304377 | CONFIRMED IN SECOND AND SIXTH SURVEYS |
| ... | ... | ... |

# FIG. 7A

123a
(123a1)

| PREFECTURE | CLASIFICATION GROUP | JAPANESE NAME | SCIENTIFIC NAME | ENDANGERED RANK (SPECIES TO BE PROTECTED, SPECIALIST) | | | | |
|---|---|---|---|---|---|---|---|---|
| | | | WEIGHTING COFFICIENT(α) | 10 | 9 | 8 | 7 | 6 |
| | | | | EXTINCT | EXTINCT IN WILD | CRITICALLY ENDANGERED | ENDANGERED | VULNERABLE |
| | | | | Extinct(EX) | Extinct in Wild(EW) | Critically Endangered (CR) | Endangered (EN) | Vulnerable (VU) |
| A PREFECTURE | MAMMAL | KAWANEZUMI | Chimarrogale platycephala | | | | | |
| A PREFECTURE | MAMMAL | HIMEHIMIZU | Dymecodon pilirostris | | | ○ | | |
| A PREFECTURE | MAMMAL | KOUBEMOGURA | Mogera wogura | | | | | |
| ... | ... | ... | ... | ... | ... | ... | ... | ... |
| A PREFECTURE | MAMMAL | NIHONZARU | Macaca fuscata | | | | | |
| A PREFECTURE | MAMMAL | HONDOMOMONGA | Pteromys momonga | | | | | |
| A PREFECTURE | MAMMAL | YAMANE | Glirulus japonicus | | | | | |
| A PREFECTURE | MAMMAL | OOKAMI | Canis lupus | ○ | | | | |
| A PREFECTURE | MAMMAL | TSUKINOWAGUMA | Ursus thibetanus japonicus | | | ○ | | |
| A PREFECTURE | MAMMAL | NIHONKAWAUSO | Lutra nippon | ○ | | | | |
| A PREFECTURE | MAMMAL | NIHONKAMOSHIKA | Capricornis crispus | | | | | |

FIG. 7B

| A PREFECTURE | MAMMAL | SUNAMERI | Neophocaena phocaenoides | | | ○ | | |
|---|---|---|---|---|---|---|---|---|
| A PREFECTURE | MAMMAL | CHICHIBUKOUMORI | Barbastella leucomelas | | | ○ | | |
| A PREFECTURE | MAMMAL | USAGIKOUMORI | Plecotus auritus | | | | | |
| A PREFECTURE | MAMMAL | NIHONRISU | Sciurus lis | | | | | |
| A PREFECTURE | MAMMAL | SUMISUNEZUMI | Eothenomys smithii | | | | | |
| A PREFECTURE | MAMMAL | NIHONANAGUMA | Meles anakuma | | | | | |
| ... | ... | ... | ... | ... | ... | ... | ... | ... |

## FIG. 8A

123a
(123a2)

| PREFECTURE | CLASIFICATION GROUP | JAPANESE NAME | SCIENTIFIC NAME | ENDANGERED RANK (SPECIES TO BE PROTECTED, SPECIALIST) | | | | NORMAL SPECIES |
|---|---|---|---|---|---|---|---|---|
| | | | WEIGHTING COFFICIENT($\alpha$) | 5 | 4 | 3 | 2 | 1 |
| | | | | NEAR THREATENED | LEAST CONCERN | DATA DEFICIENT | THREATENED LOCAL POPULATION | NORMAL SPECIES |
| | | | | Extinct(EX) | Extinct in Wild(EW) | Critically Endangered (CR) | Endangered (EN) | Vulnerable (VU) |
| A PREFECTURE | MAMMAL | KAWANEZUMI | Chimarrogale platycephala | ○ | | | | |
| A PREFECTURE | MAMMAL | HIMEHIMIZU | Dymecodon pilirostris | | | | | |
| A PREFECTURE | MAMMAL | KOUBEMOGURA | Mogera wogura | ○ | | | | |
| ... | ... | ... | ... | ... | ... | ... | ... | ... |
| A PREFECTURE | MAMMAL | NIHONZARU | Macaca fuscata | | | | ○ | |
| A PREFECTURE | MAMMAL | HONDOMOMONGA | Pteromys momonga | | | | | |
| A PREFECTURE | MAMMAL | YAMANE | Glirulus japonicus | | | | | |
| A PREFECTURE | MAMMAL | OOKAMI | Canis lupus | | | | | |
| A PREFECTURE | MAMMAL | TSUKINOWAGUMA | Ursus thibetanus japonicus | | | | | |
| A PREFECTURE | MAMMAL | NIHONKAWAUSO | Lutra nippon | | | | | |
| A PREFECTURE | MAMMAL | NIHONKAMOSHIKA | Capricornis crispus | ○ | | | | |

FIG. 8B

| A PREFECTURE | MAMMAL | SUNAMERI | Neophocaena phocaenoides | | | | | |
|---|---|---|---|---|---|---|---|---|
| A PREFECTURE | MAMMAL | CHICHIBUKOUMORI | Barbastella leucomelas | | | | | |
| A PREFECTURE | MAMMAL | USAGIKOUMORI | Plecotus auritus | | | ○ | | |
| A PREFECTURE | MAMMAL | NIHONRISU | Sciurus lis | ○ | | | | |
| A PREFECTURE | MAMMAL | SUMISUNEZUMI | Eothenomys smithii | ○ | | | | |
| A PREFECTURE | MAMMAL | NIHONANAGUMA | Meles anakuma | | | | | ○ |
| ... | ... | ... | ... | ... | ... | ... | ... | ... |

# FIG. 9

| | | | | ENDANGERED RANK (SPECIES TO BE PROTECTED, SPECIALIST) | | | | NORMAL SPECIES |
|---|---|---|---|---|---|---|---|---|
| 123b | | | WEIGHTING COFFICIENT($\alpha$) | 10 | 9 | 8 | | 1 |
| PREFECTURE | CLASIFICATION GROUP | JAPANESE NAME | SCIENTIFIC NAME | EXTINCT<br>Extinct(EX) | EXTINCT IN WILD<br>Extinct in Wild(EW) | CRITICALLY ENDANGERED<br>Critically Endangered (CR) | | NORMAL SPECIES<br>Vulnerable (VU) |
| ... | ... | ... | ... | ... | ... | ... | ... | ... |
| B PREFECTURE | MAMMAL | NIHONKAMOSHIKA | Capricornis crispus | | | ○ | | |
| ... | ... | ... | ... | ... | ... | ... | ... | ... |

# FIG. 10

123c

| ENDANGERED RANK / EVALUATION YEAR | EXTINCT: Extinct (EX) | CRITICALLY ENDANGERED: Critically Endangered (CR) | ENDANGERED: Endangered (EN) | VULNERABLE: Vulnerable (VU) | NEAR THREATENED: Near Threatened(NT) | LEAST CONCERN:Least Concern(LC) | DATA DEFICIENT: Data Deficient (DD) | THREATENED LOCAL POPULATION: Threatened Local Population(LP) | TOTAL NUMBER OF SPECIES |
|---|---|---|---|---|---|---|---|---|---|
| EVALUATION START YEAR (1991) | 5 | 14 | 3 | 11 | 32 | - | - | 13 | 78 |
| 1998 | 4 | 12 | 20 | 16 | 16 | - | 9 | 12 | 89 |
| 2007 | 4 | 15 | 20 | 7 | 18 | - | 9 | 19 | 92 |
| 2012 | 7 | 12 | 12 | 10 | 17 | - | 5 | 22 | 85 |
| LATEST EVALUATION YEAR (2017) | 7 | 12 | 12 | 9 | 18 | - | 5 | 23 | 86 |

# FIG. 11

123d

| CLASSIFICATION GROUP | Extinct (EX) | EW | CR | EN | VU | NT | DD | REDUCED SPECIES | RARE SPECIES | CAUTION NEEDED | ATTENTION NEEDED | DATA DEFICIENT | UNKNOWN | THREATENED LOCAL POPULATION | TOTAL |
|---|---|---|---|---|---|---|---|---|---|---|---|---|---|---|---|
| MAMMALS | 4 | 0 | 8 | 0 | 0 | 6 | 10 | 0 | 0 | 0 | 0 | 2 | 0 | 1 | 31 |
| BIRDS | 2 | 0 | 24 | 0 | 0 | 41 | 22 | 17 | 9 | 0 | 3 | 2 | 1 | 1 | 122 |
| REPTILES | 0 | 0 | 1 | 0 | 0 | 1 | 1 | 0 | 0 | 5 | 0 | 0 | 0 | 0 | 8 |
| AMPHIBIANS | 0 | 0 | 3 | 0 | 0 | 3 | 1 | 0 | 1 | 4 | 0 | 0 | 0 | 0 | 12 |
| FISHES | 2 | 2 | 0 | 7 | 6 | 3 | 10 | 0 | 0 | 0 | 4 | 14 | 0 | 0 | 48 |
| INSECTS | 72 | 0 | 72 | 21 | 19 | 122 | 111 | 0 | 40 | 37 | 29 | 115 | 13 | 0 | 651 |
| PLANTS | 141 | 1 | 41 | 242 | 146 | 115 | 71 | 0 | 0 | 0 | 6 | 27 | 0 | 0 | 790 |
| TOTAL | 221 | 3 | 149 | 270 | 171 | 291 | 226 | 17 | 50 | 46 | 42 | 160 | 14 | 2 | 1662 |

# FIG. 12A

123e

| No. | JAPANESE NAME | SCIENTIFIC NAME | ENDANGERED RANK | |
|---|---|---|---|---|
| 1 | KAWANEZUMI | Chimarrogale platycephala | NEAR THREATENED | NT |
| 2 | HIMEHIMIZU | Dymecodon pilirostris | CRITICALLY ENDANGERED AND ENDANGERED | CR+EN |
| 3 | KOUBEMOGURA | Mogera wogura | NEAR THREATENED | NT |
| 4 | KOKIKUGASHIRAKOUMORI | Rhinolophus cornutus | VULNERABLE | VU |
| 5 | KIKUGASHIRAKOUMORI | Rhinolophus ferrumequinum | CRITICALLY ENDANGERED AND ENDANGERED | CR+EN |
| 6 | MOMOJIROKOUMORI | Myotis macrodactylus | NEAR THREATENED | NT |
| 7 | MORIABURAKOUMORI | Pipistrellus endoi | CRITICALLY ENDANGERED AND ENDANGERED | CR+EN |
| 8 | YAMAKOUMORI | Nyctalus aviator | VULNERABLE | VU |
| 9 | HINAKOUMORI | Vespertilio superans | VULNERABLE | VU |
| 10 | YUBINAGAKOUMORI | Miniopterus schreibersi | VULNERABLE | VU |
| 11 | KOTENGUKOUMORI | Murina ussuriensis | CRITICALLY ENDANGERED AND ENDANGERED | CR+EN |
| 12 | NIHONTENGUKOUMORI | Murina hilgendorfi | CRITICALLY ENDANGERED AND ENDANGERED | CR+EN |
| 13 | OHIKIKOUMORI | Tadarida insignis | DATA DEFICIENT | DD |
| 14 | NIHONZARU | Macaca fuscata | THREATENED LOCAL POPULATION | LP |
| 15 | HONDOMOMONGA | Pteromys momonga | VULNERABLE | VU |
| 16 | YAMANE | Glirulus japonicus | VULNERABLE | VU |
| 17 | OOKAMI | Canis lupus | EXTINCT | EX |
| 18 | HATANEZUMI | Microtus montebelli | NEAR THREATENED | NT |
| 19 | KAYANEZUMI | Micromys minutus | NEAR THREATENED | NT |

# FIG. 12B

| 20 | KITSUNE | Vulpes vulpes | NEAR THREATENED | NT |
|---|---|---|---|---|
| 21 | ITACHI | Mustela itatsi | NEAR THREATENED | NT |
| 22 | OKOJO | Mustela erminea | EXTINCT | EX |
| 23 | NIHONASHIKA | Zalophus japonicus | EXTINCT | EX |
| 24 | TSUKINOWAGUMA | Ursus thibetanus japonicus | CRITICALLY ENDANGERED AND ENDANGERED | CR+EN |
| 25 | NIHONKAWAUSO | Lutra nippon | EXTINCT | EX |
| 26 | NIHONKAMOSHIKA | Capricornis crispus | NEAR THREATENED | NT |
| 27 | SUNAMERI | Neophocaena phocaenoides | CRITICALLY ENDANGERED AND ENDANGERED | CR+EN |
| 28 | CHICHIBUKOUMORI | Barbastella leucomelas | CRITICALLY ENDANGERED AND ENDANGERED | CR+EN |
| 29 | USAGIKOUMORI | Plecotus auritus | DATA DEFICIENT | DD |
| 30 | NIHONRISU | Sciurus lis | NEAR THREATENED | NT |
| 31 | SUMISUNEZUMI | Eothenomys smithii | NEAR THREATENED | NT |
| ... | ... | ... | ... | ... |

# FIG. 13

123f

| | | ENDANGERED RANK (SPECIES TO BE PROTECTED, SPECIALIST) | | | | | | | | | NORMAL SPECIES |
|---|---|---|---|---|---|---|---|---|---|---|---|
| | WEIGHTING COEFFICIENT ($\alpha$) | 10 | 9 | 8 | 7 | 6 | 5 | 4 | 3 | 2 | 1 |
| JAPANESE NAME | [CIRTIFICATION FOR EACH LEVEL] (1) WORLD (CIRTIFICATION BY IUCN) (2) COUNTRY LEVEL (3) CIRTIFICATION LEVEL (PREFECTURE) | EXTINCT | EXTINCT IN WILD | CRITICALLY ENDANGERED | ENDANGERED | VULNERABLE | NEAR THREATENED | LEAST CONCERN | DATA DEFICIENT | THREATENED LOCAL POPULATION | NORMAL SPECIES |
| | | (EX) | (EW) | (CR) | (EN) | (VU) | (NT) | (LC) | (DD) | (LP) | Generalist |
| NIHON-KAMOSHIKA | (1)LC (2) NORMAL SPECIES (NO CIRTIFICATION) (3)CERTIFIED BY 24 PREFECTURES | | FOUR PREFECTURES (E PREFECTURE, F PREFECTURE, ...) | TWO PREFECTURES (B PREFECTURE, ...) | THREE PREFECTURES (G PREFECTURE, H PREFECTURE, ...) | | FIVE PREFECTURES (A PREFECTURE, C PREFECTURE, ...) | [WORLD] FOUR PREFECTURES (D PREFECTURE, ...) | SIX PREFECTURES (I PREFECTURE, J PREFECTURE, ...) | | 23 PREFECTURES (L PREFECTURE, ...) |

# FIG. 14A

123g

| CLASSIFICATION GROUP | JAPANESE NAME | SCIENTIFIC NAME | ENDANGERED RANK |
|---|---|---|---|
| BIRDS | UZURA | Cotumix japonica | VULNERABLE (NON-BREEDING SEASON) |
| BIRDS | YAMADORI | Syrmaticus soemmerringii | VULNERABLE (BREEDING SEASON) VULNERABLE (NON-BREEDING SEASON) |
| BIRDS | UMIAISA | Mergus serrator | NEAR THREATENED (NON-BREEDING SEASON) |
| BIRDS | HIMEU | Phalacrocorax pelagicus pelagicus | NEAR THREATENED (NON-BREEDING SEASON) |
| BIRDS | UMIU | Phalacrocorax capillatus | NEAR THREATENED (NON-BREEDING SEASON) |
| BIRDS | SANKANOGOI | Botaurus stellaris stellaris | DATA DEFICIENT (NON-BREEDING SEASON) |
| BIRDS | YOSHIGOI | Ixobrychus sinensis sinensis | VULNERABLE (BREEDING SEASON) |
| BIRDS | OOYOSHIGOI | Ixobrychus eurhythmus | VULNERABLE (NON-BREEDING SEASON) |
| BIRDS | MIZOGOI | Gorsachius goisagi | CRITICALLY ENDANGERED AND ENDANGERED (BREEDING SEASON) |
| BIRDS | SASAGOI | Butorides striata | VULNERABLE (BREEDING SEASON) |
| BIRDS | KUROSAGI | Egretta sacra | VULNERABLE (BREEDING SEASON) |
| BIRDS | KUINA | Rallus aquaticus | VULNERABLE (NON-BREEDING SEASON) |
| BIRDS | HIKUINA | Porzana fusca erythrothorax | CRITICALLY ENDANGERED AND ENDANGERED (BREEDING SEASON) |
| BIRDS | ZYUUICHI | Hierococcyx hyperythrus | NEAR THREATENED (BREEDING SEASON) |
| BIRDS | KAKKOU | Cuculus canorus | VULNERABLE (BREEDING SEASON) |
| BIRDS | YOTAKA | Caprimulgus indicus jotaka | VULNERABLE (BREEDING SEASON) |
| BIRDS | TAGERI | Vanellus vanellus | VULNERABLE (NON-BREEDING SEASON) |

# FIG. 14B

| | | | |
|---|---|---|---|
| BIRDS | IKARUCHIDORI | Charadrius placidus | NEAR THREATENED (BREEDING SEASON) ATTENTION NEEDED (NON-BREEDING SEASON) |
| BIRDS | SHIROCHIDORI | Charadrius alexandrinus | VULNERABLE (BREEDING SEASON) NEAR THREATENED (NON-BREEDING SEASON) |
| BIRDS | MEDAICHIDORI | Charadrius mongolus | NEAR THREATENED (NON-BREEDING SEASON) |
| BIRDS | OGUROSHIGI | Limosa limosa | VULNERABLE (NON-BREEDING SEASON) |
| BIRDS | OOSORIHASHISHIGI | Limosa lapponica | VULNERABLE (NON-BREEDING SEASON) |
| BIRDS | CYUUSYAKUSHIGI | Numenius phaeopus | VULNERABLE (NON-BREEDING SEASON) |
| BIRDS | DAISYAKUSHIGI | Numenius arquata | CRITICALLY ENDANGERED AND ENDANGERED (NON-BREEDING SEASON) |
| ... | ... | ... | ... |

# FIG. 15

124a

| ANIMAL SPECIES (MAMMALS) | FEEDING HABIT | AVERAGE WEIGHT (kg) | HABITAT DENSITY (1/ha) |
|---|---|---|---|
| JAPANESE BLACK BEAR | CARNIVOROU | 75 | 0.0022 |
| JAPANESE DEER | HERBIVORES | 80 | 0.1478 |
| SNOW MONKEY | CARNIVOROU | 14 | 0.0109 |
| WILD BOAR | CARNIVOROU | 55 | 0.0030 |
| JAPANESE RED FOX | CARNIVOROU | 5.5 | 0.0262 |
| ... | ... | ... | ... |

# FIG. 16

124b

| ANIMAL SPECIES (MAMMALS) | FEEDING HABIT | AVERAGE WEIGHT (kg) | EATING ENERGY AMOUNT PER DAY (kcal/DAY) |
|---|---|---|---|
| JAPANESE BLACK BEAR | CARNIVOROU | 75 | 4608 |
| JAPANESE DEER | HERBIVORES | 80 | 4821 |
| SNOW MONKEY | CARNIVOROU | 14 | 1416 |
| WILD BOAR | CARNIVOROU | 55 | 3705 |
| JAPANESE RED FOX | CARNIVOROU | 5.5 | 734 |
| ... | ... | ... | ... |

# FIG. 17

124c

| ANIMAL SPECIES (BIRDS) | FEEDING HABIT | AVERAGE WEIGHT (g) | EATING AMOUNT PER DAY (g/DAY) |
|---|---|---|---|
| BLUE-AND-WHITE FLYCATCHER | INSECTIVOROUS | 25 | 5.3 |
| ALPINE ACCENTOR | OMNIVOROUS | 40 | 7.3 |
| ... | ... | ... | ... |

# FIG. 18

124d

| ANIMAL CLASS CLASSIFICATION | FEEDING HABIT | BREEDING COST (MAMMALS: 1 kcal UNIT) (BIRDS, INSECTS: 1 g UNIT) |
|---|---|---|
| MAMMALS | CARNIVOROUS | 3 YEN/kcal |
| | HERBIVORES, OMNIVOROUS | 2 YEN/kcal |
| BIRDS | INSECTIVOROUS | 9.8 YEN/g |
| | OMNIVOROUS | 6.5 YEN/g |
| ... | ... | ... |

# FIG. 19

124e

| ANIMAL SPECIES AND EATING ENERGY AMOUNT OR EATING AMOUNT | FEED COST (YEN/DAY) | FEED COST (YEN/YEAR/INDIVIDUAL) |
|---|---|---|
| JAPANESE BLACK BEAR 4,608kcal | 13,824 YEN | 5,045,760 YEN |
| SNOW MONKEY 1,416kcal | 4,248 YEN | 1,550,520 YEN |
| WILD BOAR 3,705kcal | 7,410 YEN | 2,704,650 YEN |
| JAPANESE RED FOX 734kcal | 1,468 YEN | 535,820 YEN |
| JAPANESE DEER 4,821kcal | 9,642 YEN | 3,519,330 YEN |
| BLUE-AND-WHITE FLYCATCHER 5.3g | 51 YEN | 18,615 YEN |
| ALPINE ACCENTOR 7.3g | 47 YEN | 17,319 YEN |
| ... | ... | ... |

## FIG. 20

124f

| WEIGHTING COEFFICIENT (α) | 10 | 9 | 8 | 7 | 6 | 5 | 4 | 3 | 2 | 1 |
|---|---|---|---|---|---|---|---|---|---|---|
| CLASSIFICATION | EXTINCT | EXTINCT IN WILD | CRITICALLY ENDANGERED | ENDANGERED | VULNERABLE | NEAR THREATENED | LEAST CONCERN | DATA DEFICIENT | THREATENED LOCAL POPULATION | NORMAL SPECIES |
| | (EX) | (EW) | (CR) | (EN) | (VU) | (NT) | (LC) | (DD) | (LP) | Generalist |
| MAMMALS (YEN/YEAR/ INDIVIDUAL) | ONE MILLION | NINE HUNDRED THOUSAND | EIGHT HUNDRED THOUSAND | SEVEN HUNDRED THOUSAND | SIX HUNDRED THOUSAND | FIVE HUNDRED THOUSAND | FOUR HUNDRED THOUSAND | THREE HUNDRED THOUSAND | TWO HUNDRED THOUSAND | HUNDRED THOUSAND |
| BIRDS (YEN/YEAR/ SPECIES) | ONE HUNDRED THOUSAND | NINETY THOUSAND | EIGHTY THOUSAND | SEVENTY THOUSAND | SIXTH THOUSAND | FIFTY THOUSAND | FORTY THOUSAND | THIRTY THOUSAND | TWENTY THOUSAND | TEN THOUSAND |
| REPTILES (YEN/YEAR/ SPECIES) | ONE HUNDRED THOUSAND | NINETY THOUSAND | EIGHTY THOUSAND | SEVENTY THOUSAND | SIXTH THOUSAND | FIFTY THOUSAND | FORTY THOUSAND | THIRTY THOUSAND | TWENTY THOUSAND | TEN THOUSAND |
| AMPHIBIANS (YEN/YEAR/ SPECIES) | ONE HUNDRED THOUSAND | NINETY THOUSAND | EIGHTY THOUSAND | SEVENTY THOUSAND | SIXTH THOUSAND | FIFTY THOUSAND | FORTY THOUSAND | THIRTY THOUSAND | TWENTY THOUSAND | TEN THOUSAND |
| INSECTS (YEN/YEAR/ SPECIES) | ONE HUNDRED THOUSAND | NINETY THOUSAND | EIGHTY THOUSAND | SEVENTY THOUSAND | SIXTH THOUSAND | FIFTY THOUSAND | FORTY THOUSAND | THIRTY THOUSAND | TWENTY THOUSAND | TEN THOUSAND |
| INVERTEBRATES (YEN/YEAR/ SPECIES) | ONE HUNDRED THOUSAND | NINETY THOUSAND | EIGHTY THOUSAND | SEVENTY THOUSAND | SIXTH THOUSAND | FIFTY THOUSAND | FORTY THOUSAND | THIRTY THOUSAND | TWENTY THOUSAND | TEN THOUSAND |

# FIG. 21

125a

| | AMOUNT OF CONSUMPTION PER DAY TRIPPER (YEN) | |
|---|---|---|
| | FROM METROPOLITAN AREA | FROM LOCAL CITY |
| SIGHTSEEING FOR PARTICIPATING FESTIVALS OR THE LIKE | 4,400 | 3,200 |
| ATHLETIC TOURISM (TREKKING OR THE LIKE) | 7,400 | 6,200 |

# FIG. 22

125b

[A: TRIP INCLUDING OVERNIGHT STAYS]

◇THE NUMBER OF RECREATION TOURISTS IN JAPAN (TOTAL) <u>125,200,000 × 1.49</u>
(BREAKDOWN) -TOTAL POPULATION 125,200,000
-THE NUMBER OF TIMES OF TRIPS FOR RECREATION INCLUDING OVERNIGHT STAYS: 1.49 TIMES/YEAR

◇RATIO OF TOURISTS TO RURAL AREA:(54,706,000 + 13,637,000)/125,200,000 = <u>0.55</u>
(BREAKDOWN) -TOTAL POPULATION 125,200,000 (1995)
-THE NUMBER OF TOURISTS TO RURAL AREA: 54,706,000 (FROM URBAN AREAS), 13,637,000 (FROM RURAL AREA)

◇CORRECTION COEFFICIENT FOR RECREATION (EXCEPT FOR PURPOSES OF VOICES, HISTORIC SITES, OR THE LIKE):<u>0.35</u>

(BREAKDOWN)   -PURPOSE OF STAYING RURAL AREA 35.1%

( AGRICULTURAL EXPERIENCE 4.6%、INTERACTION WITH FARMERS AND OBSERVATION 1.7%、
RELAX IN NATURE 22.4%、TRADITIONAL CULTURE 6.4% )

-OTHERS (HOT SPRINGS, HISTORICAL SITES, DISHES, SPECIAL LOCAL PRODUCTS, OR THE LIKE) 64.9%

◇AMOUNT OF CONSUMPTION PER TIME PER PERSON: <u>43,000 YEN</u>
(BREAKDOWN) -OVERALL AMOUNT OF CONSUMPTION OF TRIPS INCLUDING OVERNIGHT STAYS: ABOUT EIGHT TRILLION NINETY BILLION YEN
-THE NUMBER OF TOURISTS FOR RECREATION (TOTAL) 187 MILLION

# FIG. 23

125c

[B: DAY TRIP (STUDY IS MADE AS LIMITING TARGET TO URBAN RESIDENTS)]

◇THE NUMBER OF DAY TRIP RECREATION TOURISTS

   FROM FOUR METROPOLITAN AREAS: $15,951,000 \times 1.49 \times 3 = \underline{713,001,000}$
   FROM LOCAL CITIES: $62,201,000 \times 1.49 \times 3 = \underline{278,038,000}$

 (BREAKDOWN)   -POPULATION OF FOUR METROPOLITAN AREAS: 15,951,000,
                POPULATION OF LOCAL CITIES: 62,201,000
               -THE NUMBER OF TIMES OF DAY TRIP RECREATIONS: $1.49 \times 3 = 3$
                TIMES/YEAR
                (ESTIMATED FROM TIME RELATED SPENDING OF RECREATION TIME
                PATTERN IN JAPAN)

◇RATIO OF TOURISTS TO RURAL AREA (LIMITED TO URBAN RESIDENTS):0.7

◇CORRECTION COEFFICIENT FOR RECREATION:0.35

◇AMOUNT OF CONSUMPTION PER TIME PER PERSON:4,400 YEN (FROM FOUR
METROPOLITAN AREAS)、3,200 YEN (FROM LOCAL CITIES)

 (BREAKDOWN) -FROM FOUR METROPOLITAN AREAS: 4,400 YEN
              [ADULT (5,200 YEN), CHILD (3,600 YEN): 1:1]
             -FROM LOCAL CITIES: 3,200 YEN
              [ADULT (3,600 YEN), CHILD (2,800 YEN): 1:1]

$$\left( \begin{array}{l} \text{TRANSPORTATION COST: } 1,600 \text{ YEN} \times 2 = 3,200 \text{ YEN} \\ \qquad \text{(FROM FOUR METROPOLITAN AREAS)} \\ \qquad 800 \text{ YEN} \times 2 = 1,600 \text{ YEN} \\ \qquad\qquad \text{(FROM LOCAL CITIES)} \\ \text{NOTE) HALF OF ADULT FOR CHILD} \end{array} \right)$$

              -MISCELLANEOUS EXPENSES: 2,000 YEN/PERSON
               (TRANSPORTATION COST OTHER THAN JR OR THE LIKE)

◇RATIO OF MOUNTAIN AREAS IN CULTIVATED AREA: 2,085,000 ha/5,038,000 ha=$\underline{0.41}$

# FIG. 24

125d

[C: HOMECOMING VISITORS]

◇THE NUMBER OF HOMECOMING VISITOR PER YEAR (TOTAL): 64,720,000

◇HOMECOMING RATIO TO NON-DID REGION: 13,141,133 FAMILIES/43,893,923 FAMILIES=0.30
 (BREAKDOWN)  -THE NUMBER OF FAMILIES IN JAPAN: 43,893,923 FAMILIES
              -THE NUMBER OF FAMILIES IN NON-DID REGION: 13,141,133 FAMILIES

◇CORRECTION COEFFICIENT INTENDED BY HOMECOMING VISITORS: 1/2
    (SINCE THERE ARE PEOPLE WHO RETURN HOME IN CONSIDERATION OF RURAL AREA, 1/2 IS SET)

◇COST SPENT FOR HOMECOMING: 43,000 YEN:
    (SET TO BE THE SAME AS COST REQUIRED FOR TRIP INCLUDING OVERNIGHT STAYS
    (43,000 YEN))

◇SHARE OF MOUNTAIN AREA IN FARMLANDS REGARDING TOTAL NUMBER OF FAMILIES
  IN AGRICULTURAL AREAS IN JAPAN:
  (39,880,000 FAMILIES + 14,880,000 FAMILIES)/
  (33,470,000 FAMILIES + 39,880,000 FAMILIES + 14,880,000 FAMILIES)=0.62
    (THE NUMBER OF FAMILIES (AVERAGE AGRICULTURAL AREA: 33,470,000 FAMILIES,
      INTERMEDIATE AGRICULTURAL AREA: 39,880,000 FAMILIES, AND
      MOUNTAIN AREAS: 14,880,000 FAMILIES))

# FIG. 25

125e

A:TRAVEL COST OF TOURIST INCLUDING OVERNIGHT STAYS:
  THE NUMBER OF TOURISTS×0.55×0.35×43,000 YEN
B:TRAVEL COST OF DAY TRIPPERS:
  THE NUMBER OF TOURISTS×0.7×0.35×(4,400 or 3,200)×0.41
C:TRAVEL COST OF HOMECOMING VISITORS:
  THE NUMBER OF HOMECOMING VISITORS TO EVALUATION AREA×0.30×1/2×43,000円×0.62

VALUE OF TOURISM OF CULTURAL SERVICE:EVALUATION PRICE (YEN/YEAR)=A+B+C

## FIG. 26

| LAND USE TYPE | VEGETATION MAP PER UNIT AREA | |
|---|---|---|
| NATURAL MIXED FOREST TYPE | NATURAL FORESTS (DECIDUOUS CONIFERS)<br>NATURAL FORESTS (DECIDUOUS BROAD-LEAVED TREES)<br>NATURAL FORESTS (EVERGREEN BROAD-LEAVED TREES) | VALUE OF ANIMALS: LARGE<br>(NORMAL SPECIES: SMALL (THREE), RARE SPECIES TO BE PROTECTED: LARGE (28))<br><br>VALUE OF PLANTS: LARGE<br>·SUPPLY SERVICE: SMALL<br>·ADJUSTMENT SERVICE: LARGE<br>·CULTURAL SERVICE: LARGE |
| PLANTATION TYPE | ARTIFICIAL FORESTS (CONIFERS) | VALUE OF ANIMALS: SMALL<br>(NORMAL SPECIES: LARGE, RARE SPECIES TO BE PROTECTED: SMALL)<br><br>VALUE OF PLANTS: LARGE<br>·SUPPLY SERVICE: LARGE<br>·ADJUSTMENT SERVICE: MEDIUM — WATER RECHARGE: LARGE / CULTURAL SERVICE: SMALL<br>·CARBON DIOXIDE ACCUMULATION: LARGE |
| ALPINE TYPE | BARE LAND (ROCKY AREA WITH ALMOST NO TREES)<br>ALPINE PLANTS | VALUE OF ANIMALS: LARGE<br>(NORMAL SPECIES: SMALL, RARE SPECIES TO BE PROTECTED: LARGE)<br><br>VALUE OF PLANTS: MEDIUM<br>·SUPPLY SERVICE: SMALL<br>·ADJUSTMENT SERVICE: SMALL<br>·CULTURAL SERVICE: LARGE |

## FIG. 27

| LAND USE TYPE | VEGETATION MAP PER UNIT AREA | |
|---|---|---|
| VILLAGE FOREST TYPE | FARMLANDS (PADDY FIELDS: RICE PLANT)<br>FARMLANDS (FIELDS)<br>NATURAL FORESTS (DECIDUOUS CONIFERS)<br>ARTIFICIAL FORESTS (CONIFERS) | VALUE OF ANIMALS: LARGE (NORMAL SPECIES: LARGE, RARE SPECIES TO BE PROTECTED: LARGE)<br><br>VALUE OF PLANTS: LARGE<br>·SUPPLY SERVICE: LARGE<br>·ADJUSTMENT SERVICE: MEDIUM<br>·CULTURAL SERVICE: MEDIUM |
| URBAN LAND TYPE | ARTIFICIAL FORESTS (BROAD-LEAVED TREES IN PARKS)<br>FARMLANDS (FIELDS)<br>BARE LAND (ONLY ARTIFICIAL OBJECTS WITH NO VEGETATION) | VALUE OF ANIMALS: SMALL (NORMAL SPECIES: SMALL, RARE SPECIES TO BE PROTECTED: NONE)<br><br>VALUE OF PLANTS: SMALL<br>·SUPPLY SERVICE: NONE<br>·ADJUSTMENT SERVICE: NONE<br>·CULTURAL SERVICE: SMALL |

## FIG. 28

| | SUPPLY SERVICE TOTAL (HUNDRED MILLION YEN) | SURFACE EROSION PREVENTION (HUNDRED MILLION YEN) | SHALLOW LANDSLIDE PREVENTION (HUNDRED MILLION YEN) | SOIL EROSION PREVENTION (HUNDRED MILLION YEN) | WATER RESOURCE RESERVOIR (HUNDRED MILLION YEN) | WATER QUALITY PURIFICATION (HUNDRED MILLION YEN) |
|---|---|---|---|---|---|---|
| A PREFECTURE | 2370 | 2602 | 1376 | 110 | 1293 | 2101 |
| B PREFECTURE | 4036 | 1744 | 541 | 196 | 659 | 1342 |
| C PREFECTURE | 235 | 715 | 283 | 9 | 389 | 737 |
| D PREFECTURE | 4067 | 2070 | 660 | 274 | 660 | 1306 |
| E PREFECTURE | 2724 | 2833 | 1061 | 193 | 1202 | 2027 |
| F PREFECTURE | 844 | 4302 | 1079 | 30 | 1184 | 1855 |
| G PREFECTURE | 2825 | 12642 | 3279 | 214 | 3545 | 5503 |
| H PREFECTURE | 4958 | 21870 | 4780 | 499 | 8124 | 12323 |

| CARBON DIOXIDE ABSORPTION (HUNDRED MILLION YEN) | AIR PURIFICATION (HUNDRED MILLION YEN) | FOSSIL FUEL ALTERNATIVE (HUNDRED MILLION YEN) | CLIMATE MITIGATION (HUNDRED MILLION YEN) | TOTAL OF PLANT-DERIVED ECOSYSTEM SERVICE (HUNDRED MILLION YEN) |
|---|---|---|---|---|
| 233 | 1.9 | 67 | 0.6 | 10163 |
| 81 | 3.3 | 39 | 1.9 | 8647 |
| 41 | 0.1 | 95 | 0.4 | 2508 |
| 62 | 4.6 | 54 | 1.1 | 9165 |
| 134 | 3.2 | 63 | 0.8 | 10245 |
| 187 | 0.5 | 8 | 0.3 | 9497 |
| 620 | 3.6 | 22 | 0.9 | 28658 |
| 641 | 8.1 | 31 | 1.3 | 53241 |

FIG. 29

(1) VALUE OF ANIMALS

$\cdot V_{ATotal} = V_{FEED\ COST} + V_{MANAGEMENT\ COST} + V_{CULTURAL\ SERVICES\ (FESTIVAL)} \cdots + V_{CULTURAL\ SERVICES\ (TOURISM)}$

$\cdot V_{BTotal} = V_{FEED\ COST} + V_{MANAGEMENT\ COST} + V_{CULTURAL\ SERVICES\ (FESTIVAL)} \cdots + V_{CULTURAL\ SERVICES\ (TOURISM)}$

$\vdots$

(2) VALUE OF PLANTS

$\cdot V_1 = V_{PROVISIONING\ SERVICES\ (RESOURCE)} + V_{REGULATING\ SERVICES\ (CARBON\ ACCUMULATION)} + \cdots + V_{CULTURAL\ SERVICES\ (FESTIVAL)(PLANT\text{-}DERIVED\ TOURISM)}$

$\cdot V_2 = V_{PROVISIONING\ SERVICES\ (RESOURCE)} + V_{REGULATING\ SERVICES\ (CARBON\ ACCUMULATION)} + \cdots + V_{CULTURAL\ SERVICES\ (FESTIVAL)(PLANT\text{-}DERIVED\ TOURISM)}$

$\vdots$

■TOTAL

■$S_n = S_{ANIMAL\ (VALUE\ OF\ ANIMALS\ LIVING\ IN\ EVALUATION\ TARGET\ AREA)} + S_{PLANT\ (VALUE\ OF\ PLANTS\ IN\ EVALUATION\ TARGET\ AREA)}$

# FIG. 30A

ECOSYSTEM SERVICES FOR PLANT
- PLANT-DERIVED PROVISIONING SERVICES (YEN/SPECIES/CERTAIN AREA)
- PLANT-DERIVED REGULATING SERVICES (YEN/SPECIES/CERTAIN AREA)
- PLANT-DERIVED CULTURAL SERVICES (YEN/CERTAIN AREA)

ECOSYSTEM SERVICES FOR ANIMAL
- HABITAT SERVICE OF ANIMAL C (YEN/SPECIES/CERTAIN AREA)
- HABITAT SERVICE OF ANIMAL B (YEN/SPECIES/CERTAIN AREA)
- HABITAT SERVICE OF ANIMAL A (YEN/SPECIES/CERTAIN AREA)

1km

HABITAT
- ENDANGERED SPECIES (RARE SPECIES)
- NORMAL SPECIES
- PLANTS
- ANIMALS

1km

1km

- 1(INHABIT) — BEAR (HABITATION PREDICTION MAP_LARGE MAMMAL)
- 0(NOT INHABIT) — BROCK (HABITATION PREDICTION MAP_SMALL MAMMAL)
- 12 SPECIES — 12 SPECIES (HABITATION MAP_BIRDS (RARE SPECIES))
- 20 SPECIES — 20 SPECIES (HABITATION MAP_BIRDS (NORMAL SPECIES))
- 2 SPECIES — 2 SPECIES (HABITATION MAP_INSECTS_DRAGONFLY (RARE SPECIES))
- 3 SPECIES — 3 SPECIES (HABITATION MAP_INSECTS (NORMAL SPECIES))

1km

## FIG. 30B

| ECOSYSTEM SERVICE | | (YEN/ha) | (YEN/km$^2$) |
|---|---|---|---|
| PROVISIONING SERVICES | AGRICULTURAL PRODUCT | - | - |
| | BIOMASS RESOURCE | 8,600 | 860,000 |
| REGULATING SERVICES | SURFACE EROSION PREVENTION | 550,000 | 55 MILLION |
| | SHALLOW LANDSLIDE PREVENTION | 340,000 | 340 MILLION |
| | CARBON DIOXIDE ABSORPTION | 59,000 | 5.9 MILLION |
| | WATER RESOURCE RESERVOIR/RECHARGE | 750,000 | 7,500 MILLION |
| | WATER QUALITY PURIFICATION | 1,220,000 | 122 MILLION |
| HABITAT SERVICES | WILD BIRD AND MAMMAL PROTECTION | 500,000 | 50 MILLION |
| CULTURAL SERVICES | TOURISM | 130,000 | 130 MILLION |
| | LANDSCAPE PRESERVATION | 20,000 | 2 MILLION |
| | FESTIVAL AND EVENT | 6,000 | 600,000 |
| | EDUCATIONAL AND SCIENTIFIC OPPORTUNITIES | 3,000 | 300,000 |
| (TOTAL) | | 3,590,000 YEN/ha | 359 MILLION YEN/km$^2$ |

# FIG. 31

30

DISPLAY PRICES
(TEN MILLION YEN)/km$^2$)

☐ 1-10
☐ 11-20
☐ 21-30
▫ 31-40
▫ 41-50
▣ 51-60
▓ 61-70
▓ 71-80
▓ 81-90
■ 91-100

# FIG. 32

31

DISPLAY PRICES
(MILLION YEN/TSUBO)

1-10
11-20
21-30
31-40
41-50
51-60
61-70
71-80
81-90
91-100

# FIG. 33

32

| ECOSYSTEM SERVICE | | (YEN/ha) | (YEN/km$^2$) |
|---|---|---|---|
| PROVISIONING SERVICES | RESOURCES | 8,600 | 860,000 |
| REGULATING SERVICES | SHALLOW LANDSLIDE PREVENTION | 340,000 | 34 MILLION |
| | CARBON DIOXIDE ABSORPTION | 59,000 | 5,900,000 |
| | WATER RESOURCE RESERVOIR/RECHARGE | 750,000 | 75 MILLION |
| HABITAT SERVICES | VALUE OF ANIMALS | 500,000 | 50 MILLION |
| CULTURAL SERVICES | LANDSCAPE PRESERVATION | 12,000 | 1,200,000 |
| | ANIMAL-DERIVED RECREATION | 13,000 | 1,300,000 |
| | FESTIVALS | 5,600 | 560,000 |
| | EDUCATIONAL AND SCIENTIFIC OPPORTUNITIES | 500 | 50,000 |
| (TOTAL) | | 1,700,000 YEN/ha | 170 MILLION YEN/km$^2$ |

# FIG. 34

33

PAST: 1991    PRESENT: 2015

DISPLAY PRICES
(TEN MILLION YEN)

□ 0.0～0.0
□ 0.0～2.0
□ 2.0～5.0
▨ 5.0～8.0
▨ 8.0～11.0
▨ 11.0～13.0
■ 13.0～16.0
■ 16.0～19.0
▨ 19.0～24.0
▨ 24.0～29.0
■ 29.0～52.0

# FIG. 35A

# FIG. 35B

▭ ··· CLIMATE MITIGATION (HUNDRED MILLION YEN)

▨ ··· FOSSIL FUEL ALTERNATIVE (HUNDRED MILLION YEN)

▨ ··· AIR PURIFICATION (HUNDRED MILLION YEN)

▨ ··· CARBON DIOXIDE ABSORPTION (HUNDRED MILLION YEN)

▨ ··· WATER QUALITY PURIFICATION (HUNDRED MILLION YEN)

▨ ··· WATER RESOURCE RESERVOIR (HUNDRED MILLION YEN)

▨ ··· SOIL EROSION PREVENTION (HUNDRED MILLION YEN)

▨ ··· SHALLOW LANDSLIDE PREVENTION (HUNDRED MILLION YEN)

▨ ··· SURFACE EROSION PREVENTION (HUNDRED MILLION YEN)

▨ ··· TOTAL OF SUPPLY SERVICE (HUNDRED MILLION YEN)

─○─ ··· BIRDS (THE NUMBER OF SPECIES)

─△─ ··· MAMMALS (THE NUMBER OF SPECIES)

─✳─ ··· INSECTS (THE NUMBER OF SPECIES)

─□─ ··· AMPHIBIANS (THE NUMBER OF SPECIES)

─◇─ ··· REPTILES (THE NUMBER OF SPECIES)

# FIG. 36

# FIG. 37

```
        ( EVALUATION PROCESSING )
                    │
                    │  S1
                    ▼
        ┌───────────────────────────┐
        │  RECEIVE EVALUATION TARGET │
        │  REGION FROM TERMINAL DEVICE│
        └───────────────────────────┘
                    │
                    │  S2
                    ▼
        ┌───────────────────────────┐
        │  DETERMINE LAND USE TYPE OF│
        │  RECEIVED EVALUATION TARGET│
        │          REGION            │
        └───────────────────────────┘
                    │
                    │  S3
                    ▼
               ◇ WHETHER
    NO     OR NOT RARE SPECIES
 ◄──────── TO BE PROTECTED
              INHABIT? ◇
                    │ YES
```

|  |  |
|---|---|
| **S5** | **S4** |
| CALCULATE ANIMAL-DERIVED VALUE OF NORMAL SPECIES | CALCULATE VALUE DERIVED FROM ANIMALS INCLUDING RARE SPECIES |

```
                    │  S6
                    ▼
        ┌───────────────────────────┐
        │  CALCULATE PLANT-DERIVED VALUE│
        └───────────────────────────┘
                    │
                    │  S7
                    ▼
        ┌───────────────────────────┐
        │  GENERATE DISPLAY SCREEN IN│
        │  WHICH LAND USE TYPE, ANIMAL-│
        │  DERIVED VALUE, AND PLANT- │
        │  DERIVED VALUE ARE ASSOCIATED│
        │  WITH EVALUATION TARGET REGION│
        └───────────────────────────┘
                    │
                    │  S8
                    ▼
        ┌───────────────────────────┐
        │  TRANSMIT INFORMATION      │
        │  REGARDING GENERATED DISPLAY│
        │  SCREEN AND DISPLAY DISPLAY │
        │  SCREEN ON TERMINAL DEVICE │
        └───────────────────────────┘
                    │
                    ▼
                ( END )
```

FIG. 38

LAND USE TYPE: "URBAN LAND TYPE"

FARMLANDS (FIELDS)

ARTIFICIAL FORESTS

BARE LAND
(ONLY ARTIFICIAL OBJECTS
WITH NO VEGETATION)

VALUE OF ANIMALS

■NORMAL SPECIES OF INHABITING ANIMALS: 51 SPECIES
(20 MAMMALS, 25 BIRDS, AND 6 INSECTS)
■ENDANGERED SPECIES CERTIFIED BY A PREFECTURE: 0 SPECIES
■AREA WHERE ANIMALS CAN INHABIT: A CITY,
A PREFECTURE IN URBAN AREA
9% (OF 14,300 km2) IS FORESTS AND FARMLANDS, AND
AN AREA WHERE ANIMALS CAN INHABIT IS 12.87 km2 (1287 ha)

| | | DAILY FEED COST (YEN) | ANNUAL FEED COST (YEN/YEAR) | HABITAT DENSITY OF ONLY MAMMALS (1/ha) | IN CASE OF MAMMALS, THE NUMBER OF HABITABLE ANIMALS (PRODUCT OF HABITABLE AREA AND HABITAT DENSITY) | ANNUAL MANAGEMENT COST (YEN/YEAR) | TOTAL OF ANNUAL MANAGEMENT COST (YEN/YEAR) |
|---|---|---|---|---|---|---|---|
| MAMMALS | 20 NORMAL SPECIES | WILD BOAR 7,410 YEN | 2,704,650 YEN | 0.0030 | 3 INDIVIDUALS | 100,000 YEN x 3 INDIVIDUALS = 300,000 | 63,000,000 YEN |
| | | JAPANESE RED FOX 1,468 YEN | 535,820 YEN | 0.0262 | 33 INDIVIDUALS | 100,000 YEN x 33 INDIVIDUALS = 3,300,000 YEN | |
| | | WEIGHTS OF OTHER NORMAL SPECIES OF MAMMALS AND JAPANESE RED FOX ARE ABOUT THE SAME | 535,820x 18 SPECIES=9,644,760 YEN | 0.0262 | 33 INDIVIDUALS x 18 SPECIES = 594 INDIVIDUALS | 100,000 YEN x 594 INDIVIDUALS = 59,400,000 YEN | |
| BIRDS | 25 NORMAL SPECIES | SPARROW 51 YEN | 18,615 YEN | - | - | 10,000 YEN | 250,000 YEN |
| | | WEIGHTS OF OTHER NORMAL SPECIES OF BIRDS AND SPARROW ARE ABOUT THE SAME | 18,615 YENx 24 SPECIES=446,760 YEN | - | - | 240,000 YEN | |
| INSECTS | 6 NORMAL SPECIES | PARANTICA SITA (BUTTERFLY) 10 YEN | 3,650 YEN | - | - | 10,000 YEN | 10,000 YENx 6 SPECIES = 60,000 YEN |
| | | SINCE OTHER INSECTS ARE BUTTERFLIES, WEIGHTS OF OTHER INSECTS AND PARANTICA SITA ARE ABOUT THE SAME | 3,650 YENx 5 SPECIES= 18,250 YEN | - | - | 50,000 YEN | |
| | | TOTAL | 13,372,505 YEN | | | TOTAL | 63,310,000 YEN |

■ANNUAL FEED COST OF NORMAL SPECIES + ANNUAL MANAGEMENT COST = 76,682,505 YEN IN TOTAL

FIG. 39

LAND USE TYPE: "URBAN LAND TYPE"

— FARMLANDS (FIELDS)

— ARTIFICIAL FORESTS

— BARE LAND
(ONLY ARTIFICIAL OBJECTS
WITH NO VEGETATION)

VALUE OF
PLANTS

■FORESTS AND FARMLANDS WITH VEGETATION IS 9%
OF ENTIRE AREA
TOTAL OF ECOSYSTEM SERVICE OBTAINED FROM
VEGETATION

6,945,500,000 YEN

LAND USE AREA OF A CITY (ha)

⊠FOREST
⊞FARMLAND
☑WILDERNESS
■RIVER, CANAL
☑ROAD
⊠RESIDENTIAL LAND
⊠INDUSTRIAL SITE
☐OTHER
RESIDENTIAL LAND
☐OTHERS

0 YEN

5% 4% 0%
13%
0 YEN
0 YEN
15%
14%
11%
0 YEN
0 YEN
33%
0円

| | |
|---|---|
| SUPPLY SERVICE:WOOD RESOURCE | 0.018 HUNDRED MILLION YEN (1,800,000 YEN) |
| ADJUSTMENT SERVICE:SURFACE EROSION PREVENTION | 7.1 HUNDRED MILLION YEN |
| SHALLOW LANDSLIDE PREVENTION | 2.21 HUNDRED MILLION YEN |
| WATER RESOURCE RECHARGE | 26.8 HUNDRED MILLION YEN |
| CARBON DIOXIDE ABSORPTION | 0.22 HUNDRED MILLION YEN |

3,634,800,000 YEN

| | |
|---|---|
| SUPPLY SERVICE:AGRICULTURAL PRODUCT | 26 HUNDRED MILLION YEN |
| ADJUSTMENT SERVICE:SURFACE EROSION PREVENTION | 7.1 HUNDRED MILLION YEN |
| AIR PURIFICATION | 0.007 HUNDRED MILLION YEN |

3,310,700,000 YEN

⇩

RESULT:
ANIMAL-DERIVED VALUE IS EVALUATED AS 76,682,505 YEN, AND
PLANT-DERIVED VALUE IS EVALUATED AS 6,945,500,000 YEN

## FIG. 40

LAND USE TYPE: "VILLAGE FOREST TYPE

FARMLANDS
(PADDY FIELDS: RICE PLANT)
FARMLANDS (FIELDS)
NATURAL FORESTS
(DECIDUOUS CONIFERS)
ARTIFICIAL FORESTS
(CONIFERS)

VALUE OF ANIMALS — 157 SPECIES INHABIT

■NORMAL SPECIES OF INHABITING ANIMALS: 68 SPECIES
(20 MAMMALS, 30 BIRDS, AND 18 INSECTS)
■ENDANGERED SPECIES CERTIFIED BY A PREFECTURE: 89 SPECIES
(4 MAMMALS, 45 BIRDS, AND 40 INSECTS)
■AREA WHERE ANIMALS CAN INHABIT: B CITY, A PREFECTURE IN RURAL AREA 63% (OF 103.76 km$^2$)
IS FORESTS AND FARMLANDS, AND AN AREA WHERE ANIMALS CAN INHABIT IS 65.36 km$^2$ (6,536 ha)

| | NORMAL SPECIES | DAILY FEED COST (YEN) | ANNUAL FEED COST (YEN/YEAR) | HABITAT DENSITY OF ONLY MAMMALS (1/ha) | IN CASE OF MAMMALS, THE NUMBER OF HABITABLE ANIMALS (PRODUCT OF HABITABLE AREA AND HABITAT DENSITY) | ANNUAL MANAGEMENT COST (YEN/YEAR) | TOTAL OF ANNUAL MANAGEMENT COST (YEN/YEAR) |
|---|---|---|---|---|---|---|---|
| MAMMALS | 20 NORMAL SPECIES | WILD BOAR 7,410 YEN | 2,704,650 YEN | 0.0030 | 19 INDIVIDUALS | 100,000 YEN x 19 INDIVIDUALS = 1,900,000 YEN | 326,800,000 YEN |
| | | JAPANESE RED FOX 1,468 YEN | 535,820 YEN | 0.0262 | 171 INDIVIDUALS | 100,000 YEN x 171 INDIVIDUALS = 17,100,000 YEN | |
| | | WEIGHTS OF OTHER NORMAL SPECIES OF MAMMALS AND JAPANESE RED FOX ARE ABOUT THE SAME | 535,820x 18 SPECIES=9,644,760 YEN | 0.0262 | 171 INDIVIDUALS x 18 SPECIES = 3,078 INDIVIDUALS | 100,000 YEN x 3078 INDIVIDUALS = 307,800,000 YEN | |
| BIRDS | 30 NORMAL SPECIES | SPARROW 51 YEN | 18,615 YEN | - | - | 10,000 YEN | 10,000 YEN× 30 SPECIES = 300,000 YEN |
| | | WEIGHTS OF OTHER NORMAL SPECIES OF BIRDS AND SPARROW ARE ABOUT THE SAME | 18,615 YENx 29 SPECIES=539,835 YEN | - | - | 10,000 YEN x 29 SPECIES = 290,000 YEN | |
| INSECTS | 18 NORMAL SPECIES | PARANTICA SITA (BUTTERFLY) 10 YEN | 3,650 YEN | - | - | 10,000 YEN | 10,000 YEN× 18 SPECIES = 180,000 YEN |
| | | SINCE OTHER INSECTS ARE BUTTERFLIES, WEIGHTS OF OTHER INSECTS AND PARANTICA SITA ARE ABOUT THE SAME | 3,650 YENx 17 PECIES =62,050 YEN | - | - | 10,000 YEN × 17 SPECIES = 170,000 YEN | |
| | | TOTAL | 13,509,380 YEN | | | TOTAL | 327,280,000 YEN |

ANNUAL FEED COST OF NORMAL SPECIES + ANNUAL MANAGEMENT COST = 340,789,380 YEN IN TOTAL

FIG. 41

| LAND USE TYPE: "VILLAGE FOREST TYPE" | | | | VALUE OF ANIMALS | 157 SPECIES INHABIT | | |
|---|---|---|---|---|---|---|---|

FARMLANDS (PADDY FIELDS: RICE PLANT)
FARMLANDS (FIELDS)
NATURAL FORESTS (DECIDUOUS CONIFERS)
ARTIFICIAL FORESTS (CONIFERS)

■NORMAL SPECIES OF INHABITING ANIMALS: 68 SPECIES (20 MAMMALS, 30 BIRDS, AND 18 INSECTS)
■ENDANGERED SPECIES CERTIFIED BY A PREFECTURE: 89 SPECIES (4 MAMMALS, 45 BIRDS, AND 40 INSECTS)
■AREA WHERE ANIMALS CAN INHABIT: B CITY, A PREFECTURE IN RURAL AREA 63% (OF 103.76 km²) IS FORESTS AND FARMLANDS, AND AN AREA WHERE ANIMALS CAN INHABIT IS 65.36 km² (6,536 ha)

| | ENDANGERED SPECIES | DAILY FEED COST (YEN) | ANNUAL FEED COST (YEN/YEAR) | HABITAT DENSITY OF ONLY MAMMALS (1/ha) | THE NUMBER OF HABITABLE ANIMALS | ANNUAL MANAGEMENT COST (YEN/YEAR) | TOTAL OF ANNUAL MANAGEMENT COST (YEN/YEAR) |
|---|---|---|---|---|---|---|---|
| MAMMALS | 4 ENDANGERED SPECIES | JAPANESE BLACK BEAR 13,824 YEN | 5,045,760 YEN | 0.0022 | 14 INDIVIDUALS | 800,000 YEN x 14 INDIVIDUALS = 11,200,000 YEN | 53,800,000 YEN |
| | | SNOW MONKEY 4,248 YEN | 1,550,520 YEN | 0.0109 | 71 INDIVIDUALS | 200,000 YEN x 71 INDIVIDUALS = 14,200,000 YEN | |
| | | WEIGHTS OF OTHER TWO SPECIES AND SNOW MONKEY ARE ABOUT THE SAME | 1,550,520 YEN x 2 SPECIES = 3,101,040 YEN | 0.0109 | 71 INDIVIDUALS | 200,000 YEN x 71 INDIVIDUALS x 2 SPECIES= 28,400,000 YEN | |
| BIRDS | 45 ENDANGERED SPECIES | BLUE-AND-WHITE FLYCATCHER 51 YEN | 18,615 YEN | - | - | 50,000 YEN | 3,100,000 YEN |
| | | WEIGHTS OF OTHER ENDANGERED SPECIES OF BIRDS AND BLUE-AND-WHITE FLYCATCHER ARE ABOUT THE SAME | 18,615 YEN x 44 SPECIES = 819,060 YEN | - | - | CR 25 SPECIES x 80,000 YEN = 2,000,000 YEN EN 5 SPECIES x 70,000 YEN = 350,000 YEN NT 14 SPECIES x 50,000 YEN = 700,000 YEN | |
| INSECTS | 40 ENDANGERED SPECIES | ANACIAESCHNA MARTINI (DRAGONFLY) 10 YEN | 3,650 YEN | - | - | EN: 50,000 YEN | 2,560,000 YEN |
| | | WEIGHTS OF OTHER INSECTS AND DRAGONFLY ARE ABOUT THE SAME TOTAL | 3,650 YEN x 39 SPECIES = 142,350 YEN | - | - | CR 20 SPECIES x 80,000 YEN = 1,600,000 YEN EN 15 SPECIES x 50,000 YEN = 750,000 YEN LC 4 SPECIES x 40,000 YEN = 160,000 YEN | |
| | | TOTAL | 10,680,995 YEN | | | TOTAL | 59,460,000 YEN |

ANNUAL FEED COST OF ENDANGERED SPECIES + ANNUAL MANAGEMENT COST = 70,140,995 YEN IN TOTAL
■ANNUAL FEED COST OF ALL ANIMALS + ANNUAL MANAGEMENT COST = 41,0930,375 YEN IN TOTAL

## FIG. 42

LAND USE TYPE: "VILLAGE FOREST TYPE"

FARMLANDS
(PADDY FIELDS: RICE PLANT)
FARMLANDS (FIELDS)
NATURAL FORESTS
(DECIDUOUS CONIFERS)
ARTIFICIAL FORESTS
(CONIFERS)

VALUE OF
PLANTS

■FORESTS AND FARMLANDS WITH VEGETATION IS 63% OF ENTIRE AREA
TOTAL OF ECOSYSTEM SERVICE OBTAINED FROM VEGETATION

41,236,300,000 YEN

LAND USE AREA OF B CITY (ha)

☒ FOREST
☒ FARMLAND
☑ WILDERNESS
■ RIVER, CANAL
☑ ROAD
☒ RESIDENTIAL LAND
☒ INDUSTRIAL SITE
☐ OTHER
RESIDENTIAL LAND
☐ OTHERS

0 YEN
12%
4%  0
1%  YEN
0
12%  YEN
0
6%  YEN
2%
0%
11%
52%

| | |
|---|---|
| SUPPLY SERVICE:WOOD RESOURCE | 0.53 HUNDRED MILLION YEN |
| ADJUSTMENT SERVICE:SURFACE EROSION PREVENTION | 30.3 HUNDRED MILLION YEN |
| SHALLOW LANDSLIDE PREVENTION | 18.8 HUNDRED MILLION YEN |
| WATER RESOURCE RECHARGE | 299 HUNDRED MILLION YEN |
| CARBON DIOXIDE ABSORPTION | 3.4 HUNDRED MILLION YEN |

3,523,000,000 YEN

| | |
|---|---|
| SUPPLY SERVICE:AGRICULTURAL PRODUCT | 30 HUNDRED MILLION YEN |
| ADJUSTMENT SERVICE:SURFACE EROSION PREVENTION | 30.3 HUNDRED MILLION YEN |
| AIR PURIFICATION | 0.033 HUNDRED MILLION YEN |

6,033,300,000 YEN

⇩ ADD 1,365,250,000 YEN AS VALUE OF TOURISM AND
FESTIVALS OF CULTURAL SERVICES

RESULT:
ANIMAL-DERIVED VALUE IS EVALUATED AS 410,930,375 YEN,
PLANT-DERIVED VALUE IS EVALUATED AS 41,236,300,000 YEN,
CULTURAL SERVICE IS EVALUATED AS 1,365,250,000 YEN
AND TOTAL IS 43,012,480,375 YEN

FIG. 43A

[ACCOMMODATION FACILITIES IN B CITY] GUEST HOUSE C, COMMUNITY HOUSE, AND PENSION
[TOURIST FACILITIES OR THE LIKE IN B CITY] LAKE FOUNTAINS, VALLEYS, FISHING IN MOUNTAIN STREAM, CANOES IN LAKES, GREEN FIELDS, HILLS IN PARKS, TRAVELER'S VILLAGE FOR YOUTH, AUTO-CAMPING, ROADSIDE STATIONS

| | | | CONTENT | PRICE | THE NUMBER OF PERSONS OR THE LIKE | VALUE (THOUSAND YEN) |
|---|---|---|---|---|---|---|
| ECOTOURISM | EVALUATE ON THE BASIS OF THE NUMBER OF TOURISTS AND THE NUMBER AND TRAVEL COST OF HOMECOMING VISITORS | ACCOMMODATION FEE AND THE NUMBER OF GUESTS OF EACH ACCOMMODATION FACILITY | THE NUMBER OF SKI RESORT VISITORS | 4,400 YEN | 26,553 PERSONS | 116,833 |
| | | | TRAVELER'S VILLAGE FOR YOUTH (CAMP SITE) | 4,400 YEN | 3,996 PERSONS | 17,582 |
| | | | SKI RESORT ACCOMMODATION FEE: COTTAGE (PER COTTAGE PER NIGHT) | 18,000 YEN | 3,996 PERSONS | 71,928 |
| | | | SKI RESORT ACCOMMODATION FEE: AUTO-CAMPING (PER TENT PER NIGHT) | 4,000 YEN | 2,222 PERSONS | 8,888 |
| | | | SKI RESORT ACCOMMODATION FEE: FREE TENT SITE (PER TENT PER NIGHT) | 3,000 YEN | 0 PERSON | 0 |
| | | | TRAVELER'S VILLAGE FOR YOUTH ·BUNGALOW (FOR EIGHT PERSON) 6,000 YEN ·BUNGALOW (FOR FOUR PERSON) 3,000 YEN ⇒(ABOUT 750 YEN PER PERSON) ·TENT SITE (PER TENT PER NIGHT) 1,000 YEN ·FREE SITE (PER TENT PER NIGHT) 2,000 YEN | 750 YEN | 1,175 PERSONS | 881 |
| | | | TRAVELER'S VILLAGE FOR YOUTH ·ADMISSION FEE (ADULT) 500 YEN ·ADMISSION FEE (CHILD) 400 YEN ⇒SINCE RATIO OF ADULT AND CHILD FEES IS UNKNOWN, AVERAGE 450 YEN | 450 YEN | 1,175 PERSONS | 529 |
| | | | JAPANESE INN: ACCOMMODATION FEE | 6,500 YEN | 568 PERSONS | 3,692 |
| | | | GUEST HOUSE: ACCOMMODATION FEE | 5,500 YEN | 374 PERSONS | 2,057 |
| | | | PENSION | 6,800 YEN | 0 PERSON | 0 |

FIG. 43B

| ECOTOURISM | EVALUATE ON THE BASIS OF THE NUMBER OF TOURISTS AND THE NUMBER AND TRAVEL COST OF HOMECOMING VISITORS | THE NUMBER OF TOURISTS | DAM PARK | 4,400 YEN | 95,982 PERSONS | 422,321 |
| | | | ROADSIDE STATION | 4,400 YEN | 110,004 PERSONS | 484,018 |
| | | | SKI RESORT | 4,400 YEN | 49,425 PERSONS | 217,470 |
| | | RECREATIONAL FISHING FEE | RECREATIONAL FISHING FEE (ANNUAL FEE) | 4,800 YEN | 114 TICKETS | 547 |
| | | | COST SPENT BY FISHING VISITOR PER DAY (AMOUNT OF CONSUMPTION OF DAY TRIPPER: 4,400 YEN REFERENCE VALUE) | 4,400 YEN/ PERSON, DAY | 114 PERSONS | 502 |
| | | | RECREATIONAL FISHING FEE (ONE DAY TICKET) | 1,510 YEN | 171 TICKETS | 258 |
| | | | COST SPENT BY FISHING VISITOR PER DAY (AMOUNT OF CONSUMPTION OF DAY TRIPPER: 4,400 YEN REFERENCE VALUE) | 4,400 YEN/ PERSON, DAY | 171 PERSONS | 752 |
| | | | | | TOTAL: ABOUT 1,348,250,000 YEN | |

## FIG. 44

| | | | CONTENT | PRICE OR THE LIKE | THE NUMBER OF PERSONS OR THE LIKE | VALUE (THOUSAND YEN) |
|---|---|---|---|---|---|---|
| TRADITIONAL EVENT AND EVENT (FESTIVAL) | EVALUATE BASED ON THE NUMBER OF PARTICIPANTS OF FESTIVALS AND EVENTS, THE NUMBER OF VOLUNTEERS, DONATIONS, OR THE LIKE | DONATIONS FOR EVENT | ADVERTISEMENT SUPPORT MONEY: START OF CLIMBING SEASON,FIRE FESTIVAL,WALKING GROUP (ARUKOUKAI),WALKING AROUND DAM | 465,000 YEN | 1 | 465 |
| | | NAME OF FESTIVAL AND EVENT IN TOWN | START OF CLIMBING SEASON IN SUMMER (LATE IN MAY) PARTICIPANT | 4,400 YEN | 36 PERSONS | 158 |
| | | | START OF CLIMBING SEASON IN SUMMER (LATE IN MAY) VOLUNTEER | 5,480 YEN | 0 PERSON | 0 |
| | | | JAPANESE BLACK BEAR FESTIVAL PARTICIPANT | 4,400 YEN | 1,600 PERSONS | 7,040 |
| | | | JAPANESE BLACK BEAR FESTIVAL VOLUNTEER | 5,480 YEN | 0 PERSON | 0 |
| | | | BLUE-AND-WHITE FLYCATCHER OBSERVATION FESTIVAL PARTICIPANT | 4,400 YEN | 470 PERSONS | 2,068 |
| | | | BLUE-AND-WHITE FLYCATCHER OBSERVATION FESTIVAL VOLUNTEER | 5,480 YEN | 130 PERSONS | 712 |
| | | | GRASSLAND WALKING (HELD LATE IN OCTOBER) PARTICIPANT | 4,400 YEN | 170 PERSONS | 748 |
| | | | GRASSLAND WALKING (HELD LATE IN OCTOBER) VOLUNTEER | 5,480 YEN | 0 PERSON | 0 |
| | | | | | | TOTAL: 11,190,000 YEN |

# FIG. 45

| | | | | | THE NUMBER OF PERSONS OR THE LIKE | VALUE (THOUSAND YEN) |
|---|---|---|---|---|---|---|
| EDUCATIONAL AND SCIENTIFIC OPPORTUNITIES | EVALUATE ON THE BASIS OF STAYING COST, INVESTIGATION COST, OR THE LIKE EXPECTED BY EDUCATIONAL AND SCIENTIFIC OPPORTUNITIES | RESEARCH | THE NUMBER OF RESEARCHERS INVOLVING IN RESEARCH SURVEY ON NATURE IN TOWN | NON | 0 PERSON | 0 |
| | | | THE NUMBER OF DAYS SPENT FOR RESEARCH (ANNUAL) | NON | 0 PERSON | 0 |
| | | RESEARCH CONFERENCE OR THE LIKE | RECORDS OF INTERNATIONAL CONFERENCE OR THE LIKE | GRASS SKI WORLD CHAMPIONSHIPS (SIX DAYS) | 4,400 YEN × 120 PERSONS | 528 |
| | | | | INTERNATIONAL CONTEST ON RICE TASTE EVALUATION (TWO DAYS) | 4,400 YEN × 1,200 PERSONS | 5,280 |
| | | | | | | TOTAL: 5,810,000 YEN |

# FIG. 46

<table>
<tr><td colspan="2" style="text-align:center">**INTERNATIONAL SEARCH REPORT**</td><td>International application No.</td></tr>
<tr><td colspan="2"></td><td>PCT/JP2017/039830</td></tr>
</table>

A.   CLASSIFICATION OF SUBJECT MATTER
Int. Cl. G06Q50/16(2012.01)i

According to International Patent Classification (IPC) or to both national classification and IPC

B.   FIELDS SEARCHED

Minimum documentation searched (classification system followed by classification symbols)
Int. Cl. G06Q50/16

Documentation searched other than minimum documentation to the extent that such documents are included in the fields searched
```
Published examined utility model applications of Japan      1922-1996
Published unexamined utility model applications of Japan    1971-2018
Registered utility model specifications of Japan            1996-2018
Published registered utility model applications of Japan    1994-2018
```

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2015-146112 A (FUJITSU LTD.) 13 August 2015, claims 1-4, paragraphs [0030]-[0034], [0039], [0042], [0043], [0095]-[0104], [0118]-[0125] (Family: none) | 1, 2, 9, 10 |
| Y | JP 2007-149104 A (NATIONAL ARBORETUM KOREA FOREST SERVICES) 14 June 2007, paragraphs [0059], [0060], [0069]-[0073] & US 2007/0124335 A1, paragraphs [0066]-[0068], [0076]-[0078] & EP 1791090 A2 & KR 10-2007-0056201 A & CN 1975727 A & RU 2006141815 A | 1, 2, 9, 10 |
| Y | JP 2014-26507 A (FUJITSU LTD.) 06 February 2014, paragraphs [0013], [0087]-[0089], [0091], [0105]-[0112] (Family: none) | 1, 2, 9, 10 |

☒  Further documents are listed in the continuation of Box C.   ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.01.2018 | 16.01.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2017/039830 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-182598 A (FUJITSU LTD.) 29 September 2014, paragraphs [0097]-[0107] (Family: none) | 1-10 |
| A | JP 2015-23842 A (FUJITSU LTD.) 05 February 2015, paragraphs [0065]-[0094] (Family: none) | 1-10 |
| A | 川口努, 環境, ICT を活用した生物多様性保全と生物多様性評価, 10 November 2011, vol. 62, no. 6, pp. 745-752, ISSN 0016-2515 (KAWAGUCHI, Tsutomu et al. Applying ICT in Biodiversity Surveys and Evaluations of Impact on Biodiversity. Fujitsu.) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015121880 A

- JP 2015146112 A

**Non-patent literature cited in the description**

- Note that Journal of Agricultural Policy Research. The Policy Research Institute, Ministry of Agriculture, Forestry and Fisheries, vol. 52